# EUROPEAN PATENT APPLICATION

(11) **EP 1 837 761 A1**
(43) Date of publication of application: **26.09.2007**
(21) Application number: 05799354.5
(22) Date of filing: 25.10.2005
(51) Int. Cl.: G06F 9/50

(54) **INFORMATION PROCESSING SYSTEM, INFORMATION PROCESSING DEVICE AND METHOD, RECORDING MEDIUM, AND PROGRAM**

(30) Priority: 29.11.2004 JP 2004344179
(71) Applicant: Sony Corporation, Minato-ku Tokyo (JP)
(72) Inventor: TANAKA, Shinichi, Shinagawa-ku, Tokyo 1410001; (JP); IHARA, Keigo, Shinagawa-ku, Tokyo 1410001; (JP); TAKAHASHI, Masayuki, Shinagawa-ku, Tokyo 1410001; (JP)
(74) Representative: Körber, Martin Hans
(86) International application number: PCT/JP2005/019576
(87) International publication number: WO 2006/057130

(57) **Abstract**

The present invention relates to an information processing system, an information processing apparatus, an information processing method, a recording medium, and a program. An information processing stand-in-only apparatus 12 having a sub-processor 62 arranged to execute a predetermined process causes the sub-processor 62 to perform function programs held in a command set ROM 53 in accordance with function execution commands sent by a master apparatus using software cells. An information processing apparatus 11 having a sub-processor 32 for performing general-purpose processing causes the sub-processor 32 to carry out function programs sent by the master apparatus using software cells. This invention applies among others to computer systems for effecting distributed processing.

## Description

### [Technical Field]

The present invention relates to an information processing system, an information processing apparatus, an information processing method, a recording medium, and a program. More particularly, the invention relates to an information processing system, an information processing apparatus, an information processing method, a recording medium, and a program for carrying out distributed processing.

### [Background Art]

In the past, the performance of information processing apparatuses such as computers was boosted illustratively by adding sub-processors to the apparatus in such a manner as to let the additional sub-processors take over part of the processing involved (See Patent Document 1, for example).

In such cases, only the information processing apparatus supplemented with sub-processors had its performance enhanced. Where it was desired to raise the throughput of a plurality of information processing apparatuses, each information processing apparatus had to be equipped with sub-processors. This led to increased operating costs.

To bypass that hurdle, research on so-called grid computing has intensified in recent years. This scheme is one way of enhancing the performance of a plurality of information processing apparatuses that are networked to carry out distributed processing.
[Patent Document 1]
Japanese Patent Laid-open No. 2002-297363

### [Disclosure of the Invention]

### [Problems to be Solved by the Invention]

In grid computing, the challenge is how to maximize utilization of the resources of networked information processing apparatuses implementing distributed processing.

The present invention has been made in view of the above circumstances and provides arrangements such as to maximize utilization of the resources of networked information processing apparatuses effecting distributed processing.

### [Means for Solving the Problems]

In carrying out the present invention and according to one embodiment thereof, there is provided an information processing system including either at least one first information processing apparatus or at least one second information processing apparatus and a third information processing apparatus, the first information processing apparatus having at least one first processor for executing a predetermined first process, the second information processing apparatus having at least one second processor for executing general-purpose processing, either the first or the second information processing apparatus being interconnected with the third information processing apparatus over a network in such a manner as to effect distributed processing; wherein the first information processing apparatus includes: first apparatus information notification means for notifying the third information processing apparatus of first apparatus information including information indicative of the first process executed by the first processor and information representative of the performance of the first information processing apparatus; and first processor control means for having the first processor execute the first process based on first process request information which is sent by the third information processing apparatus and which requests execution of the first process; wherein the second information processing apparatus includes: second apparatus information notification means for notifying the third information processing apparatus of second apparatus information including information indicating that the second information processing apparatus executes general-purpose processing and information indicative of the performance of the second information processing apparatus; and second processor control means for having the second processor execute a second process based on second process request information which is sent by the third information processing apparatus and which requests execution of the second process different from the first process; and wherein the third information processing apparatus includes: apparatus management information creation means for creating apparatus management information including either the first apparatus information or the second apparatus information that has been notified; requested party determination means for determining the first information processing apparatus as a party requested to execute the first process while determining the second information processing apparatus as a party requested to execute the second process in accordance with the apparatus management information; and process request means for requesting the first information processing apparatus to execute the first process by sending thereto the first process request information while requesting the second information processing apparatus to execute the second process by sending thereto the second process request information.

Preferably, the first information processing apparatus may further include storage means for storing function programs of which the execution is ordered by a predetermined execution command and which execute the first process; wherein the first apparatus information notification means may notify the third information processing apparatus of the first apparatus information including the execution command; wherein the process request means may request the first information processing apparatus to execute the first process by sending thereto the first process request information including the execution command; and wherein the first processor control means may cause the first processor to execute the first process by carrying out the function programs of which the execution is ordered by the execution command included in the first process request information.

Preferably, the process request means may send function programs for executing the second process to the second information processing apparatus and may request the second information processing apparatus to execute the second process by sending thereto the second process request information requesting execution of the function programs; and the second processor control means may cause the second processor to load the received function programs and to execute the second process by performing the function programs based on the second process request information.

Preferably, the first information processing apparatus may further include first progress status notification means for sending to the third information processing apparatus first progress status information notifying progress status of the first process being executed by the first processor; wherein the second information processing apparatus may further include second progress status notification means for sending to the third information processing apparatus second progress status information notifying progress status of the second process being executed by the second processor; and wherein the third information processing apparatus may further include progress status notification means for notifying a user of the progress status of either the first process or the second process based on either the first or the second progress status information that has been received.

According to another embodiment of the present invention, there is provided a first information processing method for use with an information processing system constituted by either at least one first information processing apparatus or at least one second information processing apparatus and by a third information processing apparatus, the first information processing apparatus having at least one first processor for executing a predetermined first process, the second information processing apparatus having at least one second processor for executing general-purpose processing, either the first or the second information processing apparatus being interconnected with the third information processing apparatus over a network in such a manner as to effect distributed processing, the first information processing method including the steps of: causing the first information processing apparatus to notify the third information processing apparatus of first apparatus information including information indicative of the first process executed by the first processor and information representative of the performance of the first information processing apparatus; causing the first information processing apparatus to have the first processor execute the first process based on first process request information which is sent by the third information processing apparatus and which requests execution of the first process; causing the second information processing apparatus to notify the third information processing apparatus of second apparatus information including information indicating that the second information processing apparatus executes general-purpose processing and information indicative of the performance of the second information processing apparatus; causing the second information processing apparatus to have the second processor execute a second process based on second process request information which is sent by the third information processing apparatus and which requests execution of the second process different from the first process; causing the third information processing apparatus to create apparatus management information including either the first apparatus information or the second apparatus information that has been notified; causing the third information processing apparatus to determine the first information processing apparatus as a party requested to execute the first process and to determine the second information processing apparatus as a party requested to execute the second process; and causing the third information processing apparatus to request the first information processing apparatus to execute the first process by sending thereto the first process request information and to request the second information processing apparatus to execute the second process by sending thereto the second process request information.

According to a further embodiment of the present invention, there is provided a first information processing apparatus connected over a network to either at least one first information processing terminal or at least one second information processing terminal, the first information processing terminal having at least one first processor for executing a predetermined first process, the second information processing terminal having at least one second processor for executing general-purpose processing, the first information processing apparatus including: apparatus management information creation means for creating apparatus management information including first apparatus information and second apparatus information, the first apparatus information including information which is sent by the first information processing terminal and which indicates the first process executed by the first processor and information representative of the performance of the first information processing terminal, the second apparatus information including information which is sent by the second information processing terminal and which indicates that the second information processing terminal performs general-purpose processing and information representative of the performance of the second information processing terminal; requested party determination means for determining the first information processing terminal as a party requested to execute the first process while determining the second information processing terminal as a party requested to execute a second process different from the first process in accordance with the apparatus management information; and process request means for requesting the first information processing terminal to execute the first process by sending thereto first process request information while requesting the second information processing terminal to execute the second process by sending thereto second process request information.

Preferably, the first apparatus information may include an execution command to order execution of function programs for performing the first process; and the process request means may request the first information processing terminal to execute the first process by sending thereto the first process request information including the execution command.

Preferably, the process request means may send function programs for performing the second process to the second information processing terminal and may request the second information processing terminal to execute the second process by sending thereto the second process request information requesting execution of the function programs.

Preferably, the first information processing apparatus may further include progress status notification means for notifying a user of progress status of either the first or the second process either in accordance with first progress status information which is sent by the first information processing terminal and which notifies the progress status of the first process being executed by the first processor or in keeping with second progress status information which is sent by the second information processing terminal and which notifies the progress status of the second process being executed by the second processor.

According to an even further embodiment of the present invention, there is provided a second information processing method for use with an information processing apparatus connected over a network to either at least one first information processing terminal or at least one second information processing terminal, the first information processing terminal having at least one first processor for executing a predetermined first process, the second information processing terminal having at least one second processor for executing general-purpose processing, the second information processing method including the steps of: creating apparatus management information including first apparatus information and second apparatus information, the first apparatus information including information which is sent by the first information processing terminal and which indicates the first process executed by the first processor and information representative of the performance of the first information processing terminal, the second apparatus information including information which is sent by the second information processing terminal and which indicates that the second information processing terminal performs general-purpose processing and information representative of the performance of the second information processing terminal; determining the first information processing terminal as a party requested to execute the first process while determining the second information processing terminal as a party requested to execute a second process different from the first process in accordance with the apparatus management information; and requesting the first information processing terminal to execute the first process by sending thereto first process request information while requesting the second information processing terminal to execute the second process by sending thereto second process request information.

According to a still further embodiment of the present invention, there is provided a first recording medium having a program recorded thereon in a manner readable by a computer for information processing of an information processing apparatus connected over a network to either at least one first information processing terminal or at least one second information processing terminal, the first information processing terminal having at least one first processor for executing a predetermined first process, the second information processing terminal having at least one second processor for executing general-purpose processing, the program including the steps of: creating apparatus management information including first apparatus information and second apparatus information, the first apparatus information including information which is sent by the first information processing terminal and which indicates the first process executed by the first processor and information representative of the performance of the first information processing terminal, the second apparatus information including information which is sent by the second information processing terminal and which indicates that the second information processing terminal performs general-purpose processing and information representative of the performance of the second information processing terminal; determining the first information processing terminal as a party requested to execute the first process while determining the second information processing terminal as a party requested to execute a second process different from the first process in accordance with the apparatus management information; and requesting the first information processing terminal to execute the first process by sending thereto first process request information while requesting the second information processing terminal to execute the second process by sending thereto second process request information.

According to a yet further embodiment of the present invention, there is provided a first program for causing a computer of an information processing apparatus to carry out information processing, the information processing apparatus being connected over a network to either at least one first information processing terminal or at least one second information processing terminal, the first information processing terminal having at least one first processor for executing a predetermined first process, the second information processing terminal having at least one second processor for executing general-purpose processing, the first program including the steps of: creating apparatus management information including first apparatus information and second apparatus information, the first apparatus information including information which is sent by the first information processing terminal and which indicates the first process executed by the first processor and information representative of the performance of the first information processing terminal, the second apparatus information including information which is sent by the second information processing terminal and which indicates that the second information processing terminal performs general-purpose processing and information representative of the performance of the second information processing terminal; determining the first information processing terminal as a party requested to execute the first process while determining the second information processing terminal as a party requested to execute a second process different from the first process in accordance with the apparatus management information; and requesting the first information processing terminal to execute the first process by sending thereto first process request information while requesting the second information processing terminal to execute the second process by sending thereto second process request information.

According to another embodiment of the present invention, there is provided a second information processing apparatus which has at least one first processor for executing a predetermined first process and which is interconnected over a network with a first and a second information processing terminal, the first information processing terminal having at least one second processor for executing general-purpose processing, the second information processing terminal requesting the first information processing terminal to execute a second process different from the first process, the second information processing apparatus including: apparatus information notification means for notifying the second information processing terminal of apparatus information including information indicative of the first process executed by the first processor and information representative of the performance of the information processing apparatus; and processor control means for causing the first processor to execute the first process based on process request information which is sent by the second information processing terminal and which requests execution of the first process.

Preferably, the second information processing apparatus may further include storage means for storing function programs of which the execution is ordered by a predetermined execution command and which execute the first process; wherein the apparatus information notification means may notify the second information processing terminal of the apparatus information including the execution command; and wherein the processor control means may cause the first processor to execute the first process by carrying out the function programs of which the execution is ordered by the execution command included in the process request information.

Preferably, the second information processing apparatus may further include progress status notification means for sending to the second information processing terminal progress status information notifying progress status of the first process being executed by the first processor.

According to a further embodiment of the present invention, there is provided a third information processing method for use with an information processing apparatus which has at least one first processor for executing a predetermined first process and which is interconnected over a network with a first and a second information processing terminal, the first information processing terminal having at least one second processor for executing general-purpose processing, the second information processing terminal requesting the first information processing terminal to execute a second process different from the first process, the third information processing method including the steps of: notifying the second information processing terminal of apparatus information including information indicative of the first process executed by the first processor and information representative of the performance of the information processing apparatus; and causing the first processor to execute the first process based on process request information which is sent by the second information processing terminal and which requests execution of the first process.

According to an even further embodiment of the present invention, there is provided a second recording medium having a program recorded thereon in a manner readable by a computer for information processing of an information processing apparatus which has at least one first processor for executing a predetermined first process and which is interconnected over a network with a first and a second information processing terminal, the first information processing terminal having at least one second processor for executing general-purpose processing, the second information processing terminal requesting the first information processing terminal to execute a second process different from the first process, the program including the steps of: notifying the second information processing terminal of apparatus information including information indicative of the first process executed by the first processor and information representative of the performance of the information processing apparatus; and causing the first processor to execute the first process based on process request information which is sent by the second information processing terminal and which requests execution of the first process.

According to a still further embodiment of the present invention, there is provided a second program for causing a computer of an information processing apparatus to carry out information processing, the information processing apparatus having at least one first processor for executing a predetermined first process and interconnected over a network with a first and a second information processing terminal, the first information processing terminal having at least one second processor for executing general-purpose processing, the second information processing terminal requesting the first information processing terminal to execute a second process different from the first process, the second program including the steps of: notifying the second information processing terminal of apparatus information including information indicative of the first process executed by the first processor and information representative of the performance of the information processing apparatus; and causing the first processor to execute the first process based on process request information which is sent by the second information processing terminal and which requests execution of the first process.

According to a yet further embodiment of the present invention, there is provided a third information processing apparatus which has at least one first processor for executing general-purpose processing and which is interconnected over a network with a first and a second information processing terminal, the first information processing terminal having at least one second processor for executing a predetermined first process, the second information processing terminal requesting the first information processing terminal to execute the first process, the third information processing apparatus including: apparatus information notification means for notifying the second information processing terminal of apparatus information including information indicating that the information processing apparatus executes general-purpose processing and information representative of the performance of the third information processing apparatus; and processor control means for causing the first processor to execute a second process different from the first process in accordance with process request information which is sent by the second information processing terminal and which requests execution of the second process.

Preferably, the processor control means may cause the first processor to load function programs which are sent by the second information processing terminal and which execute the second process, and to execute the second process by carrying out the function programs based on the process request information requesting execution of the function programs.

Preferably, the third information processing apparatus may further include progress status notification means for sending to the information processing terminal progress status information notifying progress status of the first process being executed by the first processor.

According to another embodiment of the present invention, there is provided a fourth information processing method for use with an information processing apparatus which has at least one first processor for executing general-purpose processing and which is interconnected over a network with a first and a second information processing terminal, the first information processing terminal having at least one second processor for executing a predetermined first process, the second information processing terminal requesting the first information processing terminal to execute the first process, the fourth information processing method including the steps of: notifying the second information processing terminal of apparatus information including information indicating that the information processing apparatus executes general-purpose processing and information representative of the performance of the information processing apparatus; and causing the first processor to execute a second process different from the first process in accordance with process request information which is sent by the second information processing terminal and which requests execution of the second process.

According to a further embodiment of the present invention, there is provided a third recording medium having a program recorded thereon in a manner readable by a computer for information processing of an information processing apparatus which has at least one first processor for executing general-purpose processing and which is interconnected over a network with a first and a second information processing terminal, the first information processing terminal having at least one second processor for executing a predetermined first process, the second information processing terminal requesting the first information processing terminal to execute the first process, the program including the steps of: notifying the second information processing terminal of apparatus information including information indicating that the information processing apparatus executes general-purpose processing and information representative of the performance of the information processing apparatus; and causing the first processor to execute a second process different from the first process in accordance with process request information which is sent by the second information processing terminal and which requests execution of the second process.

According to an even further embodiment of the present invention, there is provided a third program for causing a computer of an information processing apparatus to carry out information processing, the information processing apparatus having at least one first processor for executing general-purpose processing and interconnected over a network with a first and a second information processing terminal, the first information processing terminal having at least one second processor for executing a predetermined first process, the second information processing terminal requesting the first information processing terminal to execute the first process, the third program including the steps of: notifying the second information processing terminal of apparatus information including information indicating that the information processing apparatus executes general-purpose processing and information representative of the performance of the information processing apparatus; and causing the first processor to execute a second process different from the first process in accordance with process request information which is sent by the second information processing terminal and which requests execution of the second process different from the first process.

Where the information processing system and the first information processing method are practiced according to the present invention, the information processing system is constituted by either at least one first information processing apparatus or at least one second information processing apparatus and by a third information processing apparatus, the first information processing apparatus having at least one first processor for executing a predetermined first process, the second information processing apparatus having at least one second processor for executing general-purpose processing, either the first or the second information processing apparatus being interconnected with the third information processing apparatus over a network in such a manner as to effect distributed processing. In operation, the first information processing apparatus notifies the third information processing apparatus of first apparatus information including information indicative of the first process executed by the first processor and information representative of the performance of the first information processing apparatus. The first information processing apparatus also has the first processor execute the first process based on first process request information which is sent by the third information processing apparatus and which requests execution of the first process. The second information processing apparatus notifies the third information processing apparatus of second apparatus information including information indicating that the second information processing apparatus executes general-purpose processing and information indicative of the performance of the second information processing apparatus. The second information processing apparatus also has the second processor execute a second process based on second process request information which is sent by the third information processing apparatus and which requests execution of the second process different from the first process. The third information processing apparatus creates apparatus management information including either the first apparatus information or the second apparatus information that has been notified. The third information processing apparatus also determines the first information processing apparatus as a party requested to execute the first process and determines the second information processing apparatus as a party requested to execute the second process. The third information processing apparatus further requests the first information processing apparatus to execute the first process by sending thereto the first process request information and requests the second information processing apparatus to execute the second process by sending thereto the second process request information.

Where the first information processing apparatus, the second information processing method, the first recording medium, and the first recording medium are practiced according to the present invention, the first information processing apparatus is connected over a network to either at least one first information processing terminal or at least one second information processing terminal, the first information processing terminal having at least one first processor for executing a predetermined first process, the second information processing terminal having at least one second processor for executing general-purpose processing. In operation, apparatus management information including first apparatus information and second apparatus information is created, the first apparatus information including information which is sent by the first information processing terminal and which indicates the first process executed by the first processor and information representative of the performance of the first information processing terminal, the second apparatus information including information which is sent by the second information processing terminal and which indicates that the second information processing terminal performs general-purpose processing and information representative of the performance of the second information processing terminal. The first information processing terminal is determined as a party requested to execute the first process while the second information processing terminal is determined as a party requested to execute a second process different from the first process in accordance with the apparatus management information. The first information processing terminal is requested to execute the first process by sending thereto first process request information while the second information processing terminal is requested to execute the second process by sending thereto second process request information.

Where the second information processing apparatus, the third information processing method, the second recording medium, and the second recording medium are practiced according to the present invention, the second information processing apparatus has at least one first processor for executing a predetermined first process and is interconnected over a network with a first and a second information processing terminal, the first information processing terminal having at least one second processor for executing general-purpose processing, the second information processing terminal requesting the first information processing terminal to execute a second process different from the first process. In operation, the second information processing terminal is notified of apparatus information including information indicative of the first process executed by the first processor and information representative of the performance of the second information processing apparatus. The first processor is caused to execute the first process based on process request information which is sent by the second information processing terminal and which requests execution of the first process.

Where the third information processing apparatus, the fourth information processing method, the third recording medium, and the third recording medium are practiced according to the present invention, the third information processing apparatus has at least one first processor for executing general-purpose processing and is interconnected over a network with a first and a second information processing terminal, the first information processing terminal having at least one second processor for executing a predetermined first process, the second information processing terminal requesting the first information processing terminal to execute the first process. In operation, the second information processing terminal is notified of apparatus information including information indicating that the third information processing apparatus executes general-purpose processing and information representative of the performance of the third information processing apparatus. The first processor is caused to execute a second process different from the first process in accordance with process request information which is sent by the second information processing terminal and which requests execution of the second process.

### [Effect of the Invention]

According to the present invention, distributed processing is implemented by a plurality of information processing apparatuses interconnected via a network. In a distributed processing setup, processes are carried out in a manner adapted to the performance of individual information processing apparatuses, whereby the throughput of the configured apparatuses is enhanced.

### [Brief Description of the Drawings]

[Fig. 1] Fig. 1 is a block diagram showing an information processing system as an embodiment of the present invention.
[Fig. 2] Fig. 2 is a schematic view showing a typical structure of a software cell.
[Fig. 3] Fig. 3 is a schematic view showing typical programs executed by the main CPU of an information processing apparatus in Fig. 1.
[Fig. 4] Fig. 4 is a block diagram showing typical functions implemented when control programs are executed by the main CPU of the information processing apparatus in Fig. 1.
[Fig. 5] Fig. 5 is a schematic view showing typical programs executed by a control CPU of an information processing stand-in-only apparatus in Fig. 1.
[Fig. 6] Fig. 6 is a block diagram showing typical functions implemented when control programs are executed by the control CPU of the information processing stand-in-only apparatus in Fig. 1.
[Fig. 7] Fig. 7 is a flowchart of steps constituting a network connecting process of the information processing apparatus in Fig. 1.
[Fig. 8] Fig. 8 is a schematic view showing typical apparatus information sent and received by use of a software cell.
[Fig. 9] Fig. 9 is a schematic view showing a typical structure of a command list as part of the apparatus information in Fig. 8.
[Fig. 10] Fig. 10 is a flowchart of steps constituting a network connecting process of the information processing stand-in-only apparatus in Fig. 1.
[Fig. 11] Fig. 11 is a flowchart of steps constituting a network connection detecting process of the information processing apparatus in Fig. 1.
[Fig. 12] Fig. 12 is a flowchart of steps constituting a network connection detecting process of the information processing stand-in-only apparatus in Fig. 1.
[Fig. 13] Fig. 13 is a flowchart of steps constituting a sequencing process requesting process of a process requesting party.
[Fig. 14] Fig. 14 is a flowchart of steps constituting a sequencing process executing process of a master apparatus.
[Fig. 15] Fig. 15 is a flowchart of other steps constituting the sequencing process executing process of the master apparatus.
[Fig. 16] Fig. 16 is a flowchart of steps constituting a function execution command executing process of the information processing stand-in-only apparatus in Fig. 1. [Fig. 17] Fig. 17 is a flowchart of steps constituting a function program executing process of the information processing apparatus in Fig. 1.
[Fig. 18] Fig. 18 is a block diagram showing a variation of the information processing system in Fig. 1.
[Fig. 19] Fig. 19 is a schematic flow diagram showing the process flow of an AV data reproduction function executed by the information processing system in Fig. 18.
[Fig. 20] Fig. 20 is a schematic view showing distribution of the processes making up the AV data reproduction function and executed by the information processing system in Fig. 18.
[Fig. 21] Fig. 21 is a schematic view showing part of a typical apparatus information table.
[Fig. 22] Fig. 22 is a flowchart of steps constituting an AV data reproducing process of an AV data reproducing apparatus in Fig. 18.
[Fig. 23] Fig. 23 is a schematic view showing typical progress status of processing.
[Fig. 24] Fig. 24 is a flowchart of steps constituting a sequencing process executing process of a master apparatus in Fig. 18.
[Fig. 25] Fig. 25 is a flowchart of other steps constituting the sequencing process executing process of the master apparatus in Fig. 18.
[Fig. 26] Fig. 26 is a flowchart of other steps constituting the sequencing process executing process of the master apparatus in Fig. 18.
[Fig. 27] Fig. 27 is a flowchart of other steps constituting the sequencing process executing process of the master apparatus in Fig. 18.
[Fig. 28] Fig. 28 is a flowchart of steps constituting a function execution command executing process of a slave apparatus A in Fig. 18.
[Fig. 29] Fig. 29 is a flowchart of other steps constituting the function execution command executing process of the slave apparatus A in Fig. 18.
[Fig. 30] Fig. 30 is a flowchart of steps constituting a function execution command executing process of a slave apparatus B in Fig. 18.
[Fig. 31] Fig. 31 is a flowchart of other steps constituting the function execution command executing process of the slave apparatus B in Fig. 18.
[Fig. 32] Fig. 32 is a flowchart of steps constituting a function program loading process of a slave apparatus C or D in Fig. 18.
[Fig. 33] Fig. 33 is a flowchart of steps constituting a function program executing process of the slave apparatus C in Fig. 18.
[Fig. 34] Fig. 34 is a flowchart of other steps constituting the function program executing process of the slave apparatus C in Fig. 18.
[Fig. 35] Fig. 35 is a flowchart of steps constituting a function program executing process of the slave apparatus D in Fig. 18.
[Fig. 36] Fig. 36 is a flowchart of other steps constituting the function program executing process of the slave apparatus D in Fig. 18.

### [Description of Reference Numerals]

1 ··· information processing system, 11 ... for information processing apparatus, 12 ... information processing stand-in-only apparatus, 13 ... network, 21 ... information processing controller, 22 ··· main memory, 23 ... external recording device, 31 ... main CPU, 32 ... sub-processor, 41 ... local storage, 42 ... local storage 51 ... information processing controller, 52 ... main memory, 53 ... command set ROM, 61 ... control CPU, 62 ··· sub-processor, 71 ... local storage, 72 ... local storage, 111 ... MS manager, 112 ··· capability exchanging program, 113 ... sub-processor manager, 114 ... distributed processing manager, 131 ... network input/output driver, 151 ... information exchange section, 152 ··· MS management section, 153 ... apparatus information management section, 161 ··· apparatus information table management section, 171 ··· sub-processor control section, 172 ··· progress status notification section, 181 ··· sequencing process management section, 182 ··· function program determination section, 183 ··· distributed processing apparatus determination section, 184 ... distributed processing management section, 185 ... sequencing process request section, 186 ... progress status notification section, 211 ... slave manager, 212 ... sub-processor manager, 231 ··· network input/output driver, 251 ··· information exchange section, 252 ... apparatus information management section, 271 ... sub-processor control section, 272 ... progress status notification section

### [Best Mode for Carrying out the Invention]

Preferred embodiments of the present invention will now be described with reference to the accompanying drawings.

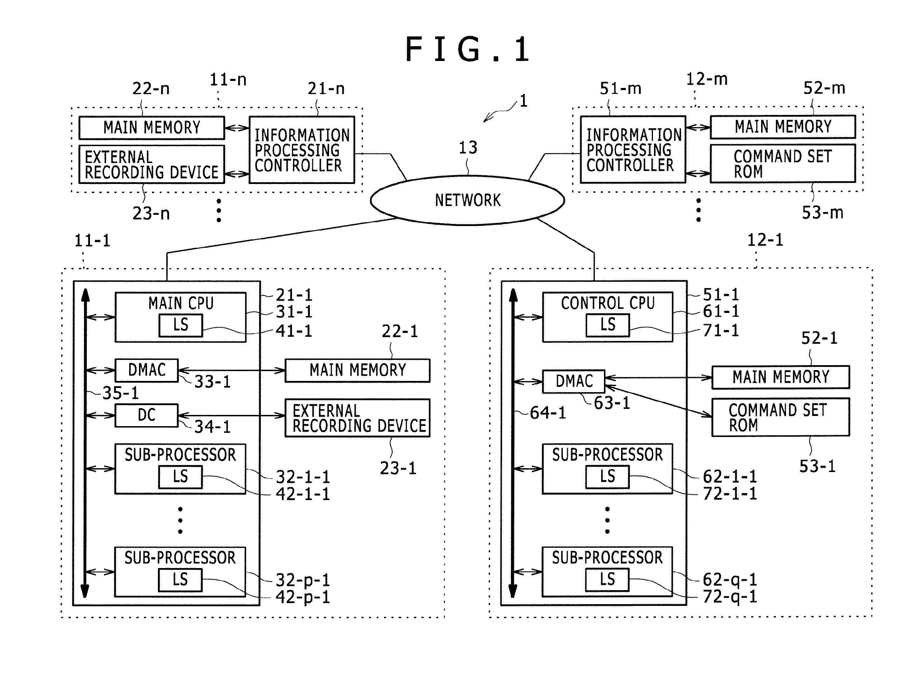

Fig. 1 is a block diagram showing an information processing system 1 as an embodiment of the invention capable of effecting distributed processing. The information processing system 1 illustratively has information processing apparatuses 11-1 through 11-n (as many as "n" units) and information processing stand-in-only apparatus 12-1 through 12-m (m units) interconnected over a network 13 such as a home network, a LAN (Local Area Network), a WAN (Wide Area Network), or the Internet. In the ensuing description, the information processing apparatuses 11-1 through 11-n will be simply referred to as the information processing apparatus 11 if there is no need to distinguish them individually. Likewise, the information processing stand-in-only apparatuses 12-1 through 12-m will be simply referred to as the information processing stand-in-only apparatus 12 if they do not need to be distinguished individually.

The information processing system 1 performs distributed processing using the information processing apparatus 11 and information processing stand-in-only apparatus 12 connected to the network 13. In so doing, the information processing system 1 brings about a single complete function (called an application function) such as that of the video recorder, TV set, or telephone.

The information processing apparatus 11 provides a particular application function or performs the processes of which the execution is requested by another information processing apparatus 11. When providing its specific application function, the information processing apparatus 11 may find that a certain process cannot be executed by itself or that its own processing load is inordinately high. In such cases, the information processing apparatus 11 requests another information processing apparatus 11 or the information processing stand-in-only apparatus 12 to carry out the process in question or to take over some of the processing load as needed.

The information processing stand-in-only apparatus 12 is an apparatus designed to execute predetermined processes constituting part of a particular application function. Typical processes taken over by the information processing stand-in-only apparatus 12 include data decoding and image quality enhancement. Because it is dedicated to accomplishing particular tasks, the information processing stand-in-only apparatus 12 may have smaller hardware and software structures than the information processing apparatus 11. As such, the information processing stand-in-only apparatus 12 can boost the performance of specific processes at significantly reduced costs. The information processing stand-in-only apparatus 12 can also be made small and lightweight when implemented.

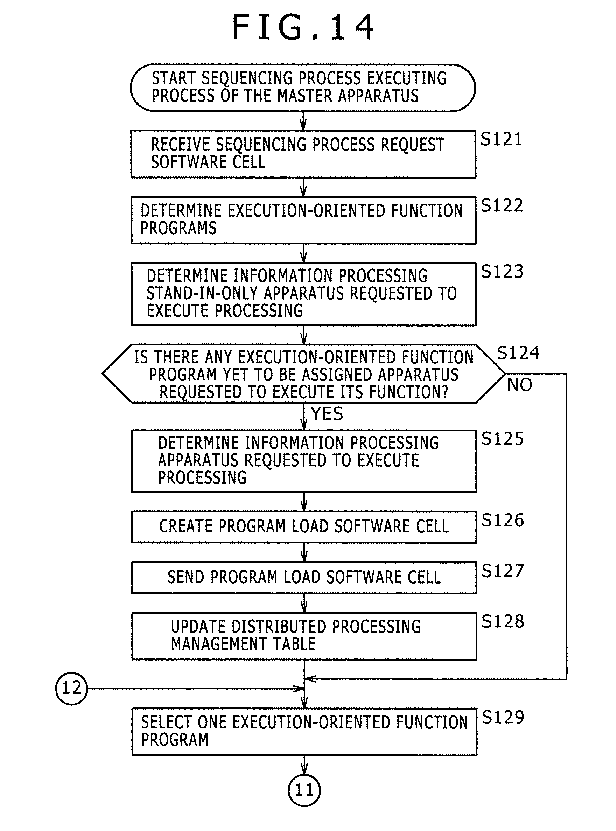

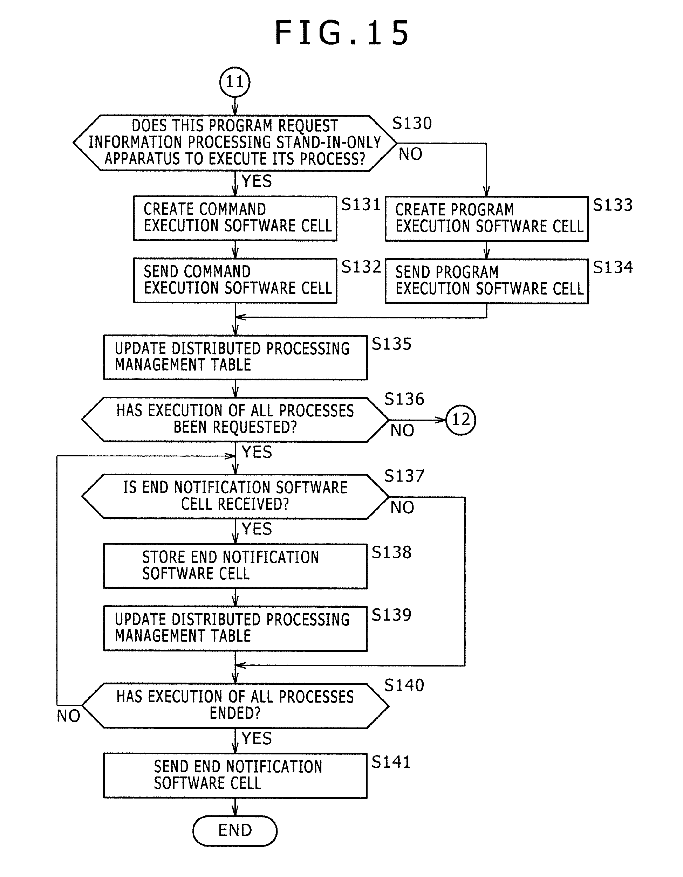

When the information processing system 1 performs distributed processing, at least one information processing apparatus 11 acts as a master apparatus and any other information processing apparatus 11 and the information processing stand-in-only apparatus 12 serve as slave apparatuses. The information processing stand-in-only apparatus 12 never acts as a master apparatus. As will be discussed later in reference to Figs. 14 and 15, the master apparatus performs overall management of distributed processing such as selection of the slave apparatus requested to take over part of the distributed processing and scheduling of the slave apparatuses in carrying out their processes.

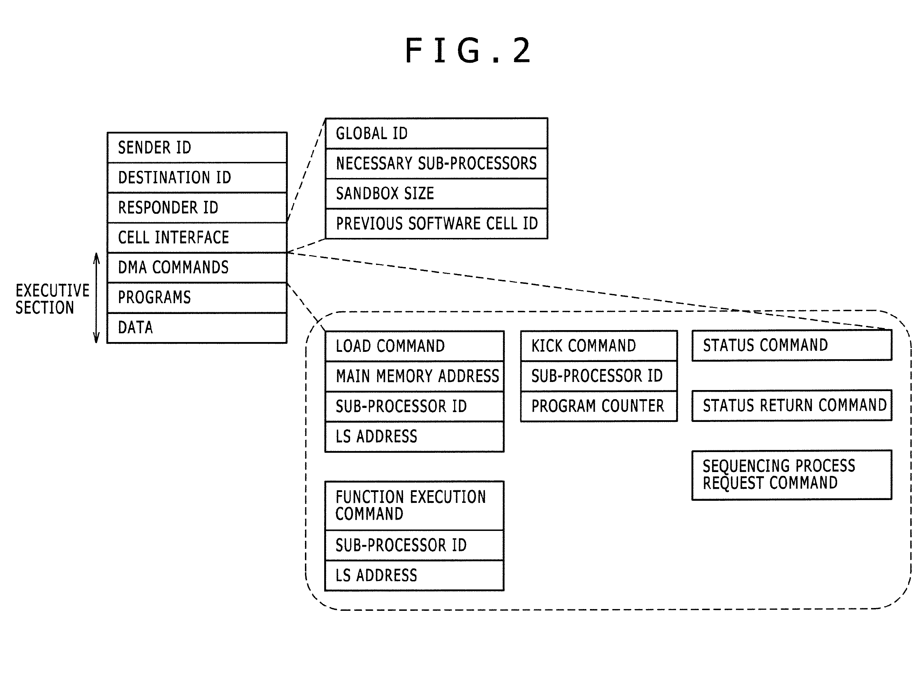

In the information processing system 1, programs, data and commands are exchanged between the information processing apparatus 11 and the information processing stand-in-only apparatus 12 over the network through the use of software cells that will be discussed later with reference to Fig. 2.

The information processing apparatus 11-1 is structured to include at least one information processing controller 21-1, a main memory 22-1, and an external recording device 23-1.

The information processing controller 21-1 controls the information processing apparatus 11-1 as a whole by executing various programs held in the main memory 22-1. The information processing controller 21-1 sends diverse items of information, data, and programs to another information processing apparatus 11 or to the information processing stand-in-only apparatus 12 over the network 13 by use of software cells. The information processing controller 21-1 also receives via the network 13 the software cells sent by another information processing apparatus 11 or by the information processing stand-in-only apparatus 12.

The information processing controller 21-1 performs the process requested by the user operating an operation device, not shown, or carries out the process requested by software cells sent by another information processing apparatus 11. As needed, the information processing controller 21-1 requests another information processing apparatus 11 or the information processing stand-in-only apparatus 12 to execute a particular process by use of software cells.

The information processing controller 21-1 has a main CPU (Central Processing Unit) 31-1, sub-processors 32-1-1 through 32-p-1 (as many as "p" units), a DMAC (Direct Memory Access Controller) 33-1, and a DC (Disk Controller) 34-1. The main CPU 31-1, sub-processors 32-1-1 through 32-p-1, DMAC 33-1 and DC 34-1 are interconnected by a bus 35-1. In the ensuing description, the sub-processors 32-1-1 through 32-p-1 will be simply referred to as the sub-processor 32-1 if there is no need distinguish them individually.

The main CPU 31-1 has a local storage 41-1. The data and programs loaded from the main memory 22-1 are stored temporarily in the local storage 41-1. In operation, the main CPU 31-1 reads data and programs from the local storage 41-1 and executes diverse processes based on the retrieved data and programs.

The main CPU 31-1 sends diverse items of information, data, and programs to another information processing apparatus 11 or to the information processing stand-in-only apparatus 12 over the network 13 by use of software cells. The main CPU 31-1 also receives via the network 13 the software cells sent by another information processing apparatus 11 or by the information processing stand-in-only apparatus 12. The main CPU 31-1 performs the process requested by the user operating an operation device, not shown, or carries out the process requested by software cells sent by another information processing apparatus 11. As needed, the main CPU 31-1 requests another information processing apparatus 11 or the information processing stand-in-only apparatus 12 to execute a particular process by use of software cells.

The main CPU 31-1 may obtain a desired result by having each of the multiple sub-processors 32-1 carry out an independent program constituting a logically unified function (logical thread). That is, the main CPU 31-1 performs scheduling of the programs executed by the sub-processors 32-1 and carries out overall management of the information processing controller 21-1 (information processing apparatus 11-1).

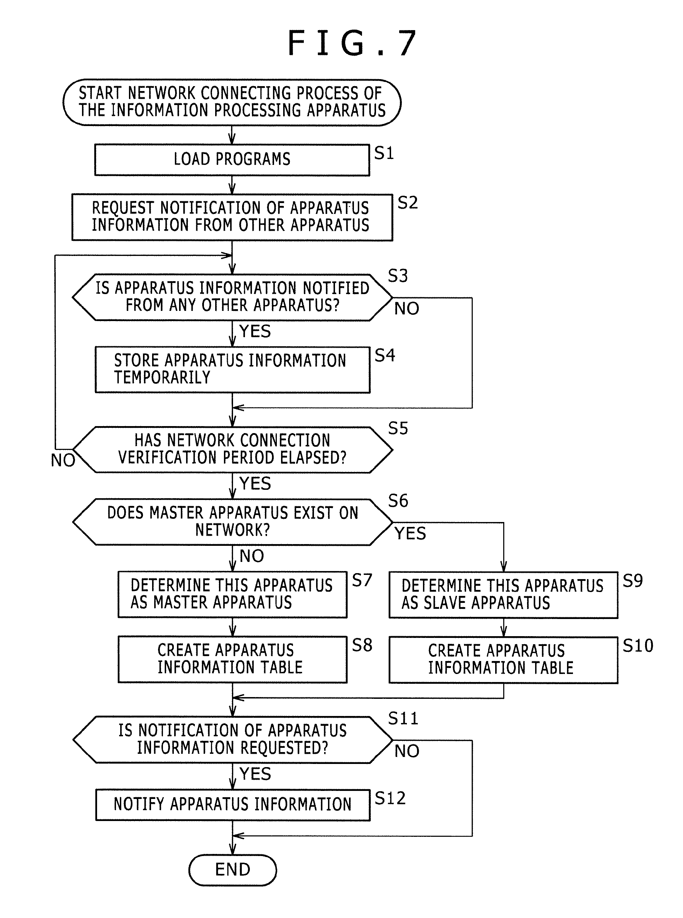

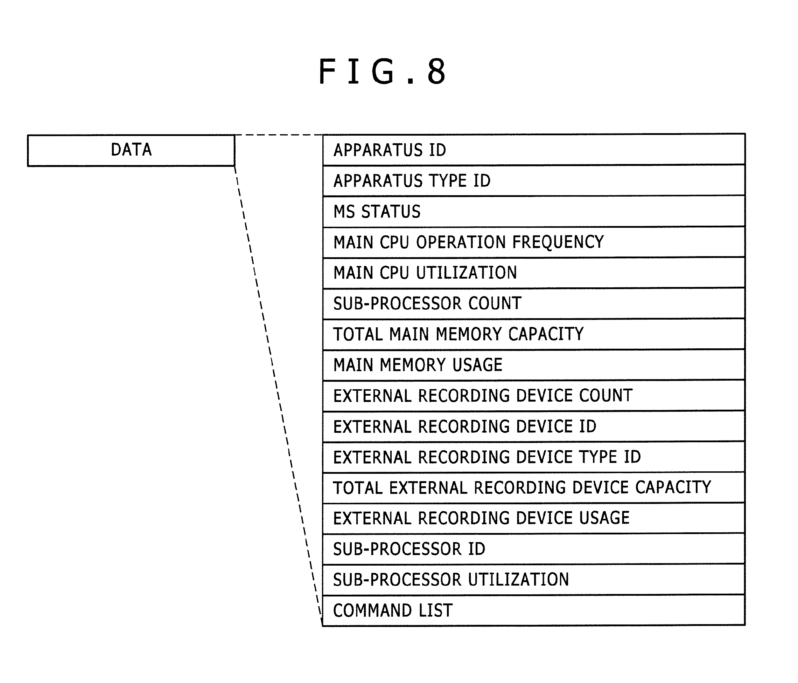

As will be described later in reference to Figs. 7 and 8, the main CPU 31-1 acquires apparatus information from another information processing apparatus 11 and from the information processing stand-in-only apparatus 12 connected to the network 13, the apparatus information being indicative of the performance and operation status of the apparatuses configured. From the apparatus information thus acquired, the main CPU 31-1 creates an apparatus information table for managing the information processing apparatuses 11 including the master apparatus and the information processing stand-in-only apparatus 12, all connected to the network 13. The main CPU 31-1 stores the apparatus information table in the main memory 22-1 and updates the table as needed. Where necessary, the main CPU 31-1 notifies its own apparatus information to another information processing apparatus 11 connected to the network 13 through the use of software cells.

In the case of the information processing apparatus 11 acting as the master apparatus, the main CPU 31-1 creates a distributed processing management table for managing the status of distributed processing performed by the information processing system 1, as will be discussed later in reference to Figs. 14 and 15. The distributed processing management table is stored in the main memory 22-1 and updated as needed.

The main CPU 31-1 may be arranged to execute programs other than management-oriented programs. In such a case, the main CPU 31-1 serves as a sub-processor.

Under control of the main CPU 31-1, the sub-processors 32-1 carry out programs parallelly and individually for data processing. If necessary, the program executed by the main CPU 31-1 may be arranged to operate in conjunction with the programs performed by the sub-processors 32-1.

The sub-processors 32-1-1 through 32-p-1 have local storages 42-1-1 through 42-p-1 respectively. The sub-processors 32-1-1 through 32-p-1 temporarily store data and programs into the local storages 42-1-1 through 42-p-1 respectively. The sub-processors 32-1-1 through 32-p-1 read data and programs from the local storages 42-1-1 through 42-p-1 respectively and carry out divers processes based on the data and programs that have been retrieved.

In the ensuing description, the local storages 42-1-1 through 42-p-1 will be simply referred to as the local storage 42-1 if there is no need to distinguish them individually.

The DMAC 33-1 manages access to the main memory 22-1 by the main CPU 31-1 and sub-processor 32-1. The main CPU 31-1 or sub-processor 32-1 reads programs or data from the main memory 22-1 by having the DMAC 33-1 execute a read command, and stores programs or data into the main memory 22-1 by getting the DMAC 33-1 to execute a write command.

In the ensuing description, the main CPU 31-1 or sub-processor 32-1 will be simply described as reading programs or data from the main memory 22-1 instead of having the DMAC 33-1 execute the read command to do so. Likewise, the main CPU 31-1 or sub-processor 32-1 will be simply described as writing programs or data to the main memory 22-1 instead of getting the DMAC 33-1 to execute the write command to do so. The processing of the DMAC 33-1 will thus be omitted from the description where appropriate.

The DC 34-1 manages access to the external recording device 23-1 by the main CPU 31-1 and sub-processor 32-1. The main CPU 31-1 or sub-processor 32-1 reads programs and data from the external recording device 23-1 by having the DC 34-1 execute a read command, and records programs and data to the external storage device 23-1 by getting the DC 34-1 to execute a write command.

In the ensuing description, the main CPU 31-1 or sub-processor 32-1 will be simply described as reading programs or data from the external recording device 23-1 instead of having the DC 34-1 execute the read command to do so. Likewise, the main CPU 31-1 or sub-processor 32-1 will be simply described as writing programs or data to the external recording device 23-1 instead of getting the DC 34-1 to execute the write command to do so. The processing of the DC 34-1 will thus be omitted from the description where appropriate.

Although the information processing apparatus 11-1 was described as having only one information processing controller 21-1, this is not limitative of the invention. Alternatively, the information processing apparatus 11-1 may have a plurality of information processing controllers 21-1.

The main memory 22-1 is illustratively composed of a RAM. The main memory 22-1 temporarily accommodates various programs and data that may be executed or operated on by the main CPU 31-1 and sub-processor 32-1.

The external recording device 23-1 is constituted illustratively by removable media such as magnetic disks (including flexible disks), optical disks (CD-ROM (Compact Disc-Read Only Memory, DVD (Digital Versatile Disc) and magneto-optical disks (MD or Mini-Disc; registered trademark)) or a semiconductor memory; by hard disks, by an SRAM (Static Random Access Memory), or by a ROM (Read Only Memory). As such, the external recording device 23-1 holds various programs and data executed or operated on by the main CPU 31-1 and sub-processor 32-1. The external recording device 23-1 also holds data supplied from the information processing controller 21-1. A plurality of external recording devices 23-1 may be attached to the information processing apparatus 11-1.

The other information processing apparatuses 11 have the same structure as the information processing apparatus 11-1 and thus will not be described further. However, these other information processing apparatuses 11 are not limited to the above-described apparatus structure. Functions may be added to or removed from the other information processing apparatuses 11, and the apparatuses with their differently configured functions may be structured accordingly.

The reference numeral of each component belonging to, say, the information processing apparatus 11-1 is provided with the suffix "1" to indicate that the component in question is part of the apparatus 11-1. Likewise, the reference numeral of each component belonging to the information processing apparatus 11-i (i = 1, 2, ..., n) is given the suffix "i" to indicate that the component in question is part of the apparatus 11-i. Illustratively, the information processing controller 21-n is understood to belong to the information processing apparatus 11-n.

In the ensuing description, the reference numeral of each component belonging to the information processing apparatuses 11-1 through 11-n will be indicated without the suffix "i (i = 1, 2, ..., n)" if there is no need to specify which information processing apparatus 11 the component in question belongs to or if the information processing apparatus 11 associated with the component is clearly indicated. For example, the information processing controller belonging to the information processing apparatus 11-1 may be given the reference numeral 21 instead of 21-1. That is, the information processing apparatus is given the suffix-furnished reference numeral 11-i (i = 1, 2, ..., n) while its components may have their reference numerals indicated with or without their suffixes depending on the context.

The information processing stand-in-only apparatus 12-1 is structured to include at least one information processing controller 51-1, a main memory 52-1, and a command set ROM (Read Only Memory) 53-1.

The information processing controller 51-1 controls the entire information processing stand-in-only apparatus 12-1 by executing diverse programs held in the main memory 52-1. The information processing controller 51-1 sends diverse items of information, data, and programs to the information processing apparatus 11 or to another information processing stand-in-only apparatus 12 over the network 13 by use of software cells. The information processing controller 51-1 also receives via the network 13 the software cells sent by the information processing apparatus 11 or by another information processing stand-in-only apparatus 12.

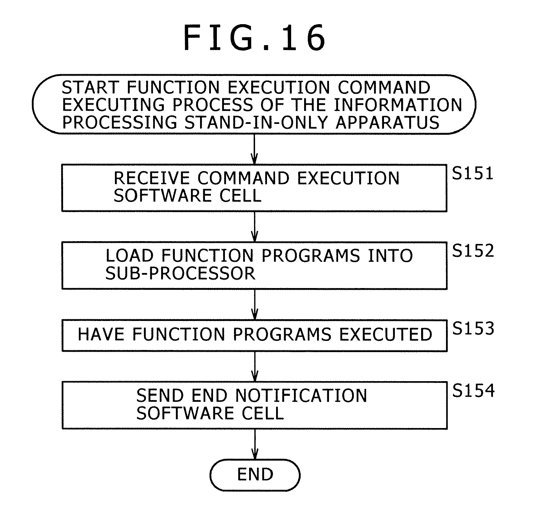

As will be discussed later in reference to Fig. 16, the information processing controller 51-1 carries out programs held in the command set ROM 53-1 by executing a command (called a function execution command) designated by a software cell received from the information processing apparatus 11.

The information processing controller 51-1 has a control CPU 61-1, sub-processor 62-1-1 through 62-q-1, and a DMAC 63-1 which are interconnected by a bus 64-1. In the ensuing description, the sub-processors 62-1-1 through 62-q-1 will be simply referred to as the sub-processor 62-1 if there is no need to distinguish them individually.

The control CPU 61-1 has a local storage 71-1. The data and programs loaded from the main memory 52-1 or from the command set ROM 53-1 are stored temporarily in the local storage 71-1. In operation, the control CPU 61-1 reads data and programs from the local storage 71-1 and executes diverse processes based on the retrieved data and programs.

The control CPU 61-1 sends diverse items of information, data, and programs to the information processing apparatus 11 or to another information processing stand-in-only apparatus 12 over the network 13 by use of software cells. The control CPU 61-1 also receives via the network 13 the software cells sent by the information processing apparatus 11 or by another information processing stand-in-only apparatus 12.

The control CPU 61-1 may obtain a desired result by having each of the multiple sub-processors 62-1 carry out an independent program constituting a logically unified function (logical thread). That is, the control CPU 61-1 performs scheduling of the programs executed by the sub-processors 62-1 and carries out overall management of the information processing controller 51-1 (information processing stand-in-only apparatus 12-1).

The control CPU 61-1 stores its own apparatus information into the main memory 52-1 and updates the stored information as needed. Where necessary, the control CPU 61-1 notifies its own apparatus information to the information processing apparatus 11 connected to the network 13 through the use of software cells. Unlike the master apparatus, the information processing stand-in-only apparatus 12 does not request any other apparatus to carry out processes and thus does not have an apparatus information table or a distributed processing management table.

The control CPU 61-1 does not perform application processing; it need only manage the sub-processor 62-1 and conduct communications with the other apparatuses connected to the network 13. Thus the control CPU 61-1 is not required to exert high performance and can be less powerful than the main CPU 31 of the information processing apparatus 11.

Under control of the control CPU 61-1, the sub-processors 62-1 carry out programs parallelly and individually for data processing. If necessary, the program executed by the control CPU 61-1 may be arranged to operate in conjunction with the programs performed by the sub-processors 62-1.

The sub-processor 62-1 is designed to perform predetermined processes. Illustratively, the sub-processor 62-1 may be a DSP (digital signal processor) arranged to process various video and audio data. It follows that the sub-processor 62-1 is typically more powerful in handling specific tasks than the sub-processor 32 of the information processing apparatus 11 designed for general-purpose processing. Because the sub-processor 62-1 uses dedicated hardware or middleware to carry out most of the tasks it takes on, the processing can be accomplished by executing packaged small-scale programs (e.g., command list-size programs).

The sub-processors 62-1-1 through 62-q-1 have local storages 72-1-1 through 72-q-1 respectively. As needed, the sub-processors 62-1-1 through 62-q-1 store data and programs temporarily into the local storages 72-1-1 through 72-q-1 respectively. The sub-processors 62-1-1 through 62-q-1 also read data and programs from the local storages 72-1-1 through 72-q-1 and carry out various processes based on the retrieved data and programs.

In the ensuing description, the local storages 72-1-1 through 72-q-1 will be simply referred to as the local storage 72-1 if there is no need to distinguish them individually.

The DMAC 63-1 manages access to the main memory 52-1 or to the command set ROM 53-1 by the control CPU 61-1 and sub-processor 62-1. The control CPU 61-1 or sub-processor 62-1 reads programs and data from the main memory 52-1 or from the command set ROM 53-1 by having the DMAC 63-1 execute a read command. The control CPU 61-1 or sub-processor 62-1 also records programs or data to the main memory 52-1 by getting the DMAC 63-1 to execute a write command.

In the ensuing description, the main CPU 61-1 or sub-processor 62-1 will be simply described as reading programs or data from the main memory 52-1 or from the command set ROM 53-1 instead of having the DMAC 63-1 execute the read command to do so. Likewise, the main CPU 61-1 or sub-processor 62-1 will be simply described as writing programs or data to the main memory 52-1 instead of getting the DMAC 63-1 to execute the write command to do so. The processing of the DMAC 63-1 will thus be omitted from the description where appropriate.

Although the information processing stand-in-only apparatus 12-1 was described as having only one information processing controller 51-1, this is not limitative of the invention. Alternatively, the information processing stand-in-only apparatus 12-1 may have a plurality of information processing controllers 51-1.

The main memory 52-1 is illustratively composed of a RAM. The main memory 52-1 temporarily accommodates various programs and data that may be executed or operated on by the control CPU 61-1 and sub-processor 62-1.

The command set ROM 53-1 holds various programs and data that may be executed or operated on by the control CPU 61-1 and sub-processor 62-1. The command set ROM 53-1 also accommodates diverse programs of which the execution is ordered by the sub-processor 62-1 issuing suitable execution commands in order to carry out various processes.

The command set ROM 53-1 may alternatively be formed by a rewritable nonvolatile memory such as an EEPROM (Electronically Erasable and Programmable Read Only Memory).

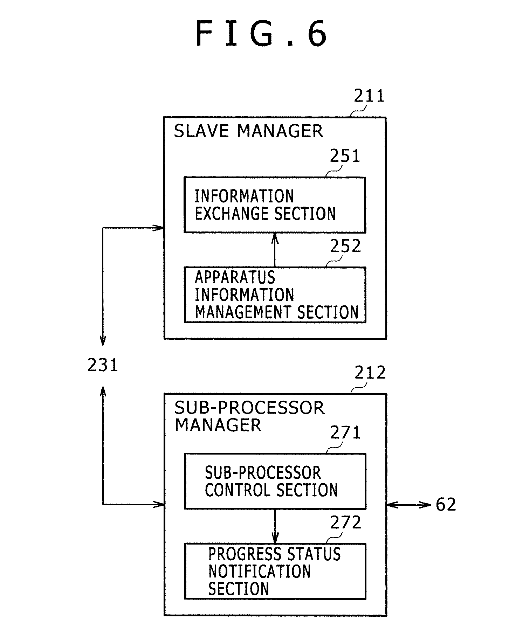

As will be discussed later in reference to Fig. 6, the software for the information processing stand-in-only apparatus 12-1 is small in scale. It follows that a large-capacity external recording device such as one attached to the information processing apparatus 11 will not be provided.

The other information processing stand-in-only apparatuses 12 have the same structure as the information processing stand-in-only apparatus 12-1 and thus will not be described further. However, these other information processing stand-in-only apparatuses 12 are not limited to the above-described apparatus structure. Functions may be added to or removed from the other information processing stand-in-only apparatuses 12, and the apparatuses with their differently configured functions may be structured accordingly.

The reference numeral of each component belonging to, say, the information processing stand-in-only apparatus 12-1 is provided with the suffix "1" to indicate that the component in question is part of the apparatus 12-1. Likewise, the reference numeral of each component belonging to the information processing stand-in-only apparatus 12-i (i = 1, 2, ..., m) is given the suffix "i" to indicate that the component in question is part of the apparatus 12-i. Illustratively, the information processing controller 51-m is understood to belong to the information processing stand-in-only apparatus 12-m.

In the ensuing description, the reference numeral of each component belonging to the information processing stand-in-only apparatuses 12-1 through 12-m will be indicated without the suffix "i (i = 1, 2, ..., m)" if there is no need to specify which information processing stand-in-only apparatus 12 the component in question belongs to or if the information processing stand-in-only apparatus 12 associated with the component is clearly indicated. For example, the information processing controller belonging to the information processing stand-in-only apparatus 12-1 may be given the reference numeral 51 instead of 51-1. That is, the information processing stand-in-only apparatus is given the suffix-furnished reference numeral 12-i (i = 1, 2, ..., m) while its components may have their reference numerals indicated with or without their suffixes depending on the context.

The information processing controller 21 of the information processing apparatus 11 and the information processing controller 51 of the information processing stand-in-only apparatus 12 are each assigned an apparatus ID for uniquely identifying the associated apparatus 11 or 12 throughout the network 13. Illustratively, when the information processing apparatus 11 or information processing stand-in-only apparatus 12 is switched on, the main CPU 31 of the information processing controller 21 in the information processing apparatus 11 or the control CPU 61 of the information processing controller 51 in the information processing stand-in-only apparatus 12 creates the apparatus ID based on the time and date at which the apparatus was turned on, the network address of the activated apparatus 11 or 12, or the number of sub-processors 32 or 62 configured in the apparatus 11 or 12.

The main CPU 31 of the information processing apparatus 11 and the control CPU 61 of the information processing stand-in-only apparatus 12 are each assigned a CPU ID for identifying the CPU in question. Furthermore, the sub-processor 32 of the information processing apparatus 11 and the sub-processor 62 of the information processing stand-in-only apparatus 12 are each assigned a sub-processor ID for identifying the sub-processor in question.

Fig. 2 is a schematic view showing a typical structure of a software cell.

The software cell is structured to include a sender ID, a destination ID, a responder ID, a cell interface, a DMA command area, a program area, and a data area.

If the sender of the software cell is the information processing apparatus 11, the sender ID (also called the sender/receiver ID hereunder) is set to include the network address of the apparatus 11 as the sender, the apparatus ID of the information processing controller 21 in the apparatus 11, and the CPU ID and sub-processor ID identifying respectively the main CPU 31 and sub-processor 32 of the information processing controller 21 in the apparatus 11. If the sender of the software cell is the information processing stand-in-only apparatus 12, the sender/receiver ID is set to include the network address of the apparatus 12 as the sender, the apparatus ID of the information processing controller 51 in the apparatus 12, and the CPU ID and sub-processor ID identifying respectively the control CPU 61 and sub-processor 62 of the information processing controller 51 in the apparatus 12.

The destination ID is set to include the sender/receiver ID of the information processing apparatus 11 or information processing stand-in-only apparatus 12 to which the software cell is to be sent.

The responder ID is set to include the sender/receiver ID of the information processing apparatus 11 or information processing stand-in-only apparatus 12 that responds to the result of execution of the software cell.

The cell interface is information which becomes necessary when the software cell is used. The cell interface is constituted by a global ID, information about necessary sub-processors, a sandbox size, and a preceding software cell ID.

The global ID is designed to identify uniquely the software cell in question throughout the network 13. The global ID is formed by use of the sender ID and the date and time (i.e., time of day) at which the software cell is created or sent.

The information about necessary sub-processors illustratively includes the number of sub-processors needed to execute the software cell in question.

The sandbox size is set to include the capacity of the main memory and that of the local storage of the sub-processors necessary for execution of the software cell.

The preceding software cell ID is an identifier that identifies the preceding software cell among the software cells constituting a single cell group that requires sequential execution of streaming data or the like.

An executive section of the software cell is made up of the DMA command area, program area, and data area.

The DMA command area holds DMA commands that are used illustratively to request the destination information processing apparatus 11 or information processing stand-in-only apparatus 12 to execute processes or to notify the destination apparatus of diverse items of information such as the result of processing, as well as various data needed to execute the DMA commands. The DMA commands illustratively include a load command, a kick command, a function execution command, a status command, a status return command, and a sequencing process request command.

The load command is a command that loads programs from the program area into the main CPU 31 or sub-processor 32 of the destination information processing apparatus 11. Where the load command is set in the DMA command area, that area also includes either the address in the main memory 22 to which to load the programs, or the sub-processor ID of the sub-processor 32 and the address in the local storage 42 to which to load the programs.

The kick command is a command that kicks off program execution. Where the kick command is set in the DMA command area, that area also includes the sub-processor ID of the sub-processor 32 to be started, and a program counter indicative of information about the address from which to start program execution.

The function execution command is a command that orders execution of the programs held in the command set ROM 53 of the information processing stand-in-only apparatus 12. Where the function execution command is set in the DMA command area, that area also includes the sub-processor ID of the sub-processor 62 for executing the programs, and the address in the local storage 72 of the sub-processor 62 to which to load the programs from the command set ROM 53.

The status command is a command that requests transmission of the apparatus information about the information processing apparatus 11 or information processing stand-in-only apparatus 12 identified by the destination ID, to the information processing apparatus 11 identified by the responder ID.

The status return command is set when the sender information processing apparatus 11 or information processing stand-in-only apparatus 12 sends various items of information and data to the destination information processing apparatus 11 or information processing stand-in-only apparatus 12. The status command is set with a value (e.g., numerical value or character string) that varies depending on the information or data to be sent.

The sequencing process request command is used by the information processing apparatus 11 serving as a slave apparatus when it requests the information processing stand-in-only apparatus 12 acting as the master apparatus to execute a series of processes.

Where the load command is set in the DMA command area, the program area holds programs that are loaded into the destination information processing apparatus 11.

The data area accommodates diverse kinds of information and parameters.

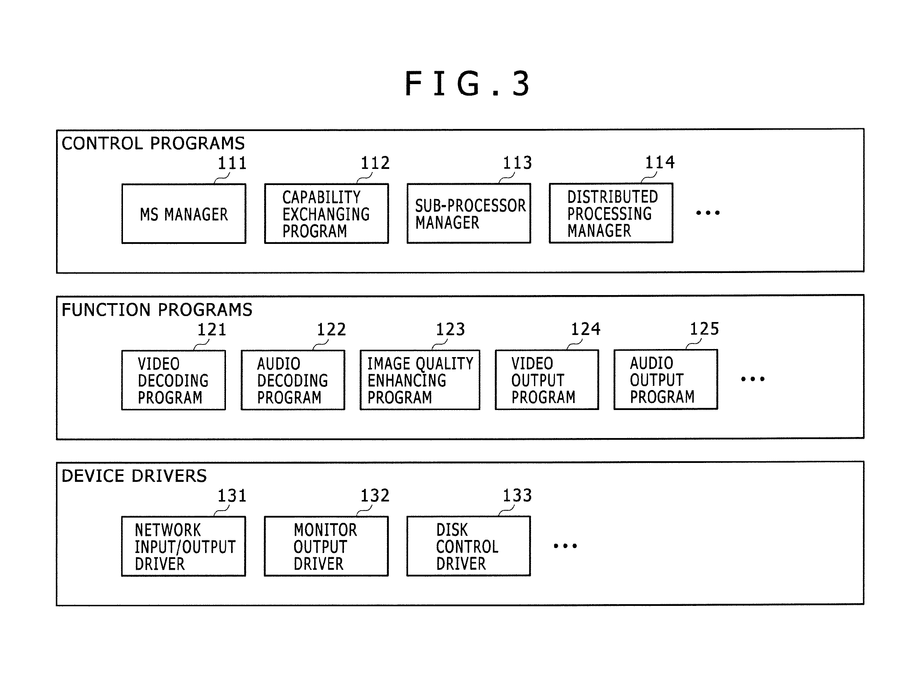

Fig. 3 is a schematic view showing a typical structure of software executed by the main CPU 31 or sub-processor 32 of the information processing controller 21 in the information processing apparatus 11. Before the information processing apparatus 11 is switched on, the software (i.e., programs) is stored on the external recording device 23 connected to the information processing controller 21. As needed, the programs are loaded into the main memory 22, into the local storage 41 of the main CPU 31, or into the local storage 42 of the sub-processor 32.

The programs are classified by function or by characteristic into control programs, function programs, and device drivers.

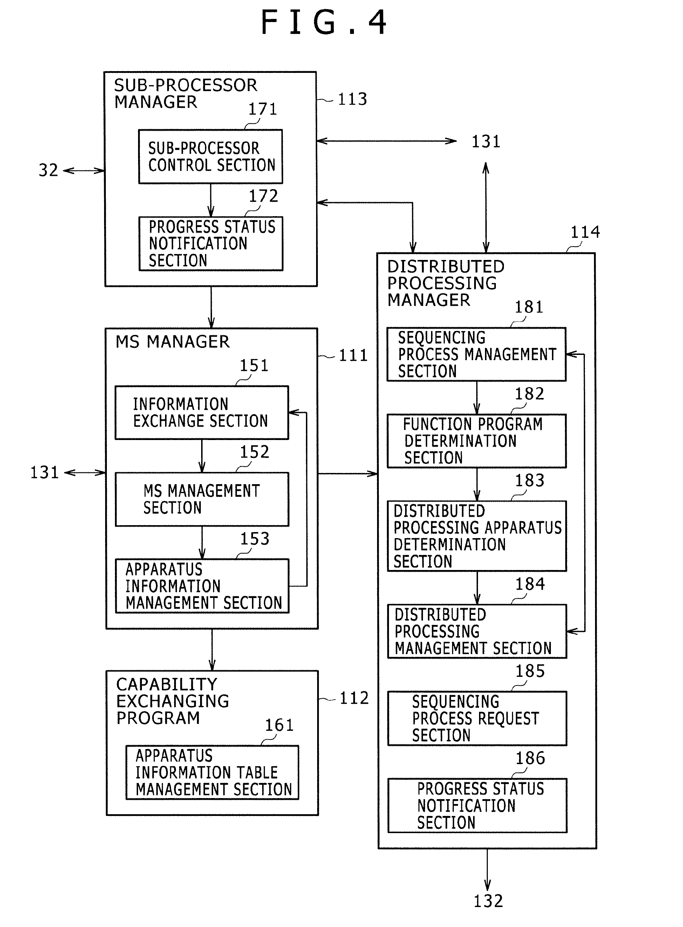

The individual information processor controllers 21 each hold the same control programs that are executed by the main CPU 31 of each controller. Illustratively, where distributed processing is performed by multiple information processing apparatuses 11 and information processing stand-in-only apparatuses 12, the control programs include a master/slave (MS) manager 111, a capability exchanging program 112, a sub-processor manager 113, and a distributed processing manager 114. The functions of these control programs will be discussed later in reference to Fig. 4.

The function programs correspond to so-called application programs executed by the main CPU 31 or sub-processor 32. Typical function programs include a video decoding program 121 that decodes video data, an audio decoding program 122 that decodes audio data, an image quality enhancing program 123 that enhances image quality illustratively by reducing noise in video data, a video output program 124 that outputs video data to a monitor for video display, and an audio output program 125 that outputs audio data to speakers for audio output. Each information processing controller 21 is assigned a function program corresponding to the function offered by the associated information processing apparatus 11.

Each function program is assigned a function program ID that uniquely identifies the program in question. The function program ID is determined on the basis of the date and time at which the program in question was created and/or the apparatus ID of the associated apparatus. Furthermore, each function program is set with the requirements regarding the apparatus needed to carry out the function program in question. The requirements stipulated for each task of program execution include: an apparatus type ID, performance of the CPU or sub-processor, main memory utilization, external recording device conditions, and a function execution command for executing a function program which is held in the command set ROM 53 of the information processing stand-in-only apparatus 12 and which provides performance equivalent to the function program in question when carried out. These requirements may be described as metadata for each function program. Alternatively, the requirements may be managed by each information processing apparatus 11 apart from the function programs.

The device drivers are executed by the main CPU 31 for control over input and output (i.e., sending and receiving) of data by the information processing apparatus 11 and over the execution of diverse kinds of hardware. Typical device drivers include a network input/output driver 131 that controls data output and input to and from the network 13, a monitor output driver 132 that controls output of video data to the monitor, and a disk control driver 133 that controls data output and input to and from various recording media (e.g., disks). The device drivers are adapted to the function of each information processing apparatus 11 under control of its information processing controller 21.

The control programs and device drivers are not limited to execution by the main CPU 31; they may also be carried out by any sub-processor 32. Preferably, the MS manager 111, capability exchanging program 112, sub-processor manager 113, and distributed processing manager 114 should stay resident while the main power of the information processing apparatus 11 is being supplied.

The control programs or device drivers may be acquired from another apparatus by way of the network 13. Furthermore, the control programs or device drivers may be installed from the external recording device 23 such as removable medial into another external recording device (e.g., hard disk drive) incorporated in the information processing apparatus 11. After such installation, the control programs or device drivers may be updated or supplemented as needed.

Under control of the main CPU 31, the function programs may be loaded either selectively as needed, or as a whole immediately after the main power is switched on. The function programs need not be recorded on the external recording devices 23 of all information processing apparatuses 11 connected to the network 13. These programs may be stored on the external recording device 23 of a single information processing apparatus 11. Thus stored, the programs may be exchanged between the information processing apparatuses 11 as needed. In this manner, a plurality of information processing apparatuses 11 connected to the network 13 may be arranged to operate as a virtual information processing apparatus executing the function programs.

Fig. 4 is a block diagram showing typical functions implemented when the control programs including the MS manager 111, capability exchanging program 112, sub-processor manager 113, and distributed processing manager 114 are executed by the main CPU 31 of the information processing apparatus 11. An information exchange section 151, a master/slave (MS) management section 152, and an apparatus information management section 153 are implemented by the main CPU 31 executing the MS manager 111; an apparatus information table management section 161 is implemented by the CPU 31 executing the capability exchanging program 112; a sub-processor control section 171 and a progress status notification section 172 are implemented by executing the sub-processor manager 113; and a sequencing process management section 181, a function program determination section 182, a distributed processing apparatus determination section 183, a distributed processing management section 184, a sequencing process request section 185, and a progress status notification section 186 are implemented by executing the distributed processing manager 114.

Over the network 13 and through the network input/output driver 131, the information exchange section 151 exchanges apparatus information with another networked apparatus, verifies whether any other apparatus exists on the network, and notifies other networked apparatuses that this section is now connected to the network 13. The information processing apparatus 11 is said to be "connected" or to "exist" not only in physical sense but also in terms of its connection to, or its existence on, the network 13 being established electrically and functionally. In the above context, "this section" refers not exactly to the information exchange section 151, an apparent subject of the sentence, but to the information processing apparatus in which the information exchange section 151 is implemented. Likewise in the ensuing description, each section implemented in the information processing apparatus 11 or in the information processing stand-in-only apparatus 12 may appear as an apparent subject of a given sentence but it actually represents this section-hosting apparatus 11 or 12.

The information exchange section 151 supplies the capability exchanging program 112 with the apparatus information acquired from other apparatuses. On receiving apparatus information from the information processing apparatus 11 acting as the master apparatus, the information exchange section 151 supplies the MS management section 152 with information indicating that the master apparatus exists on the network 13.

As will be discussed later in reference to Fig. 7, the MS management section 152 determines whether it will act as the master apparatus or as a slave apparatus. The MS management section 152 notifies its decision to the apparatus information management section 153 and distributed processing manager 114.

The apparatus information management section 153 updates the apparatus information on this section-hosting apparatus illustratively by acquiring information representative of the status of each sub-processor 32 from the sub-processor manager 113 or by checking the utilization of the main memory 22 and external recording device 23. The apparatus information management section 153 supplies the updated apparatus information to the distributed processing manager 114 and notifies the information exchange section 151 that the apparatus information has been updated.

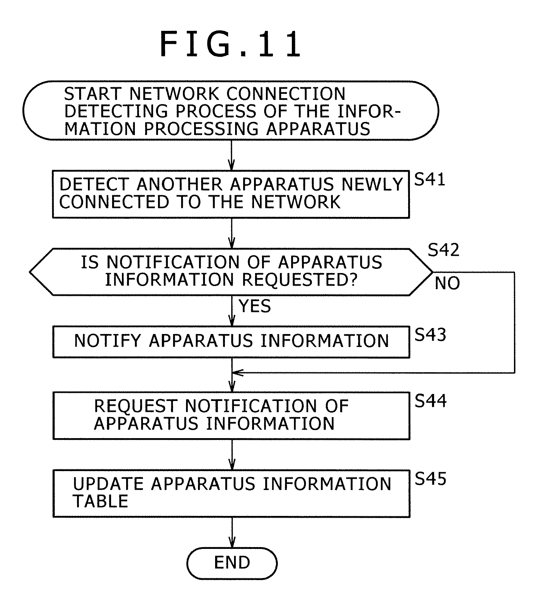

As will be described later in reference to Figs. 7 and 11, the apparatus information table management section 161 creates an apparatus information table based on the apparatus information about other apparatuses coming from the information exchange section 151 and on the apparatus information about this section-hosting apparatus. The apparatus information table management section 161 stores the created apparatus information table into the main memory 22 and updates the stored table as needed.

Over the network 13 and through the network input/output driver 131, the sub-processor control section 171 receives from another information processing apparatus 11 a software cell requesting the execution of a process or acquires a user-input process command, and causes each main CPU 31 or sub-processor 32 to carry out the process accordingly. Also over the network 13 and through the network input/output driver 131, the sub-processor control section 171 receives from another information processing apparatus 11 a software cell ordering the loading of function programs and stores the received function programs into the local storage 42.

Furthermore, the sub-processor control section 171 acquires the result of processing from each sub-processor 32, crates a software cell indicating the acquired result, and sends the created software cell through the network input/output driver 131 and over the network 13 to the information processing apparatus 11 that requested the processing. The sub-processor control section 171 also performs overall management of its own sub-processors 32 such as scheduling.

The progress status notification section 172 acquires from the sub-processor control section 171 information indicative of the progress status of the processing performed by each sub-processor 32, creates a software cell for notifying the progress status, and sends the created software cell through the network input/output driver 131 and over the network 13 to the information processing apparatus 11 that requested the processing.

When this section-hosting apparatus acts as the master apparatus, the sequencing process management section 181 receives over the network 13 and through the network input/output driver 131 a software cell requesting execution of a series of processes (called the sequencing process hereunder) from another information processing apparatus 11 serving as a slave apparatus. The sequencing process management section 181 feeds the received software cell to the distributed processing management section 184 and supplies the distributed processing determination section 182 with information indicative of the requested sequencing process. The sequencing process management section 181 acquires from the distributed processing management section 184 information indicating the results of the processes included in the sequencing process. Based on the processing results thus acquired, the sequencing process management section 181 creates a software cell for notifying the result of the sequencing process. The sequencing process management section 181 proceeds to send the created software cell through the network input/output driver 131 and over the network 13 to the information processing apparatus 11 that requested the sequencing process.

The sequencing process management section 181 further acquires from the distributed processing management section 184 information indicating the progress status of the processes included in the sequencing process. Based on the acquired information, the sequencing process management section 181 creates a software cell for notifying the progress status of the sequencing process. The sequencing process management section 181 then sends the software cell thus created through the network input/output driver 131 and over the network 13 to the information processing apparatus 11 that requested the sequencing process.

The function program determination section 182 determines the function programs needed to carry out the sequencing process. The function program determination section 182 then supplies the distributed processing apparatus determination section 183 with information indicating the determined programs.

On the basis of the apparatus information table, the distributed processing determination section 183 determines which information processing apparatus 11 or information processing stand-in-only apparatus 12 is to be execute the function programs determined by the function program determination section 182. The distributed processing determination section 183 then supplies the distributed processing management section 184 with information representative of what has been determined.

The distributed processing management section 184 creates a software cell for requesting the information processing apparatus 11 or information processing stand-in-only apparatus 12 determined by the distributed processing determination section 183 to execute the function programs determined by the function program determination section 182 (i.e., execution of distributed processing is requested). The distributed processing management section 184 sends the created software cell through the network input/output driver 131 and over the network 13 to the requested information processing apparatus 11 or information processing stand-in-only apparatus 12. If the requested information processing apparatus 11 does not have the function programs it is requested to carry out, then the distributed processing management section 184 creates a software cell for sending the function programs in question. The distributed processing management section 184 sends the created software cell to the requested information processing apparatus 11 through the network input/output driver 131 and over the network 13.

From the requested information processing apparatus 11 or information processing stand-in-only apparatus 12, the distributed processing management section 184 receives over the network 13 and through the network input/output driver 131 a software cell notifying the result of the processing performed by the function programs. The distributed processing management section 184 supplies the sequencing process management section 181 with information indicating the result of the processing.

Furthermore, the distributed processing management section 184 in the information processing apparatus 11 acting as the master apparatus creates a distributed processing management table for managing the status of the distributed processing performed by the information processing system 1, the table illustratively showing process request status. The distributed processing management section 184 updates the created distributed processing management table as needed.

When this section-hosting apparatus serves as a slave apparatus, the sequencing process request section 185 creates a software cell for requesting another apparatus to execute a sequencing process including a series of processes of which the execution has been ordered illustratively by a user and which cannot be performed by this slave apparatus alone. The software cell thus created is sent to the information processing apparatus 11 acting as the master apparatus through the network input/output driver 131 and over the network 13.

Over the network 13 and through the network input/output driver 131, the progress status notification section 186 receives a software cell notifying process progress status from the information processing apparatus 11 or information processing stand-in-only apparatus 12 requested to execute the processing. The progress status notification section 186 illustratively supplies the monitor output driver 132 with data for displaying progress status based on the received software cell so that the process progress status may be displayed on a monitor, not shown.

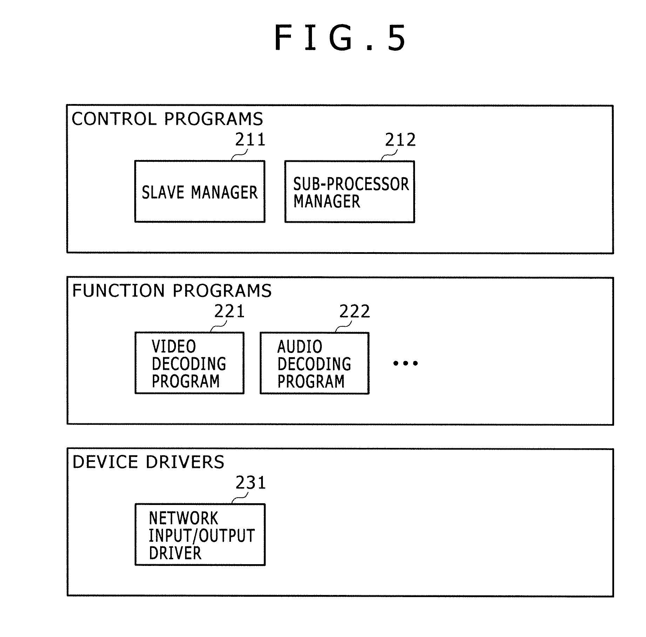

Fig. 5 is a schematic view showing a typical structure of software executed by the control CPU 61 or sub-processor 62 of each information processing controller 51 in an information processing stand-in-only apparatus 12. Before the information processing stand-in-only apparatus 12 is switched on, the software (i.e., programs) is kept in the command set ROM 53 connected to the information processing controller 51. From there, the programs are loaded as needed into the main memory 52, into the local storage 71 of the control CPU 61, or into the local storage 72 of the sub-processor 62.

The programs above are classified by function or by characteristic into control programs, function programs, and device drivers, as in the case of the programs for the information processing apparatus 11.

The individual information processor controllers 51 each hold the same control programs that are executed by the control CPU 61 of each controller. Illustratively, the control programs include a slave manager 211 and a sub-processor manager 212. The functions of the individual control programs will be discussed later in reference to Fig. 6.

Unlike the control programs for the information processing apparatus 11, the control programs for the information processing stand-in-only apparatus 12 do not include programs corresponding to the capability exchanging program 112 or to the distributed processing manager 114. That is because the information processing stand-in-only apparatus 12 does not act as the master apparatus requesting another apparatus to perform processes, or does not request the master apparatus to carry out a sequencing process illustratively on the user's order.

Execution of the function programs is ordered by use of predetermined function execution commands. A process assigned uniquely to each sub-processor 62 is executed by the sub-processor carrying out the function program designated by the corresponding function execution command. Each information processing controller 51 is in possession of the function programs corresponding to the processes to be carried out by the information processing stand-in-only apparatus 12. Illustratively, the function programs are performed by the sub-processor 62 in order to execute a video decoding program 221 to decode video data or an audio decoding program 222 to decode audio data.

The sub-processor 62 has most of its processing executed by hardware of the information processing stand-in-only apparatus 12 or by the middleware incorporated in the sub-processor 62. For that reason, the function programs are prepared as packaged programs for operating such hardware and middleware (e.g., command list-type programs for activating hardware or middleware). The function programs are thus small in scale compared with their counterparts for the information processing apparatus 11 designed to carry out similar processes. With appreciably fewer man-hours needed for programming, the efficiency in developing these function programs is improved.

A network input/output driver 231 is provided as the device driver. This program is executed by the control CPU 61 to control the output and input of data to and from the network 13.

The control programs and device drivers are not limited to execution by the control CPU 61; they may also be carried out by any sub-processor 62. Preferably, the slave manager 211 and sub-processor manager 212 should stay resident while the main power of the information processing stand-in-only apparatus 12 is being supplied.

The control programs or device drivers may be changed or supplemented with new programs or drivers by replacing the command set ROM 53 holding the control programs and device drivers. As another alternative, with the command set ROM 53 made up of a nonvolatile memory, control programs or device drivers may be acquired from other apparatuses over the network 13 so that the acquired programs or drivers may be installed into the command set ROM 53.

Under control of the control CPU 61, the function programs may be loaded either selectively as needed, or as a whole immediately after the main power is switched on. Unlike the information processing apparatus 11, the information processing stand-in-only apparatus 12 carries out only the function programs stored in the command set ROM 53 and does not exchange any function program with the information processing apparatus 11 or with another information processing stand-in-only apparatus 12.

Fig. 8 is a block diagram showing typical functions implemented by the control CPU 61 of the information processing stand-in-only apparatus 12 executing the slave manager 211 and sub-processor manager 212 as part of the control programs. Specifically, an information exchange section 251 and an apparatus information management section 252 are implemented by the control CPU 61 executing the slave manager 211, and a sub-processor control section 271 and a progress status notification section 272 are implemented by the control CPU 61 executing the sub-processor manager 212.

Over the network 13 and through the network input/output driver 231, the information exchange section 251 notifies another networked apparatus of apparatus information, verifies whether any other apparatus exists on the network, and notifies other networked apparatuses that this section is now connected to the network 13. The information processing stand-in-only apparatus 12 is said to be "connected" or to "exist" not only in physical sense but also in terms of its connection to, or its existence on, the network 13 being established electrically and functionally.

The apparatus information management section 252 updates the apparatus information on this section-hosting apparatus illustratively by acquiring information representative of the status of each sub-processor 62 from the sub-processor manager 212 or by checking the utilization of the main memory 52. The apparatus information management section 252 notifies the information exchange section 251 that the apparatus information has been updated.

Over the network 13 and through the network input/output driver 231, the sub-processor control section 271 receives from another information processing apparatus 11 a software cell requesting the execution of function execution commands. The sub-processor control section 271 causes each sub-processor 62 to load the function program of which the execution is ordered by the function execution command and to execute the loaded function program. The sub-processor control section 271 acquires the result of the processing from each sub-processor 62, creates a software cell indicating the acquired processing result, and sends the created software cell over the network 13 and through the network input/output driver 231 to the information processing apparatus 11 that requested the processing. The sub-processor control section 271 also performs overall management of its own sub-processors 62 such as scheduling.

The progress status notification section 272 acquires from the sub-processor control section 271 information indicative of the progress status of the processing performed by each sub-processor 62, creates a software cell for notifying the progress status, and sends the created software cell through the network input/output driver 231 and over the network 13 to the information processing apparatus 11 that requested the processing.

Described below with reference to Figs. 7 through 12 is the processing performed by the information processing system 1 when an information processing apparatus 11 or an information processing stand-in-only apparatus 12 is connected anew to the network 13.

First to be described in reference to the flowchart of Fig. 7 is the network connecting process carried out by the information processing apparatus 11 upon connection to the network 13.

In step S1, the main CPU 31 of the information processing controller 21 in the information processing apparatus 11 connected anew to the network 13 loads the control programs and device drivers into the main memory 22. More specifically, with the information processing apparatus 11 physically linked to the network 13 using a connection cable or the like, not shown, the main power is supplied to get the apparatus 11 connected electrically and functionally to the network 13. At this point, the main CPU 31 reads the control programs and device drivers from the external recording device 23 and loads them into the main memory 22. The main CPU 31 starts executing the loaded programs as needed.

Step S1 is skipped if, with the main power of the information processing apparatus 11 switched on in advance and with the programs loaded in the main memory 22, the apparatus 11 is connected to the network 13 electrically and functionally upon establishment of physical connection with the network 13.

In step S2, the information exchanging section 151 requests notification of apparatus information from other information processing apparatuses. More specifically, the information exchanging section 151 creates a software cell in which the DMA command area holds a status command, the sender ID area and responder ID area each hold the sender/receiver ID of this section-hosting apparatus, and the destination ID area is left blank (this cell will be called the apparatus information request software cell hereunder). The information exchanging section 151 sends the apparatus information request software cell thus created onto the network 13 through the network input/output driver 131. The apparatus information request software cell is thus broadcast to the other apparatuses connected to the network 13. The MS management section 152 sets a timer for verifying network connection. The time-out on the timer is set illustratively for 10 minutes.

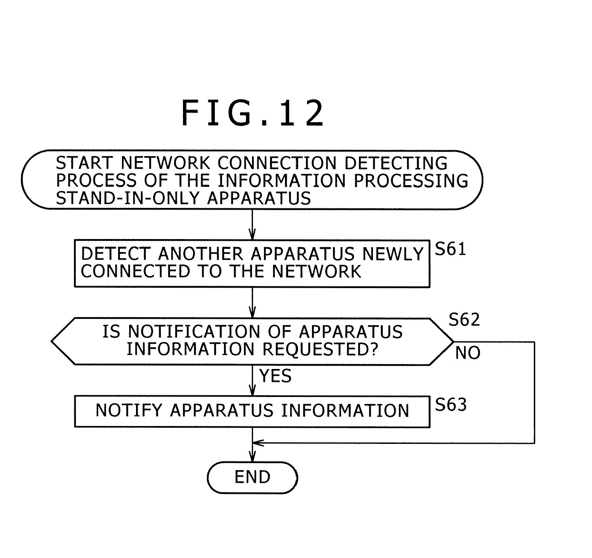

In step S3, the information exchanging section 151 checks to determine whether any other apparatus connected to the network 13 has notified its apparatus information in response to the apparatus information request software cell sent in step S2. Step S4 is reached if the apparatus information is found to be received from some other apparatus in one of two cases: if the information exchanging section 151 receives over the network 13 and through the network input/output driver 131 a software cell which is sent by any other information processing apparatus 11 connected to the network 13 and which notifies the apparatus information about that apparatus 11 (the cell will be called the apparatus information notification software cell hereunder), as will be discussed later in connection with step S44 of Fig. 11; or if the information exchanging section 151 receives likewise an apparatus information notification software cell from an information processing stand-in-only apparatus 12 connected to the network 13, as will be explained later in connection with step S63 of Fig. 12.

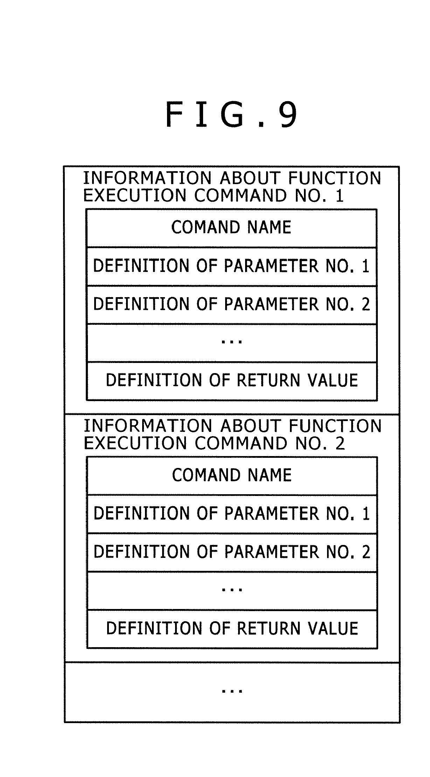

Described below with reference to Figs. 8 and 9 is typical apparatus information held in the data area of an apparatus information notification software cell.

Fig. 8 is a schematic view showing a typical format of the apparatus information to be placed into the data area of the apparatus information notification software cell.

An apparatus ID field in the format indicates the apparatus ID assigned to the information processing controller 21 of the information processing apparatus 11 or to the information processing controller 51 of the information processing stand-in-only apparatus 12.

An apparatus type ID field contains a value representing the characteristic of the information processing apparatus 11 or information processing stand-in-only apparatus 12. The characteristic of the information processing apparatus 11 or information processing stand-in-only apparatus 12 refers to information indicating the type of the apparatus. Illustratively, the information indicates that the information processing apparatus 11 may be any one of such apparatuses as a hard disk recorder, a PDA (Personal Digital Assistant), and a portable CD (Compact Disc) player; that the information processing apparatus 11 may be a general-purpose apparatus not specialized in any particular function; or that the information processing apparatus 11 or information processing stand-in-only apparatus 12 may be an apparatus capable of such component processes as video decoding, audio decoding, and image quality enhancement.

The apparatus type ID field is set with a character string or a corresponding numerical value having a specific meaning. Illustratively, the character string DSP_BOX indicates that the apparatus has a DSP and carries out data processing on video or audio data; AV_PLAYER indicates that the apparatus is an AV data reproducing apparatus such as a DVD player for reproducing AV (audio video) data; and GENERAL indicates that the apparatus is not specialized in any particular function and performs general-purpose processing. The information processing apparatus 11 grasps the characteristic and functionality of another information processing apparatus 11 or an information processing stand-in-only apparatus 12 based on the apparatus type ID.

An MS (master/slave) status field indicates whether the information processing apparatus 11 or information processing stand-in-only apparatus 12 acts as a master apparatus or as a slave apparatus. A "0" set in the field indicates that the apparatus in question is acting as the master apparatus, and a "1" indicates that the apparatus is serving as a slave apparatus. For the information processing stand-in-only apparatus 12 serving only as a slave apparatus, the value in the MS status field is fixed to "0."

A main CPU operating frequency field indicates the operating frequency of the main CPU 31 in the information processing apparatus 11.

A main CPU utilization field indicates the percentage of the currently utilized capacity of the main CPU 31 in the information processing apparatus 11 as compared with its full capacity. Illustratively, the main CPU utilization is calculated in terms of MIPS for CPU performance evaluation or based on the CPU utilization per unit time.

For the information processing stand-in-only apparatus 12 that does not have a main CPU 31, no value is set in the main CPU operating frequency field or in the main CPU utilization field.

A sub-processor count field indicates the number of sub-processors 32 possessed by the information processing controller 21 of the information processing apparatus 11 or the number of sub-processors 62 kept by the information processing controller 51 of the information processing stand-in-only apparatus 12.

A total main memory capacity field indicates the total capacity of the main memory 22 connected to the information processing controller 21 of the information processing apparatus 11 or the total capacity of the main memory 52 connected to the information processing controller 51 of the information processing stand-in-only apparatus 12.

A main memory usage field indicates the currently used capacity of the main memory 22 connected to the information processing controller 21 of the information processing apparatus 11 or the currently used capacity of the main memory 52 connected to the information processing controller 51 of the information processing stand-in-only apparatus 12.

An external recording device count field indicates the number of external recording devices 23 connected to the information processing controller 21 of the information processing apparatus 11.

An external recording device ID field contains information for uniquely identifying one external recording device 23 connected to the information processing controller 21 of the information processing apparatus 11.

An external recording device type ID field indicates the type of one external recording device 23 connected to the information processing controller 21 of the information processing apparatus 11 (e.g., hard disk, CD (Compact Disc) ±RW, DVD (Digital Versatile Disk) ±RW, memory disk, SRAM, ROM).

A total external recording device capacity field indicates the total capacity of the external recording device or devices 23 connected to the information processing controller 21 of the information processing apparatus 11.

An external recording device usage field indicates the currently used capacity of the external recording device or devices 23 connected to the information processing controller 21 of the information processing apparatus 11.

Each external recording device 23 is furnished with one external recording device ID field, one external recording device type ID field, one total external recording device capacity field, and one external recording device usage field making up one set of fields. There will be provided as many sets of such fields as the number of external recording devices 23 connected to the information processing controller 21 of the information processing apparatus 11. That is, where a plurality of external recording devices 23 are connected to one information processing controller 21, a different external recording device ID is assigned to each external recording device 23. The external recording device type ID field, total external recording device capacity field, and external recording device usage field are also managed individually for each external recording device. For the information processing stand-in-only apparatus 12 having no external recording device, the apparatus information about the apparatus 12 has no values set in the external recording device ID field, external recording device type ID field, total external recording device capacity field, and external recording device usage field.

A sub-processor ID field indicates the sub-processor ID assigned either to the sub-processor 32 possessed by the information processing controller 21 of the information processing apparatus 11 or to the sub-processor 62 kept by the information processing controller 51 of the information processing stand-in-only apparatus 12.

A sub-processor utilization field contains a value indicating the percentage of the currently utilized capacity of, or the capacity reserved for program execution by, the sub-processor 32 in the information processing controller 21 of the information processing apparatus 11 as compared with the full capacity of the sub-processor 32.

A command list field indicates information about the function execution commands which are stored in the command set ROM 53 of the information processing stand-in-only apparatus 12 and which designate execution of function programs. Illustratively, as shown in Fig. 9, each function execution command is matched with a command name, definitions of the parameters to be designated, and definitions of return values that are returned following execution of the function execution command in question (function program). Illustratively, the command name indicates an actual function execution command such as mpeg2_video_decode, mpeg2_audio_decode, or video_noise_reduction. The parameter definitions indicate information about settings necessary for executing the function execution command in question (function command) as well as information about the data and flags needed for command execution (e.g., data type, data format, setting range, method for setting up data). The return value definition indicates information about the information and data (e.g., data type, data format, method for acquiring data) returned following execution of the function execution command (function command).

The apparatus information about the information processing apparatus 11 does not include a value for any function execution command.

Each sub-processor 32 or 62 is furnished with one sub-processor ID field, one sub-processor utilization field, and one command list field making up one set of fields. There will be provided as many sets of such fields as the number of sub-processors 32 or 62 possessed by the information processing controller 21 of the information processing apparatus 11 or by the information processing controller 51 of the information processing stand-in-only apparatus 12.

In step S4 back in Fig. 7, the information exchange section 151 temporarily stores the apparatus information found in the data area of the apparatus information notification software cell into the local storage 41 of the main CPU 31. If the MS status field in the apparatus information is found set for "0," i.e., if the apparatus information is notified by the information processing apparatus 11 acting as the master apparatus, then the information exchange section 151 supplies the MS management section 152 with information indicating that the master apparatus exists on the network 13.

If in step S3 no apparatus information is found notified by any other apparatus, step S4 is skipped and step S5 is reached.

In step S5, the MS management section 152 checks to determine whether a network connection verification time period has elapsed. If the network connection verification time period is not found to have elapsed yet, i.e., if time-out has yet to be detected on the timer for network connection verification set in step S2, control is returned to step S3. Thereafter steps S3 through S5 are repeated until the network connection verification time period is found to have elapsed. In this manner, apparatus information is acquired from other apparatuses connected to the network 13.

If in step S5 the network connection verification time period is found to have elapsed, i.e., if time-out is detected on the timer for network connection verification set in step S2, step S6 is reached.

In step S6, the MS management section 152 checks to determine whether a master apparatus exists on the network 13. If no master apparatus is found to exist on the network 13, i.e., if the information exchange section 151 did not notify the MS management section 152 of the presence of the master apparatus on the network 13 during the network connection verification time period, then step S7 is reached.

In step S7, the MS management section 152 sets itself (i.e., this section-hosting apparatus) as the master apparatus, and supplies the apparatus information management section 153 and distributed processing manager 114 with information indicating that the MS management section 152 has set itself as the master apparatus.

In step S8, the apparatus information table management section 161 creates an apparatus information table. More specifically, the apparatus information table management section 161 creates the apparatus information about this section-hosting apparatus by reading prerecorded information about this apparatus from the external recording device 23, by acquiring information indicative of the status of each sub-processor 32 from the sub-processor control section 171, and by checking the utilization of the main memory 22 and external recording device 23. The apparatus information thus created includes the information shown in Fig. 8. The value "0" is set in the MS status field to indicate that this apparatus is the master apparatus. The information exchange section 151 supplies the apparatus information table management section 161 with the apparatus information about other apparatuses stored in the local storage 41 of the main CPU 31. The apparatus information management section 153 feeds its own apparatus information to the apparatus information table management section 161.

The apparatus information table management section 161 creates an apparatus information table based on the apparatus information about this section-hosting apparatus and about the other apparatuses connected to the network 13, and stores the created apparatus information table into the main memory 22. The apparatus information table of the master apparatus includes the apparatus information about this apparatus and the other apparatuses. Step S11 is then reached.

It might happen that the master apparatus is not found to exist on the network 13 in step S6, i.e., that the presence of the master apparatus on the network 13 is not notified by the information exchange section 151 to the MS management section 152. In that case, step S9 is reached.

In step S9, the MS management section 152 sets itself (i.e., section-hosting apparatus) as a slave apparatus. The MS management section 152 supplies the apparatus information management section 153 and distributed processing manager 114 with information indicating that this section-hosting apparatus has been determined as a slave apparatus.

In step S10, the apparatus information table management section 161 creates and apparatus information table. More specifically, the apparatus information management section 153 creates its own apparatus information in the same manner as in step S8 above. At this point, the MS status field of the apparatus information is set with "1" indicating that this apparatus is a slave apparatus. The information exchange section 151 supplies the apparatus information table management section 161 with that apparatus information about other apparatuses which is stored in the local storage 41 of the main CPU 31. The apparatus information management section 153 feeds its own apparatus information to the apparatus information table management section 161.

The apparatus information table management section 161 creates the apparatus information table based on its own apparatus information and on the apparatus information about the other apparatuses connected to the network 13. The apparatus information table management section 161 stores the created apparatus information table into the main memory 22. The apparatus information table of the slave apparatus includes the apparatus ID field and MS status fields of this apparatus and of the other apparatuses as well.

In step S11, the information exchange section 151 checks to determine whether notification of apparatus information is requested by any other information processing apparatus 11 connected to the network 13. As will be discussed later in connection with step S44 in Fig. 11, upon receipt of an apparatus information request software cell from another networked information processing apparatus 11 over the network 13 and through the network input/output driver 131, the information exchange section 151 determines that notification of apparatus information has been requested. In that case, step S12 is reached.

In step S12, in response to the apparatus information request software cell received in step S11, the information exchange section 151 notifies the apparatus information it possesses to the information processing apparatus 11 that requested notification of apparatus information. This brings an end to the network connecting process. More specifically, the information exchange section 151 reads its own apparatus information from the apparatus information table held in the main memory 22. The information exchange section 151 proceeds to create an apparatus information notification software cell. In the cell, the DMA command area is set with a status return command indicating the notification of apparatus information; the sender ID area and responder ID area are both set with the sender/receiver ID of this apparatus hosting the information exchange section 151; the destination ID area is set with the sender/receiver ID of the information processing apparatus 11 that requested notification of apparatus information; and the data area is set with the apparatus information about this section-hosting apparatus. The information exchange section 151 sends the apparatus information notification software cell thus created onto the network 13 through the network input/output driver 131.

The destination information processing apparatus 11 receives the apparatus information notification software cell thus sent out, as will be discussed later in connection with step S45 of Fig. 11.

It might happen that the notification of apparatus information is not found to be requested in step S11, i.e., that with no other information processing apparatus 11 connected to the network 13, an apparatus information request software cell has not been sent out. In that case, step S12 is skipped and the network connecting process is brought to an end.

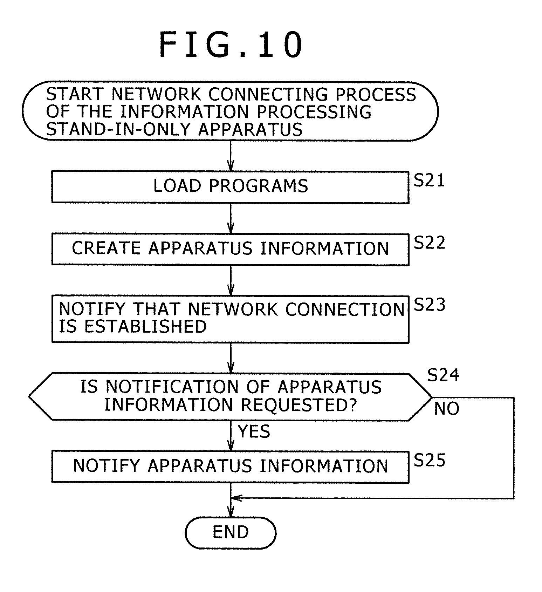

Described below in reference to the flowchart of Fig. 10 is the network connecting process performed by an information processing stand-in-only apparatus 12 when it is connected to the network 13.

In step S21, the control CPU 61 of the information processing controller 51 in the information processing stand-in-only apparatus 12 newly connected to the network 13 loads the control programs and device drivers into the main memory 52. More specifically, with the information processing stand-in-only apparatus 12 physically connected to the network 13 via a connection cable or the like, not shown, the main power of the apparatus 12 is switched on to establish electrical and functional connection of the apparatus 12 with the network 13. In this state, the control CPU 61 reads the control programs and device drivers from the command set ROM 53 and loads them into the main memory 52. The control CPU 61 starts executing the loaded programs as needed.

Step S21 is skipped if, with the main power of the information processing stand-in-only apparatus 12 switched on in advance and with the programs loaded in the main memory 52, the apparatus 12 is connected to the network 13 electrically and functionally upon establishment of physical connection with the network 13.

In step S22, the apparatus information management section 252 creates apparatus information. More specifically, the apparatus information management section 252 creates the apparatus information about this section-hosting apparatus by reading prerecorded information about this apparatus from the command set ROM 53, by acquiring information indicative of the status of each sub-processor 62 from the sub-processor control section 271, and by checking the utilization of the main memory 52. The apparatus information management section 252 stores the created apparatus information into the main memory 52.

In step S23, the information exchange section 251 notifies the other apparatuses connected to the network 13 that this section-hosting apparatus 12 is now connected with the network 13. More specifically, the information exchange section 251 creates a software cell (called a network connection notification software cell). In the cell, the DMA command area is set with a status return command notifying that connection is established with the network 13; the sender ID area and responder ID area are both set with the sender/receiver ID of this apparatus hosting the information exchange section 251; and the destination ID area is left blank. The information exchange section 251 sends the apparatus information request software cell thus created onto the network 13 through the network input/output driver 231. That is, the network connection notification software cell is broadcast to the other apparatuses connected to the network 13.

In step S24, the information exchange section 251 checks to determine whether notification of apparatus information is requested by any other information processing apparatus 11 connected to the network 13. As will be discussed later in connection with step S44 of Fig. 11, upon receipt of an apparatus information request software cell from another networked information processing apparatus 11 over the network 13 and through the network input/output driver 231, the information exchange section 251 determines that notification of apparatus information has been requested. In that case, step S25 is reached.

In step S25, in response to the apparatus information request software cell received in step S24, the information exchange section 251 notifies the apparatus information it possesses to the information processing apparatus 11 that requested notification of apparatus information. This brings an end to the network connecting process. More specifically, the information exchange section 251 reads its own apparatus information from the main memory 52. The information exchange section 251 proceeds to create an apparatus information notification software cell. In the cell, the DMA command area is set with a status return command indicating the notification of apparatus information; the sender ID area and responder ID area are both set with the sender/receiver ID of this apparatus hosting the information exchange section 251; the destination ID area is set with the sender/receiver ID of the information processing apparatus 11 that requested notification of apparatus information; and the data area is set with the apparatus information about this section-hosting apparatus. The information exchange section 251 sends the apparatus information notification software cell thus created onto the network 13 through the network input/output driver 231.

It might happen that the notification of apparatus information is not found to be requested in step S24, i.e., that with no other information processing apparatus 11 connected to the network 13, an apparatus information request software cell has not been sent out. In that case, step S25 is skipped and the network connecting process is brought to an end.

Described below in reference to the flowchart of Fig. 11 is a network connection detecting process performed by an information processing apparatus 11 currently connected to the network 13 in order to detect another apparatus that is connected anew to the network 13.

In step S41, the information exchange section 151 detects that another apparatus is newly connected to the network 13. More specifically, the information exchange section 151 receives over the network 13 and through the network input/output driver 131 one of two cells: an apparatus information request software cell sent by the apparatus information 11 newly connected to the network 13 as discussed above in connection with step S2 of Fig. 7; or a network connection notification software cell sent by an information processing stand-in-only apparatus 12 connected anew to the network 13 as described above in connection with step S23 of Fig. 10. Reception of the cell allows the information exchange section 151 to detect the newly established connection of another apparatus with the network 13.

In step S42, the information exchange section 151 checks to determine whether notification of apparatus information has been requested. If notification of apparatus information is found to be requested, i.e., if in step S41 an apparatus information request software cell is found to be received from an information processing apparatus 11 connected anew to the network 13, then step S43 is reached.

In step S43, as in step S12 of Fig. 7, the newly connected information processing apparatus 11 is notified of the apparatus information by this currently connected apparatus.

If in step S42 notification of apparatus information is not found to be requested, i.e., if in step S41 a network connection notification software cell is found to be received from an information processing stand-in-only apparatus 12 connected anew to the network 13, then step S43 is skipped and step S44 is reached.

In step S44, the information exchange section 151 requests notification of apparatus information from the apparatus newly connected to the network 13. More specifically, the information exchange section 151 creates an apparatus information request software cell. In the cell, the sender ID area and responder ID area are both set with the sender/receiver ID of this apparatus hosting the information exchange section 151, and the destination ID area is set with the sender/receiver ID of the apparatus newly connected to the network 13. The information exchange section 151 sends the apparatus information request software cell thus created onto the network 13 through the network input/output driver 131.

In step S45, the apparatus information table management section 161 updates the apparatus information table and brings the network connection detecting process to an end. More specifically, the information exchange section 151 receives one of two software cells: either an apparatus information notification software cell sent by an information processing apparatus 11 connected anew to the network 13 in response to the apparatus information request software cell sent in step S44, as discussed above in connection with step S12 of Fig. 7; or an apparatus information notification software cell sent by an information processing stand-in-only apparatus 12 newly connected to the network 13, as described above in connection with step S25 of Fig. 10. The information exchange section 151 supplies the apparatus information table management section 161 with the apparatus information included in the received apparatus information notification software cell.

Based on the apparatus information thus acquired, the apparatus information table management section 161 adds the information about the apparatus newly connected with the network 13 to the apparatus information table held in the main memory 22.

Described below in reference to the flowchart of Fig. 12 is the network connection detecting process performed by an information processing stand-in-only apparatus 12 currently connected to the network 13 in order to detect another apparatus that is connected anew to the network 13.

In step S61, the information exchange section 251 detects another apparatus that is connected anew to the network 13. More specifically, the information exchange section 251 receives over the network 13 and through the network input/output driver 231 one of two software cells: an apparatus information request software cell sent by the apparatus information 11 newly connected to the network 13 as discussed above in connection with step S2 of Fig. 7; or a network connection notification software cell sent by an information processing stand-in-only apparatus 12 connected anew to the network 13 as described above in connection with step S23 of Fig. 10. Reception of the cell allows the information exchange section 251 to detect the newly established connection of another apparatus with the network 13.

In step S62, the information exchange section 251 checks to determine whether notification of apparatus information has been requested. If notification of apparatus information is found to be requested, i.e., if in step S61 an apparatus information request software cell is found to be received from an information processing apparatus 11 connected anew to the network 13, then step S63 is reached.

In step S63, as in step S25 of Fig. 10, the newly connected information processing apparatus 11 is notified of the apparatus information by this currently connected apparatus. This brings the network connection detecting process to an end.

If in step S62 notification of apparatus information is not found to be requested, i.e., if in step S61 a network connection notification software cell is found to be received from an information processing stand-in-only apparatus 12 connected anew to the network 13, then step S63 is skipped and the network connection detecting process is brought to an end.

In the manner described above, the information processing apparatus 11 exchanges apparatus information with the other information processing apparatuses 11 connected to the network 13 or acquires apparatus information from the information processing stand-in-only apparatus 12 in order to create or update the apparatus information table, thereby grasping the capabilities and functionality of the other apparatuses connected to the network 13. Since the information processing stand-in-only apparatus 12 is kept from receiving apparatus information from any other apparatus, the traffic on the network 13 is alleviated.

The information exchange section 151 of each information processing apparatus 11 sends periodically an apparatus information request software cell onto the network 13 regardless of the section-holding apparatus 11 acting as the master apparatus or as a slave apparatus. The software cell transmission is performed to acquire the apparatus information about the other networked apparatuses for supervision of their status. If any change is detected in the connection status of the network 13, information about the change is notified to the apparatus information table management section 161 so that the apparatus information table may be updated accordingly.

In the event of changes in main memory usage or in sub-processor utilization, the information exchange section 151 of each information processing apparatus 11 or the information exchange section 251 of each information processing stand-in-only apparatus 12, each apparatus serving as a slave apparatus, sends an apparatus information notification software cell to the master apparatus or to the other slave apparatuses as needed. This allows the master apparatus continuously to grasp the status of the other apparatuses.

If the master apparatus is disconnected from the network 13, then one of the information processing apparatuses 11 connected to the network 13, illustratively one with the smallest apparatus ID, may be newly arranged to act as the master apparatus.

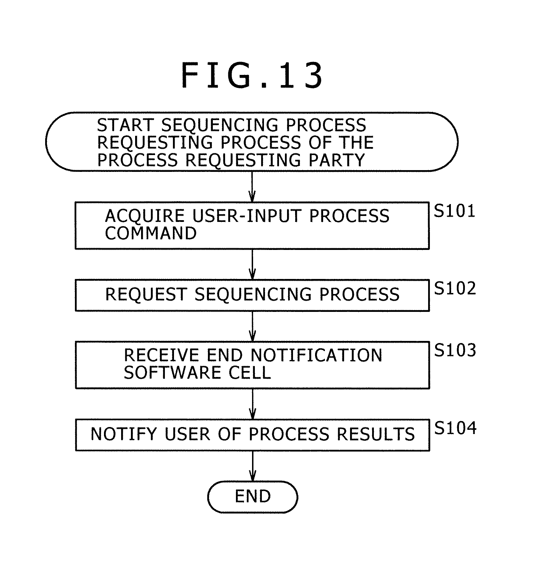

The distributed processing performed by the information processing system 1 will now be described in reference to Figs. 13 through 17. For the description that follows, it is assumed that the processes discussed above with reference to Figs. 7 through 12 have been completed and that one of the information processing apparatuses 11 connected to the network 13 is acting as the master apparatus. The ensuing description also presupposes that the user orders execution of processes by operating an operation device, not shown, attached to one of the information processing apparatuses 11 serving as slave apparatuses. Furthermore, the information processing apparatus 11 acting as the master apparatus will be referred to simply as the master apparatus, and the information processing apparatus 11 through which the user orders execution of a given process will be called the process requesting party.

Described below with reference to the flowchart of Fig. 13 is a sequence process requesting process executed by the information processing apparatus 12 acting as the process requesting party.

In step S101, the sub-processor control section 171 acquires the process command input by the user operating an operation device, not shown, at the process requesting party. The sub-processor control section 171 supplies the acquired command to the distributed processing manager 114.

In step S102, the sequencing process request section 185 requests the master apparatus to execute a sequencing process. More specifically, the sequencing process request section 185 ascertains a series of processes (sequencing process) which cannot be performed by this apparatus and which some other apparatus needs to be requested to carry out.

The sequencing process request section 185 creates a software cell called a sequencing process request software cell. In the cell, the DMA command area is set with a process request command; the sender ID area and responder ID area are both set with the sender/receiver ID of this process requesting party; the destination ID area is set with the sender/receiver ID of the master apparatus; and the data area is set with information indicative of the sequencing process, the data necessary for executing the sequencing process, data attributes, and various parameters. Illustratively, the information set to indicate the sequencing process is information that can be recognized by the master apparatus (e.g., information representative of high image quality AV data reproduction or MPEG-2 (Moving Picture Experts Group Phase 2) decoding or encoding). The sequencing process request section 185 sends the sequencing process request software cell thus created onto the network 13 through the network input/output driver 131.

As will be discussed later in connection with step S121 of Fig. 14, the master apparatus receives the sequencing process request software cell from the process requesting party.

In step S103, the sequencing process request section 185 receives over the network 13 and through the network input/output driver 131 a software cell that notifies an end of the sequencing process (the cell is called the end notification software cell). The software cell is sent by the master apparatus, as will be described later in connection with step S141 of Fig. 15.

In step S104, the main CPU 31 of the process requesting party notifies the user of the result of the processing. This brings the sequencing process requesting process to an end. More specifically, the sequencing process request section 185 supplies data indicative of the result of the sequencing process to the program (e.g., function program) being executed by the main CPU 31 or by the sub-processor 32 in response to the command input by the user in step S101, the data being found in the data area of the end notification software cell. Based on the supplied data, the program being performed by the main CPU 31 or by the sub-processor 32 carries out a predetermined process and notifies the user of the result of the processing.

Described below in reference to the flowchart of Fig. 14 is a sequencing process executing process carried out by the information processing apparatus 11 acting as the master apparatus in conjunction with the sequencing processing requesting process performed by the process requesting party as described above with reference to Fig. 13.

In step S121, the sequencing process management section 181 receives a sequencing process request software cell that was sent by the process requesting party in step S102 of Fig. 13 as described above. The sequencing process management section 181 then supplies the function program determination section 182 with information indicative of the sequencing process of which the execution is requested by the process requesting party.

In step S122, the function program determination section 182 determines the function programs needed to execute the sequencing process whose execution is requested by the process requesting party (the programs are called the execution-oriented function programs). Illustratively, the function program determination section 182 manages a correspondence table listing the function programs with regard to the sequencing processes of which the execution may be requested by slave apparatuses. The function program determination section 182 determines relevant execution-oriented function programs based on that correspondence table. The function program determination section 182 supplies the distributed processing apparatus determination section 183 with information indicating the execution-oriented function programs thus determined.

In step S123, the distributed processing apparatus determination section 183 determines the information processing stand-in-only apparatus 12 that is requested to execute processing. More specifically, the distributed processing apparatus determination section 183 retrieves the requirements regarding each execution-oriented function program. At the same time, the distributed processing apparatus determination section 183 references the apparatus information table held in the main memory 22 and reads from the table the apparatus information about each information processing stand-in-only apparatus 12 connected to the network 13.

The distributed processing apparatus determination section 183 compares consecutively the apparatus information about each information processing stand-in-only apparatus 12 with the requirements to be met for execution of each execution-oriented function program. In so doing, the distributed processing apparatus determination section 183 determines the information processing stand-in-only apparatus 12 whose command set ROM 53 retains the function programs which are ordered to be executed by function execution commands designated in the requirements and which perform processes equivalent to those of the execution-oriented function programs. The determined apparatus should also meet the other requirements involved. If a plurality of information processing stand-in-only apparatuses 12 are selected with regard to one execution-oriented function program, then the distributed processing apparatus determination section 183 illustratively decides on the apparatus 12 with the smallest apparatus ID. The distributed processing apparatus determination section 183 proceeds to supply the distributed processing management section 184 with information indicating the information processing stand-in-only apparatus 12 requested to execute the processing.

In step S124, based on the result of step S123, the distributed processing apparatus determination section 183 checks to determine whether there is any execution-oriented function program yet to be assigned any apparatus requested to execute its function. If there is detected an execution-oriented function program yet to be assigned the apparatus requested to execute its function, i.e., if there is a process yet to be assigned any information processing stand-in-only apparatus 12 connected to the network 13, then step S125 is reached.

In step S125, the distributed processing apparatus determination section 183 determines the information processing apparatus 11 requested to execute the processing. More specifically, the distributed processing apparatus determination section 183 retrieves the requirements regarding each execution-oriented function program yet to be assigned any apparatus requested to execute its function. At the same time, the distributed processing apparatus determination section 183 references the apparatus information table held in the main memory 22 and reads from the table the apparatus information about each information processing apparatus 11 connected to the network 13.

The distributed processing apparatus determination section 183 compares consecutively the apparatus information about each information processing apparatus 11 with the requirements to be met for execution of each execution-oriented function program. If a plurality of information processing apparatuses 11 are selected with regard to one execution-oriented function program, then the distributed processing apparatus determination section 183 illustratively decides on the apparatus 11 with the smallest apparatus ID. The distributed processing apparatus determination section 183 proceeds to supply the distributed processing management section 184 with information indicating the information processing apparatus 11 requested to perform the execution-oriented function program in question.

In step S126, the distributed processing management section 184 creates a software cell for loading execution-oriented function programs into the information processing apparatus 11 that was determined in step S125 (the cell is called the program load software cell). More specifically, the program load software cell created by the distributed processing management section 184 includes the following settings: the DMA command area of the cell is set with a load command and an address of the main memory 22 if the execution-oriented functions are to be loaded into the main memory 22 of the destination information processing apparatus 11; if the execution-oriented function programs are to be loaded into the sub-processor 32 of the destination information processing apparatus 11, then the load command in the DMA command area is supplemented with the sub-processor ID of the sub-processor 32 in question as well as an address of the local storage 42 of the load destination sub-processor 32. The sender ID area and responder ID area in the cell are both set with the sender/receiver ID of the information processing apparatus 11 hosting the distributed processing management section 184; the destination ID area is set with the sender/receiver ID of the information processing apparatus 11 into which to load the execution-oriented function programs; and the program area is set with the execution-oriented function programs to be loaded.

The execution-oriented function programs to be sent are stored illustratively in the external recording device 23 of the master apparatus. As needed, the master apparatus may acquire the execution-oriented function programs from another information processing apparatus 11.

In step S127, the distributed processing management section 184 sends the created program load software cell onto the network 13 through the network input/output driver 131.

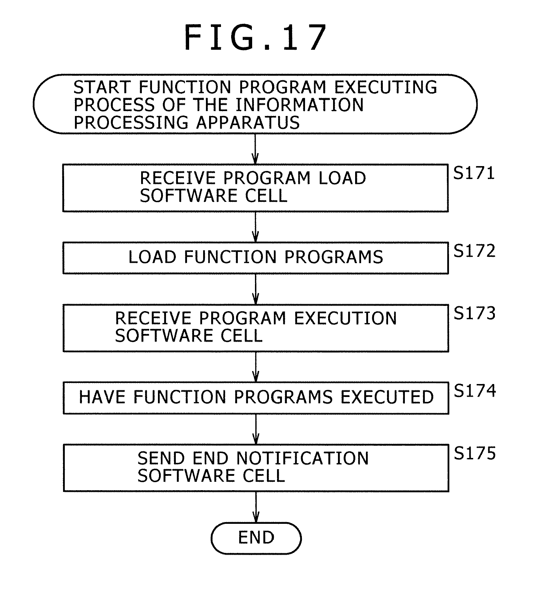

The destination information processing apparatus 11 receives the program load software cell from the master apparatus, as will be discussed later in connection with step S171 of Fig. 17.

In step S128, the distributed processing management section 184 updates the distributed processing management table. More particularly, the distributed processing management section 184 writes information called function program load information to the distributed processing management table. The function program load information includes the function program IDs of the functions programs sent by the program load software cell, the apparatus ID of the load destination information processing apparatus 11, and either the address of the main memory 22 or the sub-processor ID of the sub-processor 32 plus the address of the local storage 42.

If in step S124 there is found no function-oriented function program yet to be assigned an apparatus requested to execute its function, i.e., if the information processing stand-in-only apparatus 12 is requested to execute all processes, then steps S125 through S128 are skipped and step S129 is reached.

In step S129, the distributed processing management section 184 selects one execution-oriented function program. In step S130, the distributed processing management section 184 checks to determine whether the process to be executed by the selected execution-oriented function program requests the information processing stand-in-only apparatus 12 to perform the execution. If the process is found requesting the information processing stand-in-only apparatus 12 to perform its execution, then step S131 is reached.

In step S131, the distributed processing management section 184 creates a software cell for executing the function execution command (the cell is called the command execution software cell). More specifically, the distributed processing management section 184 acquires from the sequencing process management section 181 the sequencing process request software cell that was sent by the process requesting party.

The distributed processing management section 184 proceeds to create a command execution software cell. In the cell, the DMA command area includes: the function execution command to order execution of a function program which performs the same process as that of the execution-oriented function program selected in step S129 and which is stored in the command set ROM 53 of the information processing stand-in-only apparatus 12; the sub-processor ID of the sub-processor 62 for executing the function program of which the execution is ordered by the function execution command; and the address in the local storage 72 of the sub-processor 63 to which the function program is loaded. The sender ID area and responder ID area in the software cell are both set with the sender/receiver ID of the apparatus hosting the distributed processing management section 184; and the destination ID area in the cell is set with the sender/receiver ID of the information processing stand-in-only apparatus 12 requested to execute the function execution command. Furthermore, the cell interface area in the command execution software cell is set with the number of sub-processors 62 needed to execute the function execution command and with the memory usage of the local storage 72 for the sub-processors 63; and the data area in the cell is set with various parameters necessary for executing the function execution command. These parameters were discussed above in reference to Fig. 9.

In step S132, the distributed processing management section 184 sends the created command execution software cell onto the network 13 through the network input/output driver 131. Control is then passed on to step S135.

The destination information processing stand-in-only apparatus 12 receives the command execution software cell from the master apparatus, as will be discussed later in connection with step S151 of Fig. 16.

If in step S130 the process is found requesting the information processing apparatus 11 to perform its execution, then step S133 is reached.

In step S133, the distributed processing management section 184 creates a software cell for requesting execution of the execution-oriented function program selected in step S129 (the cell is called the program execution software cell). More specifically, the distributed processing management section 184 acquires from the sequencing process management section 181 the sequencing process request software cell sent by the process requesting party.

The distributed processing management section 184 creates the program execution software cell. In the cell, the DMA command area is set with a kick command, the sub-processor ID of the sub-processor 32 for executing the execution-oriented function program, and a program counter indicating information about the address from which to start executing the execution-oriented function program; the sender ID area and responder ID area are both set with the sender/receiver ID of the apparatus hosting the distributed processing management section 184; and the destination ID area is set with the sender/receiver ID of the information processing apparatus 11 requested to carry out the execution-oriented function program. Also in the cell, the cell interface area is set with the number of sub-processors 32 needed to execute the execution-oriented function program and with the memory usage of the local storage 42 for the sub-processors 32; and the data area is set with the data and parameters necessary for carrying out the execution-oriented function program.

In step S134, the distributed processing management section 184 sends the created program execution software cell onto the network 13 through the network input/output driver 131. Control is then passed on to step S135.

The destination information processing apparatus 11 receives the program execution software cell from the master apparatus, as will be described later in connection with step S173 of Fig. 17.

In step S135, the distributed processing management section 184 updates the distributed processing management table. More specifically, the distributed processing management section 184 writes information called function program execution information to the distributed processing management table. The function program execution information includes: the function program ID of the function program (function execution command) of which the execution is requested, and either the apparatus ID of the information processing stand-in-only apparatus 12 requested to execute the function execution command as well as the sub-processor ID of the sub-processor 62 involved, or the apparatus ID of the information processing apparatus 11 requested to execute the function execution command along with the sub-processor ID of the sub-processor 62 involved.

In step S136, the distributed processing management section 184 checks to determine whether the execution of all processes has been requested. If the execution of all processes has yet to be requested, i.e., if the execution of all execution-oriented function programs determined in step S122 has yet to be requested, then step S129 is reached again. Steps S129 through S136 are repeated until the execution of all processes is found to have been requested in step S136, i.e., until the information processing apparatus 11 serving as a slave apparatus or the information processing stand-in-only apparatus is requested to execute all execution-oriented function programs. Where necessary, the master apparatus itself may carry out the execution function program.

If in step S136 the execution of all processes is found to have been requested, then step S137 is reached.

In step S137, the distributed processing management section 184 checks to determine whether an end notification software cell is received. More specifically, the distributed processing management section 184 may receive over the network 13 and through the network input/output driver 131 one of two cells: either an end notification software cell sent by the information processing stand-in-only apparatus 12, as will be discussed later in connection with step S154 of Fig. 16, in response to the command execution software cell sent in step S132, the apparatus 12 having been requested to execute the function execution command; or an end notification software cell sent by the information processing apparatus 11, as will be discussed later in connection with step S175 of Fig. 17, in response to the command execution software cell sent in step S134, the apparatus 11 having been requested to execute the execution-oriented function program. If one of the above two cells is found to have been received, step S138 is reached.

In step S138, the distributed processing management section 184 stores the received end notification software cell into the main memory 22.

In step S139, the distributed processing management section 184 updates the distributed processing management table. More specifically, the distributed processing management section 184 deletes from the distributed processing management table the function program execution information about the execution-oriented function programs of which the end is notified by the end notification software cell received in step S137.

In step S140, the distributed processing management section 184 checks to determine whether the execution of all processes is completed. If the execution of all processes has yet to be completed, i.e., if all end notification software cells have yet to be received with regard to all command execution software cells and program execution software cells that have been sent out, then step S137 is reached again. Steps S137 through S140 are repeated until the execution of all processes is found to be completed n step S140.

If in step S140 the execution of all processes is found to be completed, i.e., if all end notification software cells are found to be received with regard to all command execution software cells and program execution software cells that have been sent out, then step S141 is reached.

In step S141, the sequencing process management section 181 sends an end notification software cell onto the network 13. This brings the sequencing process execution process to an end. More specifically, the distributed processing management section 184 supplies the sequencing process management section 181 with information indicating that the execution of all execution-oriented function programs has ended.

The sequencing process management section 181 creates an end notification software cell. In the cell, the DMA command area is set with a status return command indicating the end of the sequencing process; the sender ID area and responder ID area are both set with the sender/receiver ID of the apparatus hosting this section 181; and the destination ID area is set with the sender/receiver ID of the process requesting party. Furthermore, the data area in this end notification software cell is set with data which indicates the result of the sequencing process and which was created on the basis of the processing result found in the data area of the end notification software cell received from each apparatus requested to execute processing. The sequencing process management section 181 sends the created end notification software cell onto the network 13 through the network input/output driver 131.

Described below in reference to the flowchart of Fig. 16 is a function execution command executing process performed by the information processing stand-in-only apparatus 12 requested to execute a function execution command in conjunction with the sequencing process executing process carried out by the master apparatus as shown in Figs. 14 and 15.

In step S151, the sub-processor control section 271 receives over the network 13 and through the network input/output driver 231 the command execution software cell sent by the master apparatus as described above in connection with step S132 of Fig. 15.

In step S152, the sub-processor control section 271 loads into the sub-processor 62 the function programs of which the execution is ordered by use of the function execution command. More specifically, the sub-processor control section 271 reads from the command set ROM 53 the function programs of which the execution is ordered by the function execution command placed in the command execution software cell. The sub-processor control section 271 then loads the retrieved function programs into the local storage 72 of the sub-processor 62 designated by the command execution software cell (the sub-processor is called the command execution sub-processor).

In step S153, the sub-processor control section 271 causes the command execution sub-processor to execute the function programs. More specifically, the sub-processor control section 271 supplies the command execution sub-processor with the parameters needed to carry out the function programs included in the command execution software cell. Under control of the sub-processor control section 271, the command execution sub-processor executes the function programs loaded into this sub-processor.

In step S154, the sub-processor control section 271 sends to the master apparatus an end notification software cell with regard to the command execution software cell received in step S151. This brings the function execution command executing process to an end. More specifically, at the end of the execution of the function programs, the command execution sub-processor supplies the sub-processor control section 271 with data indicating the result of the processing.

The sub-processor control section 271 creates an end notification software cell. In the cell, the DMA command area is set with a status return command notifying that the execution of the function execution command has ended; the sender ID area and responder ID area are both set with the sender/receiver ID of the apparatus hosting this section 271; the destination ID area is set with the sender/receiver ID of the master apparatus; and the data area is set with data which indicates, among others, the processing result acquired from the command execution sub-processor. The sub-processor control section 271 sends the created end notification software cell onto the network 13 through the network input/output driver 231.

Described below in reference to the flowchart of Fig. 17 is a function program executing process performed by the information processing apparatus 11 requested to carry out execution-oriented function programs in conjunction with the sequencing process executing process carried out by the master apparatus as shown in Figs. 14 and 15.

In step S171, the sub-processor control section 171 receives over the network 13 and through the network input/output driver 131 the program load software cell sent by the master apparatus as described above in connection with step S127 of Fig. 14.

In step S172, the sub-processor control section 171 loads function programs (execution-oriented function programs). More specifically, the sub-processor control section 171 loads the function programs, found in the program area of the program load software cell, into either the main memory 22 or the local storage 42 of the sub-processor 32 as designated by the program load software cell.

In step S173, the sub-processor control section 171 receives over the network 13 and through the network input/output driver 131 the program execution software cell sent by the master apparatus as described above in connection with step S134 of Fig. 15.

In step S174, the sub-processor control section 171 executes the function programs (execution-oriented function programs). More specifically, the sub-processor control section 171 supplies relevant data and parameters to the sub-processor 32 into which the function programs were loaded in step S172. The supplied data and parameters are found in the data area of the program execution software cell and are needed to execute the function programs. Under control of the sub-processor control section 171, the program execution sub-processor executes the function programs loaded in step S172.

If the main CPU 31 is designated to execute the function programs by the program execution software cell, then the main CPU 31 will carry out the function programs.

In step S175, the sub-processor control section 171 sends to the master apparatus an end notification software cell with regard to the program execution software cell received in step S173. This brings the function program executing process to an end. More specifically, at the end of the execution of the function programs, the program execution sub-processor supplies the sub-processor control section 171 with data indicating the result of the processing.

The sub-processor control section 171 creates an end notification software cell. In the cell, the DMA command area is set with a status return command notifying that the execution of the function programs has ended; the sender ID area and responder ID area are both set with the sender/receiver ID of the apparatus hosting this section 171; and the data area is set with data which indicates, among others, the processing result acquired from the program execution sub-processor. The sub-processor control section 171 sends the created end notification software cell onto the network 13 through the network input/output driver 131.

As described above, where distributed processing is performed by the information processing system 1, each information processing stand-in-only apparatus 12 configured in the system carries out a particular process it specializes in, while each information processing apparatus 11 in the system performs other general-purpose processes. This arrangement is intended to let each of the apparatuses configured in the system carry out the process optimally fit for the apparatus in question. The resources of the configured apparatuses connected to the network 13 are utilized more efficiently than ever and the processing is executed at higher speeds and in a more efficient manner than before. When the information processing stand-in-only apparatus 12 is requested to perform its process, there is no need to send a function program to that apparatus. This translates into reduced quantities of data being transferred over the network 13. The traffic on the network 13 is thus alleviated.

The functionality of the information processing system 1 is easily expanded by supplementing it with necessary function programs for execution by the information processing apparatus 11. Where information processing stand-in-only apparatuses 12 are added to the information processing system 1 in order to take over some processes carried out by the information processing apparatus 11, the throughput of the entire information processing system 1 is boosted at lower costs than if the performance of the information processing apparatus 11 were arranged to be enhanced for general-purpose processing. Furthermore, the function programs for each information processing stand-in-only apparatus 12 are smaller in scale than those for the information processing apparatus 11. That means the same function is implemented by the information processing stand-in-only apparatus 12 with a significantly smaller number of man-hours for program development than by the information processing apparatus 11.

In the information processing system 1, the apparatuses other than the information processing apparatus 11 acting as the master apparatus may be solely composed of either information processing apparatuses 11 or information processing stand-in-only apparatuses 12.

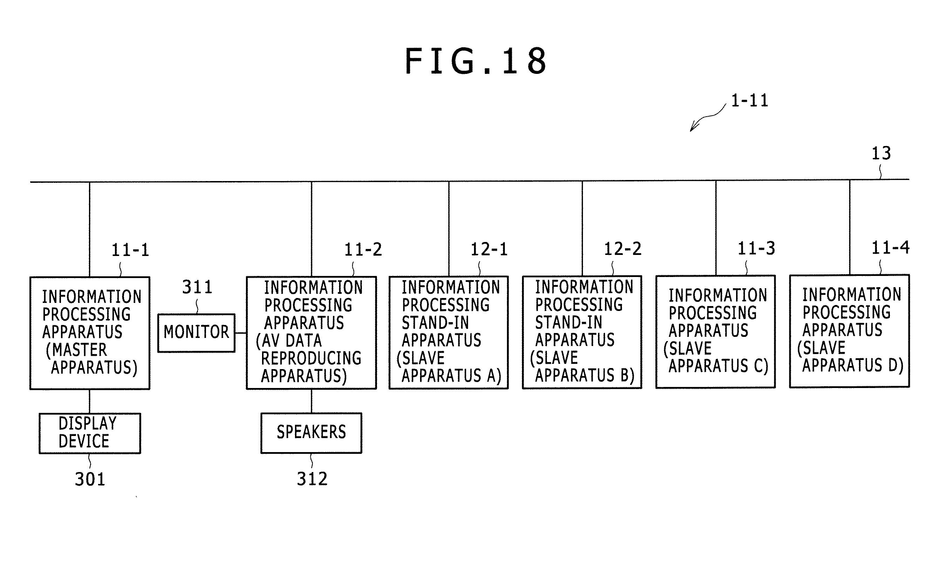

Described below in reference to Figs. 18 through 36 are more specific examples of processing carried out by the information processing system 1 embodying the present invention 1.

Fig. 18 is a block diagram showing another information processing system 1-11, a variation of the information processing system 1 embodying the invention. In the information processing system 1-11, information processing apparatuses 11-1 through 11-4 and information processing stand-in-only apparatuses 12-1 and 12-2 are interconnected via the network 13.

The ensuing description presupposes that in the information processing system 1-11, the information processing apparatus 11-1 acting as the master apparatus establishes connection beforehand with the network 13 by performing the connecting process discussed above in reference to Figs. 7 through 12, with the information processing apparatuses 11-2 through 11-4 and the information processing stand-in-only apparatuses 12-1 and 12-2 serving as slave apparatuses. It is also assumed that the information processing apparatus 11-2 is an AV data reproducing apparatus (e.g., a DVD player or a VCR) possessing the above-described communication and distributed processing functions of the apparatus 11 and capable of reproducing AV (Audio Visual) data recorded illustratively in the external recording device 23. The information processing apparatus 11-1 acting as the master apparatus is furnished with a display device 301 such as an LCD (Liquid Crystal Display) displaying the progress status of distributed processing. A monitor 311 and speakers 102 are connected to the information processing apparatus 11-2 operating as the AV data reproducing apparatus.

In the description that follows, the information processing apparatus 11-1 may be referred to as the master apparatus, the information processing apparatus 11-2 as the AV data reproducing apparatus, the information processing stand-in-only apparatus 12-1 as a slave apparatus A, the information processing stand-in-only apparatus 12-2 as a slave apparatus B, the information processing apparatus 11-3 as a slave apparatus C, and the information processing apparatus 11-4 as a slave apparatus D where appropriate.

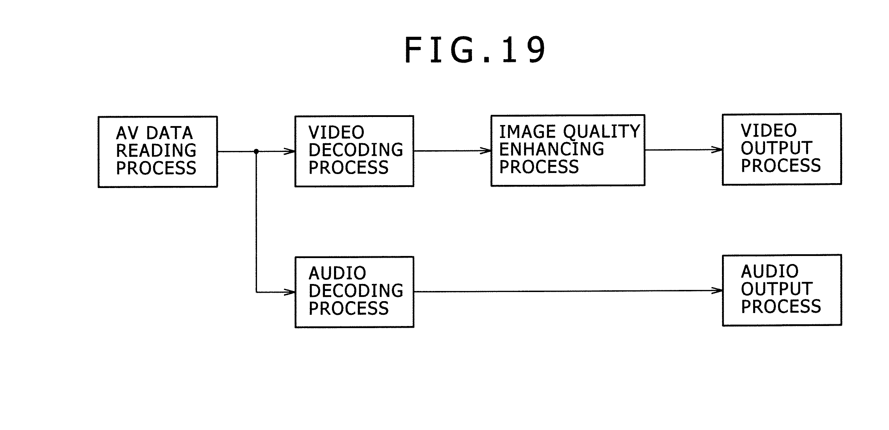

Fig. 19 is a schematic flow diagram showing the process flow of an AV data reproduction function implemented by the information processing system 1-11. The AV data reproduction function is constituted by the following processes: an AV data reading process for reading AV data from the external recording device 23; a video decoding process for decoding video data isolated from the retrieved AV data; an image quality enhancing process such as reduction of noise in the decoded video data; a video output process for causing the monitor 311 to display images based on the video data having undergone the image quality enhancing process; an audio decoding process for decoding audio data isolated from the AV data; and an audio output process for causing the speakers 312 to output sounds based on the decoded audio data.

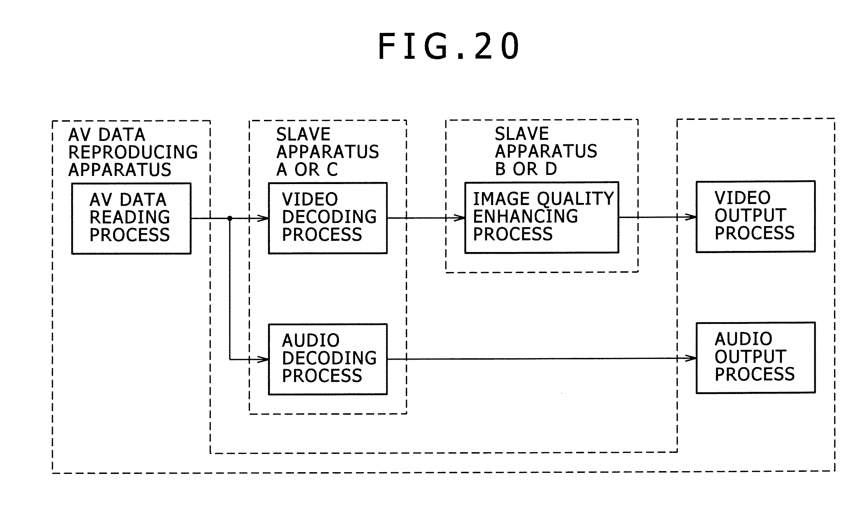

Fig. 20 is a schematic view showing distribution of the processes making up the AV data reproduction function and executed by the information processing system 1-11.

The information processing apparatus 11-2 operating as the AV data reproducing apparatus performs the AV data reading process, video output process, and audio output process. The information processing apparatus 11-2 carries out the video output process and audio output process by executing respectively a video output processing program and an audio output processing program, two of the function programs kept by the apparatus 11-2.

The information processing stand-in-only apparatus 12-1 serving as the slave apparatus A has two sub-processors for performing the video and audio decoding processes: a sub-processor 62 customized to decode video data (this sub-processor is called the video decoding sub-processor), and a sub-processor 62 tailored to decode audio data (this sub-processor is called the audio decoding sub-processor).

The video decoding sub-processor is illustratively a DSP that executes a relevant function program stored in the command set ROM 53 by carrying out the function program of which the execution is designated by an mpeg2_video_decode command. The audio decoding sub-processor may also be a DSP that performs a relevant function program held in the command set ROM 53 by carrying out the function program of which the execution is designated by an mpeg2_video_decode command.

The information processing stand-in-only apparatus 12-2 serving as the slave apparatus B has a sub-processor 62 customized to perform the image quality enhancing process on video data (this sub-processor is called the image quality enhancing sub-processor). The image quality enhancing sub-processor is illustratively a DSP that executes a relevant function program kept in the command set ROM 53 by carrying out the function program of which the execution is designated by a video_noise_reduction command.

The information processing apparatus 11-3 serving as the slave apparatus C has specifications powerful enough to perform the video and audio decoding processes. As needed, the slave apparatus C thus decodes video and audio data in place of the slave apparatus A. The information processing apparatus 11-3 performs the video decoding process by carrying out the video decoding program, one of the function programs, and conducts the audio decoding process by executing the audio decoding program, another function program. In the ensuing description, one sub-processor 32 possessed by the slave apparatus C and requested by the master apparatus to carry out the video decoding apparatus may be referred to as the video decoding process requested sub-processor; and another sub-processor 32 possessed by the slave apparatus C and requested by the master apparatus to execute the audio decoding process may be called the audio decoding process requested sub-processor where appropriate.

The information processing apparatus 11-4 serving as the slave apparatus D has specifications powerful enough to perform the image quality enhancing process. As needed, the slave apparatus D thus carries out the process for image quality enhancement in place of the slave apparatus B. The information processing apparatus 11-4 performs the image quality enhancing process by executing the image quality enhancing program, one of the function programs. In the ensuing description, one sub-processor 32 possessed by the slave apparatus D and requested by the master apparatus to carry out the image quality enhancing process may be referred to as the image quality enhancing process requested sub-processor where appropriate.

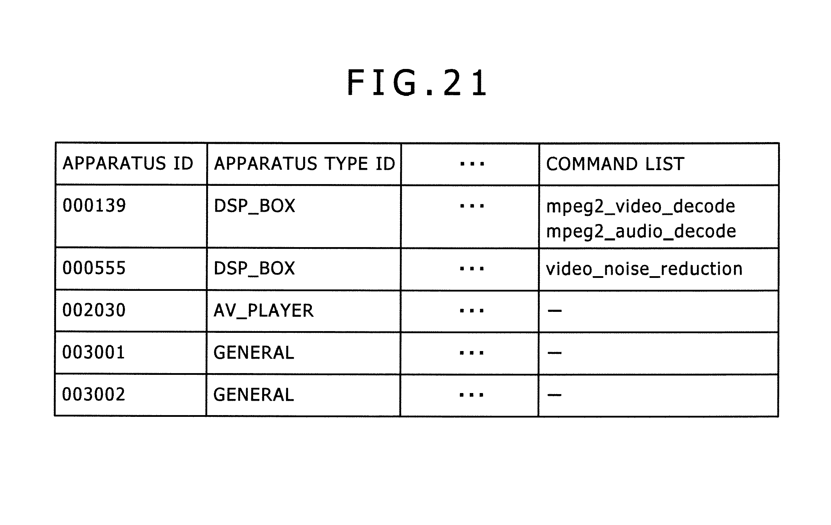

Fig. 21 is a schematic view showing part of a typical apparatus information table kept in the main memory 22 of the information processing apparatus 11-1 acting as the master apparatus following execution of the processes described above in reference to Figs. 7 through 12.

The apparatus information table includes apparatus information about the slave apparatus A. This apparatus information contains an apparatus ID "000139" identifying the slave apparatus A; an apparatus type ID "DSP_BOX" indicating that the slave apparatus A processes video and audio data; a function execution command "mpeg2_video decode" for causing the slave apparatus A to carry out the video decoding process; and a function execution command "mpeg2_audio_decode" for prompting the slave apparatus A to execute the audio decoding process.

The apparatus information table also includes apparatus information about the slave apparatus B. This apparatus information contains an apparatus ID "000555" identifying the slave apparatus B; an apparatus type ID "DSP_BOX" indicating that the slave apparatus B processes video and audio data; and a function execution command "video_noise_reduction" for causing the slave apparatus B to perform the image quality enhancing process.

The apparatus information table further includes apparatus information about the AV data reproducing apparatus. This apparatus information contains an apparatus ID "002030" identifying the AV data reproducing apparatus, and an apparatus type ID "AV_PLAYER" representing the AV data reproducing apparatus.

The apparatus information table also includes apparatus information about the slave apparatus C. This apparatus information contains an apparatus ID "003001" identifying the slave apparatus C, and an apparatus type ID "GENERAL" indicating that the slave apparatus C is a general-purpose apparatus not customized for any specific function.

The apparatus information table further includes apparatus information about the slave apparatus D. This apparatus information contains an apparatus ID "003002" identifying the slave apparatus D, and an apparatus type ID "GENERAL" indicating that the slave apparatus D is also a general-purpose apparatus not tailored for any specific function.

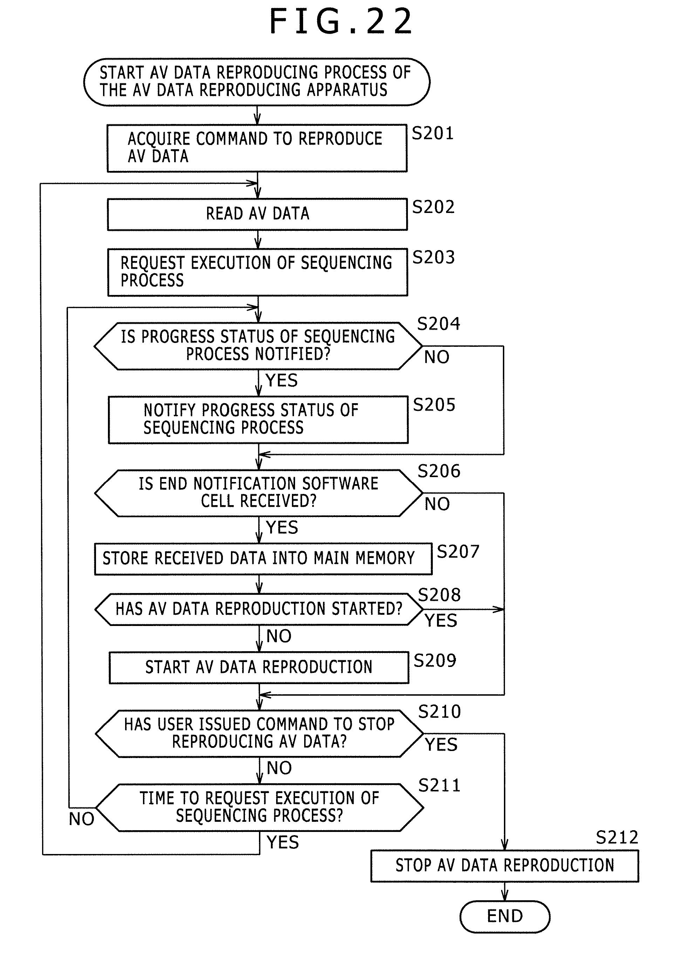

An AV data reproducing process of the information processing system 1-11 will now be described by referring to Figs. 22 through 36.

First to be described in reference to the flowchart of Fig. 22 is the AV data reproducing process performed by the information processing apparatus 11-2 operating as the AV data reproducing apparatus.

In step S201, the sub-processor control section 171 acquires an AV data reproduction command entered by the user operating an operation device, not shown, of the AV data reproducing apparatus. The sub-processor control section 171 feeds the acquired command to the distributed processing manager 114.

In step S202, the sequencing process request section 185 reads AV data from the external recording device 23. More specifically, under control of the sequencing process request section 185, the DMAC 33 reads a predetermined quantity of AV data (e.g., 20 seconds of data) from the external recording device 23 and supplies the retrieved data to the sequencing process request section 185.

In step S203, as in step S102 of Fig. 13, the master apparatus is requested to carry out a sequencing process. In a sequencing process request software cell sent to the master apparatus, the data area is set with diverse information: information indicating the sequencing process (e.g., information denoting a high image quality decoding process on AV data); AV data retrieved in step S202; and parameters necessary for decoding the AV data.

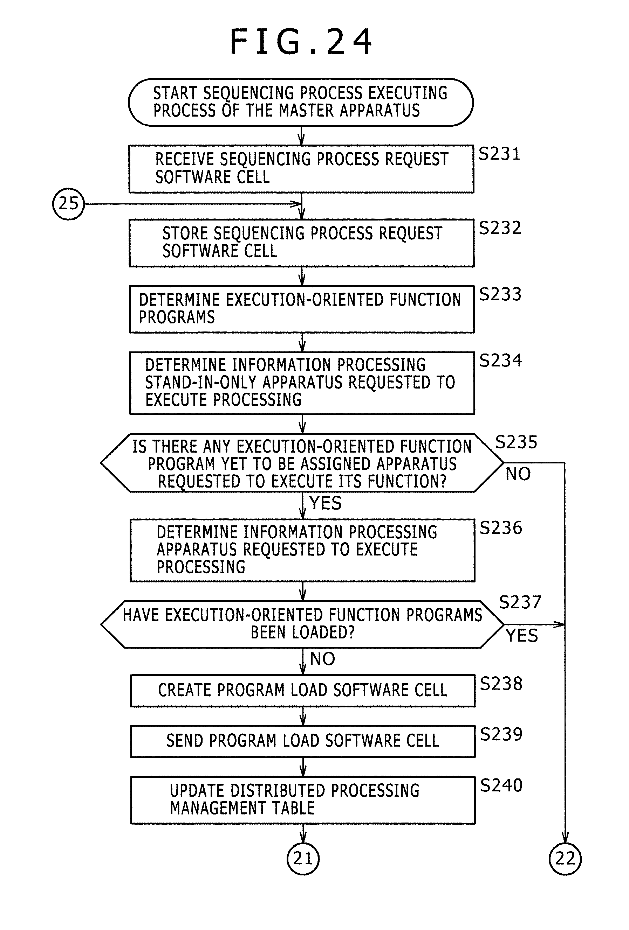

The master apparatus receives the sequencing process request software cell from the AV data reproducing apparatus, as will be discussed later in connection with step S231 of Fig. 24.

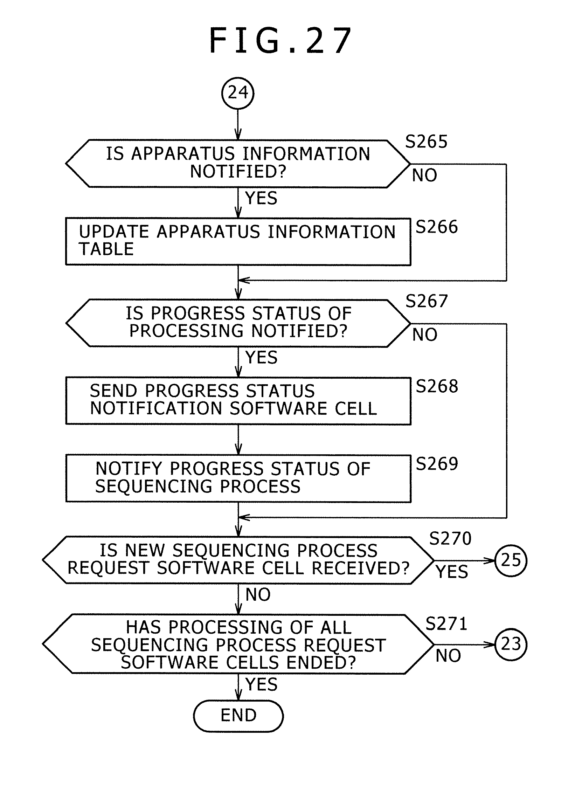

In step S204, the progress status notification section 186 checks to determine whether the progress status of the sequencing process is notified. More specifically, the progress status notification section 186 verifies notification of the progress status of the sequencing process upon receiving, over the network 13 and through the network input/output driver 131, a software cell sent by the master apparatus with a view to notifying the progress status of the sequencing process, as will be discussed later in connection with step S268 of Fig. 27 (the cell is called the progress status notification software cell). If the software cell is found to be received and the progress status of the sequencing process notified, step S205 is reached.

In step S205, the progress status notification section 186 gives notification of the progress status of the sequencing process based on the progress status notification software cell. More specifically, the data area in the progress status notification software cell is set with data indicative of the processes being performed by the slave apparatuses A through D and their progress status. Illustratively, the progress status of the video decoding process is represented by data in percentage points ranging from zero at which the process is started, to 100 at which the process is completed.

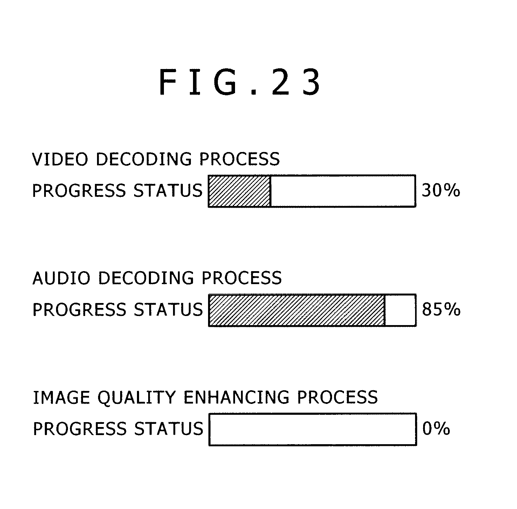

For example, under control of the progress status notification section 186, the monitor output driver 152 (Fig. 3) executed by the main CPU 31 of the AV data reproducing apparatus causes the monitor 311 to display the progress status of the ongoing processes in bar graphs as illustrated in Fig. 23. In the example of Fig. 23, the video decoding process is shown to have progressed 30 percent, audio decoding process 85 percent, and image quality enhancing process zero percent. When the user is thus informed of the progress status of the processes being performed, the stress the user may experience while waiting form the processing to end is alleviated appreciably. If any process is being halted because of an apparent apparatus failure, the user is notified thereof quickly and easily. In addition, when the progress status of the ongoing processes is presented individually, it is possible easily to pinpoint a bottleneck process hampering the progress of the entire performance.

If in step S204 the progress status of the sequencing process is not found notified, then step S205 is skipped and step S206 is reached.

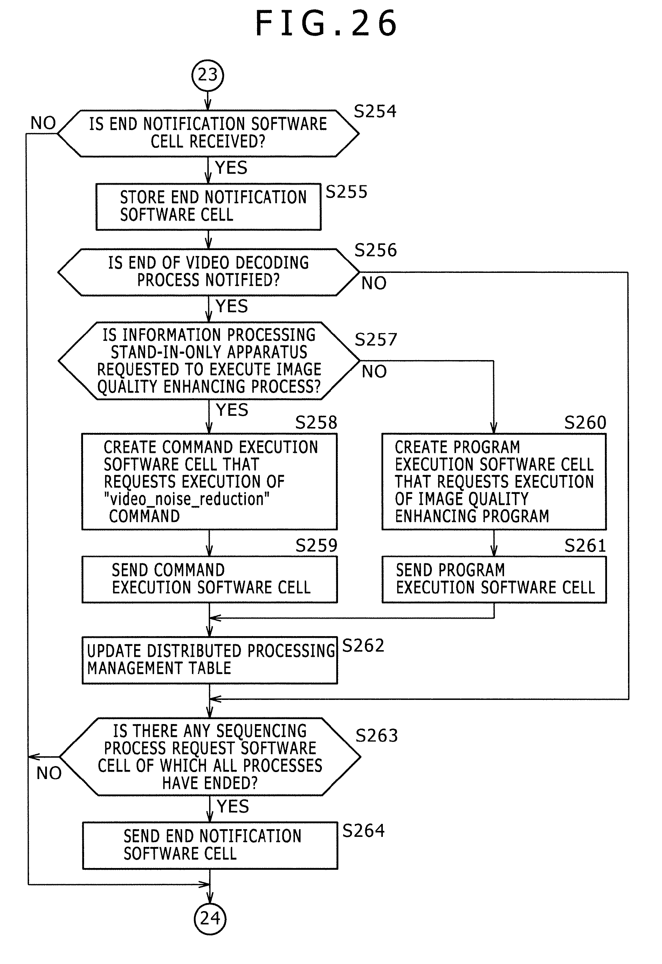

In step S206, the sequencing process request section 185 checks to determine whether an end notification software cell is received. If the sequencing process request section 185 determines that an end notification software cell sent by the master apparatus (as will be discussed later in connection with step S264 of Fig. 26) in response to the sequencing process request software cell sent in step S203 is received over the network 13 and through the network input/output driver 131, then step S207 is reached.

In step S207, the sequencing process request section 185 writes to the main memory 22 the data received from the master apparatus. More specifically, in the end notification software cell sent by the master apparatus, the data area is set with two kinds of data: video data decoded and having undergone the image quality enhancing process following isolation from the AV data held in the sequencing process request software cell by which the AV data reproducing apparatus requested execution of the sequencing process; and audio data decoded following isolation from the AV data. The sequencing process request section 185 places the resulting video and audio data into the main memory 22. That is, the main memory 22 is used as a buffer that temporarily accommodates the decoded video and audio data.

In step S208, the sub-processor control section 171 checks to determine whether AV data reproduction has started. If AV data reproduction is not found to have started, step S209 is reached.

In step S209, the sub-processor control section 171 starts reproducing the AV data. More specifically, the sub-processor control section 171 loads the video output program and audio output program retrieved from the external recording device 23 either into the main memory 22 or into the local storage 42 of a relevant sub-processor 32. The main CPU 31 or sub-processor 32 then starts executing the video output program and audio output program. The programs being executed process the video data in the main memory 22 before outputting the processed video data to the monitor 311, and process the audio data in the main memory 22 before outputting the processed audio data to the monitor 311. The monitor 311 starts displaying images based on the video data and the speakers 312 start outputting sounds on the basis of the audio data.

If in step S208 AV data reproduction is found to have been started already, then step S209 is skipped and step S210 is reached.

If in step S206 the end notification software cell is not found to be received, then steps S207 through S209 are skipped and step S210 is reached.

In step S210, the sub-processor control section 171 checks to determine whether the user has issued a command to reproduce AV data. If the user is not found to have issued the command to stop AV data reproduction, then step S211 is reached.

In step S211, the sequencing process request section 185 checks to determine whether it is time to request execution of the sequencing process. Illustratively, the sequencing process request section 185 requests the master apparatus to carry out the sequencing process (i.e., a high image quality decoding process on AV data) at appropriate times (e.g., at predetermined intervals; every time an end notification software cell is received from the master apparatus; or every time the amount of video and audio data held in the main memory 22 (buffer) drops below a predetermined level). If in step S211 now is found to be the right time to request execution of the sequencing process, then step S202 is reached again and the subsequent steps are repeated. That is, the master apparatus is requested to execute a new sequencing process.

If in step S211 now is not found to be the right time to request execution of the sequencing process, then step S204 is reached again and the subsequent steps are repeated.

If in step S210 the user is found to have issued the command to stop AV data reproduction, i.e., if the sub-processor control section 171 is given the AV data reproduction stop command entered by the user operating an operation device, not shown, of the AV data reproducing apparatus, then step S212 is reached.

In step S212, the sub-processor control section 171 terminates AV data reproduction and brings the AV data reproducing process to an end. More specifically, the sub-processor control section 171 causes the main CPU 31-2 or sub-processor 32 to stop executing the video output program and audio output program. The sub-processor control section 171 notifies the distributed processing manager 114 that AV data reproduction has ended.

At this point, the sequencing process request section 185 may prompt the master apparatus to stop the sequencing process by sending to the latter a software cell notifying the stop of the sequencing process. Alternatively, instead of having the sequencing process stopped, the sequencing process request section 185 may simply discard the end notification software cell notifying the end of the sequence process, the cell having been sent by the master apparatus.

Described below in reference to the flowcharts of Figs. 24 through 27 is a sequencing process executing process performed by the information processing apparatus 11-1 acting as the master apparatus in conjunction with the AV data reproducing process carried out by the AV data reproducing apparatus as shown in Fig. 22.

In step S231, as in step S121 of Fig. 12, the sequencing process management section 181 receives a sequencing process request software cell sent by the AV data reproducing apparatus in step S203 of Fig. 22.

In step S232, the sequencing process management section 181 stores the received sequencing process request software cell into the main memory 22.

In step S233, as in step S122 of Fig. 14, execution-oriented function programs needed to perform the sequencing process are determined. In this case, the video decoding program, audio decoding program, and image quality enhancing program are determined as the execution-oriented function programs.

In step S234, as in step S123 of Fig. 14, the information processing stand-in-only apparatus 12 requested to carry out the processes is determined.

In step S235, as in step S124 of Fig. 14, a check is made to determine whether there is any execution-oriented function program yet to be assigned the apparatus requested to execute its function. If such an execution-oriented function program deprived of an apparatus is found to exist, i.e., if at least one of the slave apparatuses A and B cannot be requested to perform the process because of the absence of power or due to an overloaded condition in processing, then step S236 is reached.

In step S236, as in step S125 of Fig. 14, the information processing apparatus 11 requested to carry out the processing is determined.

In step S237, on the basis of the distributed processing management table, the distributed processing management section 184 checks to determine whether the execution-oriented function programs have been loaded to the information processing apparatus 11 requested to perform these programs. If there is any execution-oriented function program yet to be loaded, then step S238 is reached.

In step S238, as in step S126 of Fig. 14, there is created a program load software cell for loading the execution-oriented function program found yet to be loaded in step S237.

More specifically, if a program load software cell is created to load the video decoding program or audio decoding program into the slave apparatus C, the cell has the following settings: the DMA command area is set with a load command, the sub-processor ID of the sub-processor possessed by the slave apparatus C and requested to perform the video decoding process or audio decoding process, and the address of the local storage 72 for the video decoding process requested sub-processor or audio decoding process requested sub-processor to which to load the video decoding program or audio decoding program. Also in the cell, the sender ID area and responder ID area are both set with the sender/receiver ID of the master apparatus; the destination ID area is set with the sender/receiver ID of the slave apparatus C; and the program area is set with the video decoding program or audio decoding program.

If a program load software cell is created to load the image quality enhancing program into the slave apparatus D, the cell has the following settings: the DMA command area is set with a load command, the sub-processor ID of the sub-processor possessed by the slave apparatus D and requested to perform the image quality enhancing process, and the address of the local storage 72 for the image quality enhancing process requested sub-processor to which to load the image quality enhancing program. Also in the cell, the sender ID area and responder ID area are both set with the sender/receiver ID of the master apparatus; the destination ID area is set with the sender/receiver ID of the slave apparatus D; and the program area is set with the image quality enhancing program.

In step S239, as in step S127 of Fig. 14, the program load software cell thus created is sent onto the network 13.

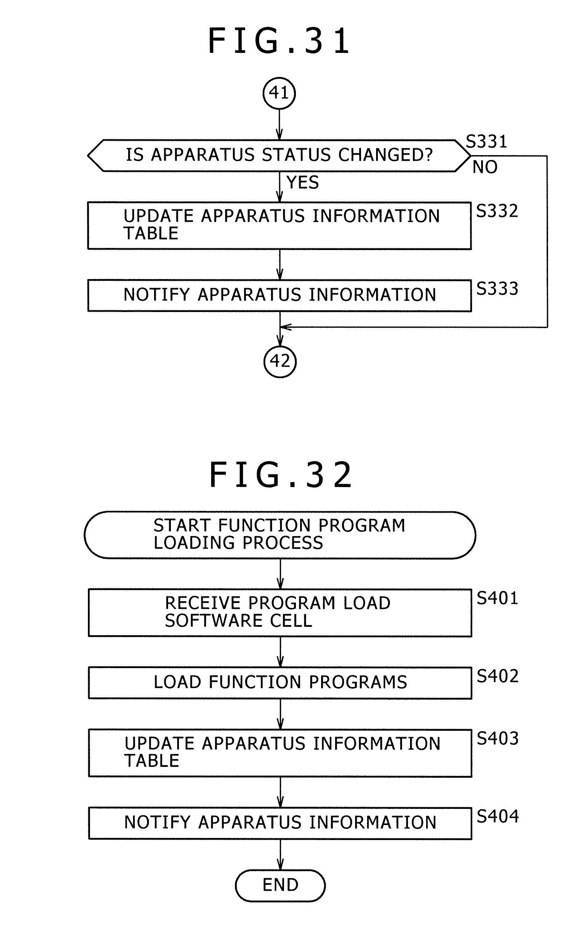

The slave apparatus C or D receives the program load software cell from the master apparatus, as will be discussed later in connection with step S401 of Fig. 32.

In step S240, as in step S128 of Fig. 14, the distributed processing management table is updated. More specifically, the function program load information derived from the program load software cell sent in step S239 is added to the distributed processing management table.

In step S241, the information exchange section 151 receives over the network 13 and through the network input/output driver 131 an apparatus information notification software cell sent by the slave apparatus C or D, as will be discussed later in connection with step S404 of Fig. 32.

In step S242, as in step S45 of Fig. 11, the apparatus information table is updated.

If in step S237 the execution-oriented function programs are found to have been loaded, then steps S238 through S242 are skipped and step S243 is reached.

If in step S237 there is found no execution-oriented function program yet to be assigned an apparatus requested to execute its function, i.e., if in step S233 the slave apparatus A is requested to perform the video decoding process and audio decoding process while the slave apparatus B is requested to carry out the image quality enhancing process, then step S236 through S242 are skipped and step S243 is reached.

In step S243, the distributed processing management section 184 checks to determine whether the information processing stand-in-only apparatus 12 is requested to execute the video decoding process. If the information processing stand-in-only apparatus 12 is found requested to perform the video decoding process, i.e., if the slave apparatus A is requested to carry out the video decoding process, then step S244 is reached.

In step S244, as in step S131 of Fig. 15, a command execution software cell for requesting execution of an "mpeg2_video_ decode" command is created. More specifically, the DMA command area in this cell is set with the "mpeg2_video_decode" command, the sub-processor ID of the video decoding sub-processor belonging to the slave apparatus A, and the address of the local storage 72 for the video decoding sub-processor to which to load the function program of which the execution is designated by the "mpeg2_video_decode" command. Also in the cell, the sender ID area and responder ID area are both set with the sender/receiver ID of the master apparatus; and the destination ID area is set with the sender/receiver ID of the slave apparatus A.

In the command execution software cell above, the data area is set with the video data isolated from the AV data held in the data area of the sequencing process notification software cell received in step S231, along with various parameters necessary for executing the "mpeg2_video_decode" command.

In step S245, as in step S132 of Fig. 15, the created command execution software cell is sent onto the network 13. Thereafter step S248 is reached.

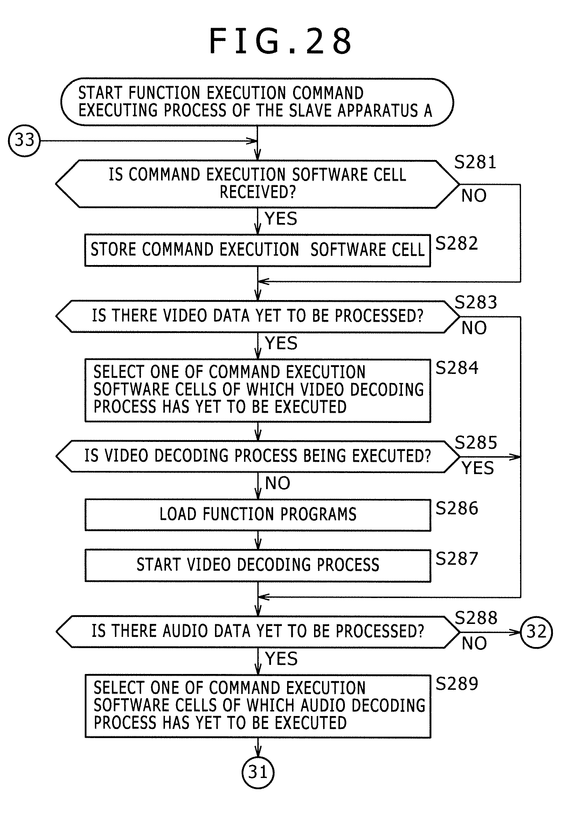

The slave apparatus A receives the command execution software cell from the master apparatus, as will be discussed later in connection with step S281 of Fig. 28.

If in step S243 the information processing apparatus 11 is found requested to execute the video decoding process, i.e., if the slave apparatus C is requested to carry out the video decoding process, then step S246 is reached.

In step S246, as in step S133 of Fig. 15, a program execution software cell for requesting execution of the video decoding program is created. More specifically, the DMA command area in this cell is set with a kick command, the sub-processor ID of the video decoding process requested sub-processor belonging to the slave apparatus C, and a program counter indicating information about the address from which to start executing the video decoding program; the sender ID area and responder ID area are both set with the sender/receiver ID of the master apparatus; and the destination ID area is set with the sender/receiver ID of the slave apparatus C. Also in this program execution software cell, the data area is set with the video data isolated from the AV data held in the data area of the sequencing process notification software cell received in step S231, along with various parameters necessary for decoding the video data.

In step S245, as in step S134 of Fig. 15, the created program execution software cell is sent onto the network 13.

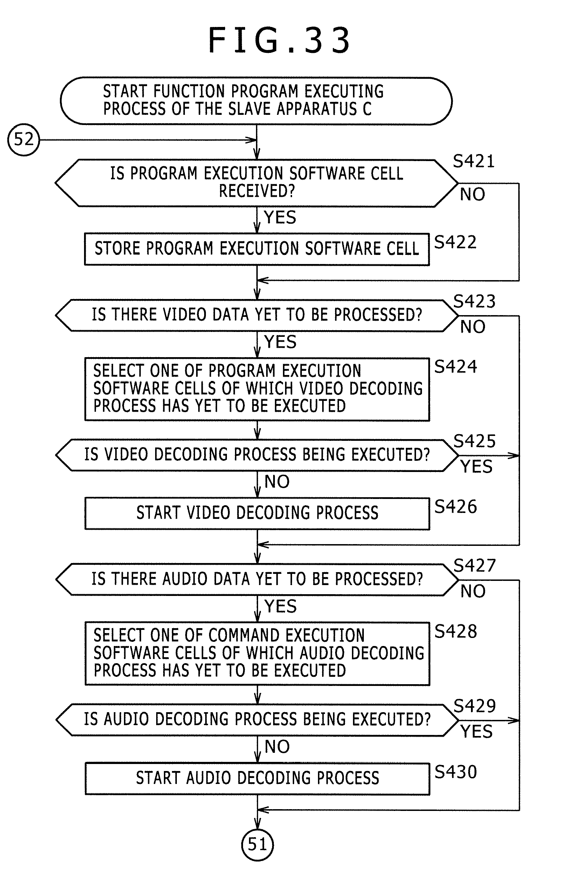

The slave apparatus C receives the program execution software cell from the master apparatus, as will be described later in connection with step S421 of Fig. 33.

In step S248, the distributed processing management section 184 checks to determine whether the information processing stand-in-only apparatus 12 is requested to execute the audio decoding process. If the information processing stand-in-only apparatus 12 is found requested to perform the audio decoding process, i.e., if the slave apparatus A is requested to carry out the audio decoding process, then step S249 is reached.

In step S249, as in step S131 of Fig. 15, a command execution software cell for requesting execution of an "mpeg2_ audio_ decode" command is created. More specifically, the DMA command area in this cell is set with the "mpeg2_audio_decode" command, the sub-processor ID of the audio decoding sub-processor belonging to the slave apparatus A, and the address of the local storage 72 for the audio decoding sub-processor to which to load the function program of which the execution is designated by the "mpeg2_audio_decode" command. Also in the cell, the sender ID area and responder ID area are both set with the sender/receiver ID of the master apparatus; and the destination ID area is set with the sender/receiver ID of the slave apparatus A.

In the command execution software cell above, the data area is set with the audio data isolated from the AV data held in the data area of the sequencing process notification software cell received in step S231, along with various parameters necessary for executing the "mpeg2_audio_decode" command.

In step S250, as in step S132 of Fig. 15, the created command execution software cell is sent onto the network 13. Thereafter step S253 is reached.

The slave apparatus A receives the command execution software cell from the master apparatus, as will be discussed later in connection with step S281 of Fig. 28.

If in step S248 the information processing apparatus 11 is found requested to execute the audio decoding process, i.e., if the slave apparatus C is requested to carry out the audio decoding process, then step S251 is reached.

In step S251, as in step S133 of Fig. 15, a program execution software cell for requesting execution of the audio decoding program is created. More specifically, the DMA command area in this cell is set with a kick command, the sub-processor ID of the audio decoding process requested sub-processor belonging to the slave apparatus C, and a program counter indicating information about the address from which to start executing the audio decoding program; the sender ID area and responder ID area are both set with the sender/receiver ID of the master apparatus; and the destination ID area is set with the sender/receiver ID of the slave apparatus C. Also in this program execution software cell, the data area is set with the audio data isolated from the AV data held in the data area of the sequencing process notification software cell received in step S231, along with various parameters necessary for decoding the audio data.

In step S252, as in step S134 of Fig. 15, the created program execution software cell is sent onto the network 13.

The slave apparatus C receives the program execution software cell from the master apparatus, as will be described later in connection with step S421 of Fig. 33.

In step S253, as in step S135 of Fig. 15, the distributed processing management table is updated. More specifically, the distributed processing management table is supplemented by function program execution information indicating that the slave apparatus A or C was requested to execute the video decoding process and audio decoding process.

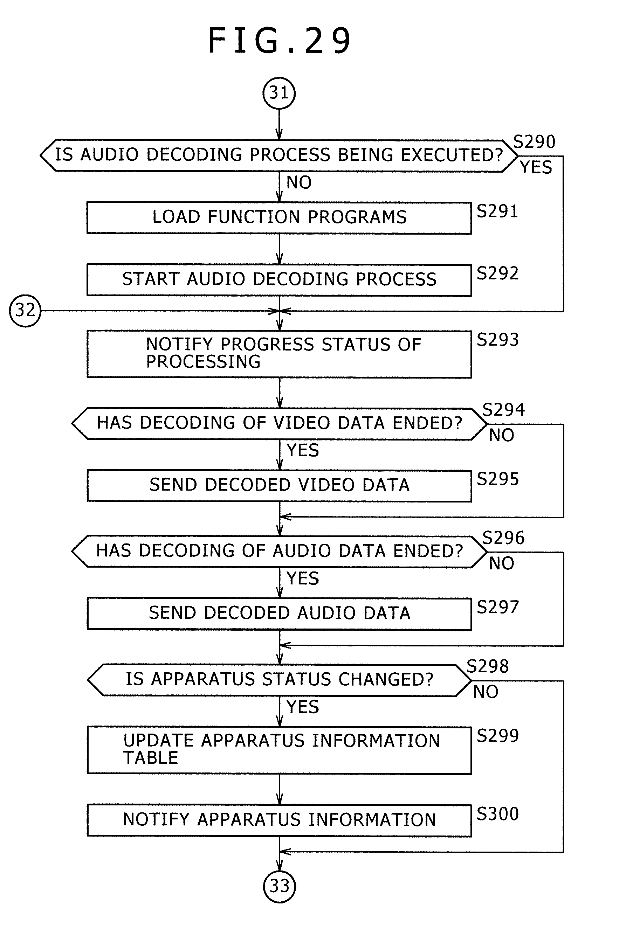

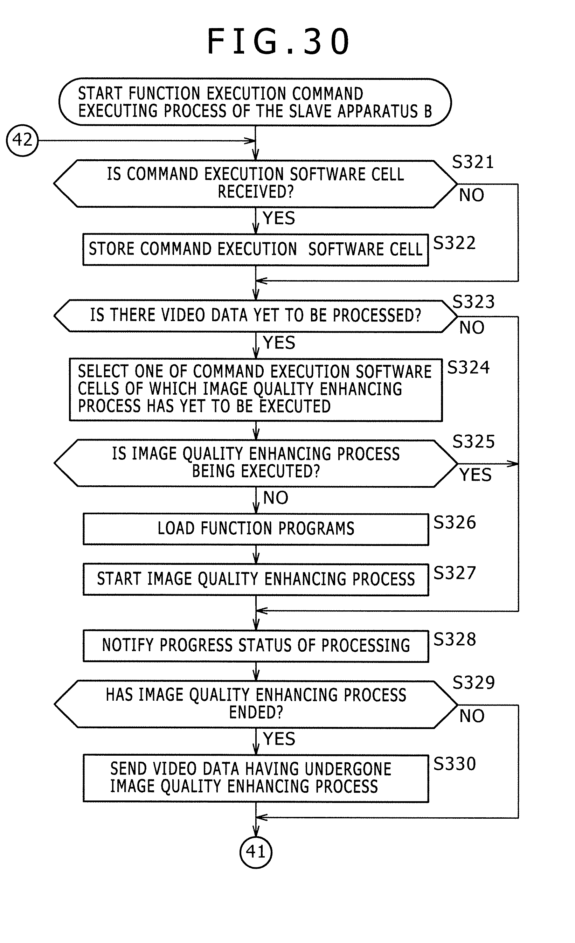

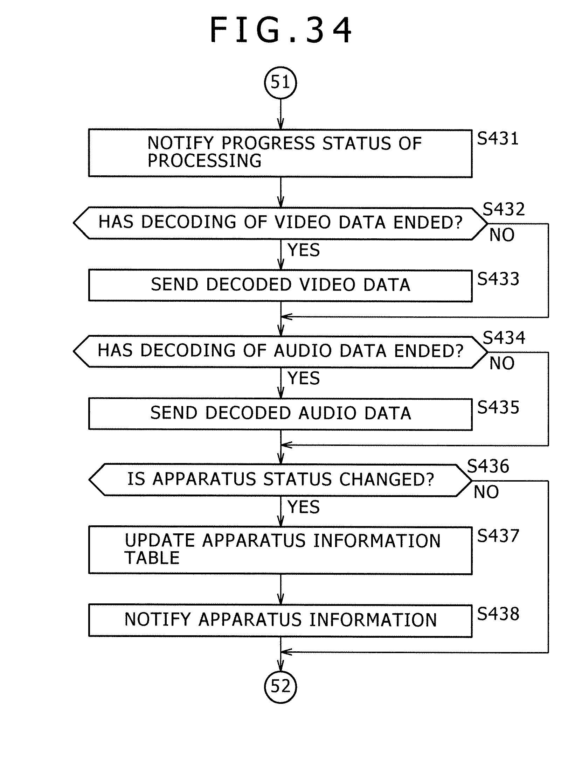

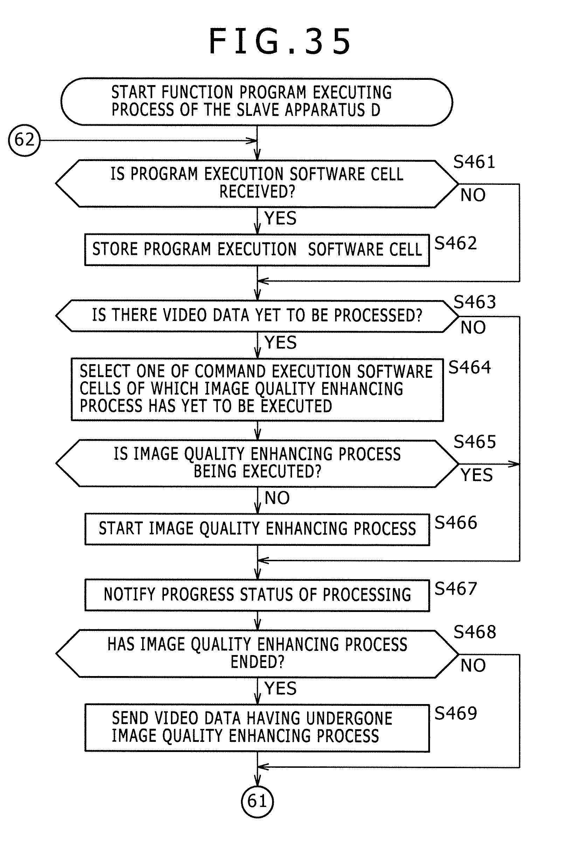

In step S254, the distributed processing management section 184 checks to determine whether an end notification software cell is received. Step S255 is reached if the distributed processing management section 184 determines that any one of the following four end notification software cells is received over the network 13 and through the network input/output driver 131: an end notification software cell sent by the slave apparatus A as will be discussed later in connection with step S295 or S297 of Fig. 29; an end notification software cell sent by the slave apparatus B as will be described later in connection with step S330 of Fig. 30; an end notification software cell sent by the slave apparatus D as will be explained later in connection with step S433 or S435 of Fig. 34; or an end notification software cell sent by the slave apparatus D as will be depicted later in connection with step S469 of Fig. 35.

In step S255, the distributed processing management section 184 stores the received end notification software cell into the main memory 22.

In step S256, the distributed processing management section 184 checks to determine whether an end of the video decoding process is notified. If in step S255 the end notification software cell is found received from the slave apparatus A or C reporting the end of the video decoding process, then the distributed processing management section 184 determines that the end of the video decoding process is notified. In that case, step S257 is reached.

In step S257, the distributed processing management section 184 checks to determine whether the information processing stand-in-only apparatus 12 is found requested to execute the image quality enhancing process. If the information processing stand-in-only apparatus 12 is found requested to carry out the image quality enhancing process, i.e., if the slave apparatus B is requested to perform the image quality enhancing process, then step S258 is reached.

In step S258, as in step S131 of Fig. 15, a command execution software cell for requesting execution of a "video_ noise_ reduction" command is created. More specifically, the DMA command area in this cell is set with the "video_noise_reduction" command, the sub-processor ID of the image quality enhancing sub-processor belonging to the slave apparatus B, and the address of the local storage 72 for the image quality enhancing sub-processor to which to load the function program of which the execution is designated by the "video_noise_reduction" command. Also in the cell, the sender ID area and responder ID area are both set with the sender/receiver ID of the master apparatus; and the destination ID area is set with the sender/receiver ID of the slave apparatus B.

In the command execution software cell above, the data area is set with the decoded video data held in the data area of the end notification software cell which was received in step S254 and which notifies the end of the video decoding process, along with various parameters necessary for executing the "video_noise_reduction" command.

In step S259, as in step S132 of Fig. 15, the created command execution software cell is sent onto the network 13. Thereafter step S262 is reached.

The slave apparatus B receives the command execution software cell from the master apparatus, as will be discussed later in connection with step S321 of Fig. 30.

If in step S257 the information processing apparatus 11 is found requested to execute the image quality enhancing process, i.e., if the slave apparatus D is requested to carry out the image quality enhancing process, then step S260 is reached.

In step S260, as in step S133 of Fig. 15, a program execution software cell for requesting execution of the image quality enhancing program is created. More specifically, the DMA command area in this cell is set with a kick command, the sub-processor ID of the image quality enhancing process requested sub-processor, and a program counter indicating information about the address from which to start executing the image quality enhancing program on the slave apparatus D; the sender ID area and responder ID area are both set with the sender/receiver ID of the master apparatus; and the destination ID area is set with the sender/receiver ID of the slave apparatus D. Also in this program execution software cell, the data area is set with the decoded video data found in the data area of the end notification software cell received in step S254, along with various parameters necessary for carrying out the image quality enhancing process.

In step S261, as in step S134 of Fig. 15, the created program execution software cell is sent onto the network 13.

The slave apparatus D receives the program execution software cell from the master apparatus, as will be discussed later in connection with step S461 of Fig. 35.

In step S262, as in step S135 of Fig. 15, the distributed processing management table is updated. More specifically, the distributed processing management table is supplemented by function program execution information indicating that the slave apparatus B or D was requested to execute the image quality enhancing process.

If in step S256 the end of the video decoding process is not found to be notified, then steps S257 through S262 are skipped and step S263 is reached.

In step S263, the distributed processing management section 184 checks to determine whether there is any sequencing process request software cell of which all processes have been completed. More specifically, the distributed processing management section 184 recognizes a sequencing process request software cell of which all processes are found to have ended if their end notifications are received from the slave apparatuses A through D requested by this software cell to perform the processes involved. That is, if the decoding process and image quality enhancing process are found to have ended on the video data isolated from the AV data placed in the sequencing process request software cell and if the decoding of the audio data isolated from the AV data is also found complete, then the distributed processing management section 184 conforms the presence of the sequencing process request software cell of which all processes have been accomplished. At this point, step S264 is reached.

In step S264, as in step S141 of Fig. 15, an end notification software cell corresponding to the sequencing process request software cell of which all processes are found to have ended in step S263 is output onto the network 13. In this end notification software cell, the DMA command area is set with a status return command notifying that the execution of the sequencing process has ended; the sender ID area and responder ID area are both set with the sender/receiver ID of the master apparatus; and the destination ID area is set with the sender/receiver ID of the AV data reproducing apparatus requested to carry out the sequencing process. Also in the cell, the data area is set with the decoded video data having undergone the image quality enhancing process as well as the decoded audio data.

If in step S263 there is found no sequencing process request software cell of which all processes have been completed, then step S264 is skipped and step S265 is reached.

If in step S254 no end notification software cell is found to be received, then steps S255 through S264 are skipped and step S265 is reached.

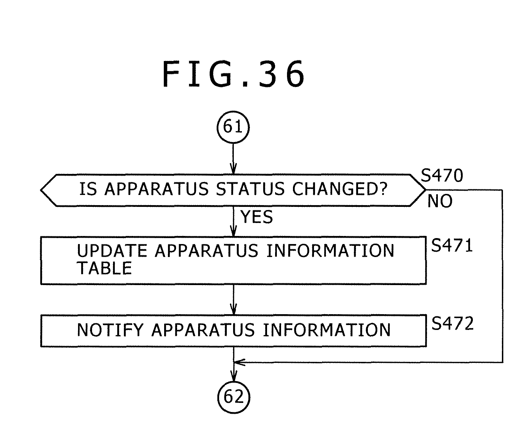

In step S265, the information exchange section 151 checks to determine whether apparatus information is notified. Step S266 is reached if the information exchange section 151 determines that any one of the following four apparatus information notification software cells is received over the network 13 and through the network input/output driver 131: an apparatus information notification software cell sent by the slave apparatus A as will be discussed later in connection with step S300 of Fig. 29; an apparatus information notification software cell sent by the slave apparatus B as will be described later in connection with step S333 of Fig. 31; an apparatus information notification software cell sent by the slave apparatus C as will be explained later in connection with step S438 of Fig. 34; or an apparatus information notification software cell sent by the slave apparatus D as will be depicted later in connection with step S472 of Fig. 36.

In step S266, as in step S45 of Fig. 11, the apparatus information table is updated.

If in step S265 the apparatus information is not found to be notified, step S266 is skipped and step S267 is reached.

In step S267, the progress status notification section 186 checks to determine whether progress status is notified by any one of the slave apparatuses A through D. Step S268 is reached if the progress status notification section 186 determines that any one of the following four progress status notification software cells is received over the network 13 and through the network input/output driver 131: a progress status notification software cell sent by the slave apparatus A as will be discussed later in connection with step S293 of Fig. 29; a progress status notification software cell sent by the slave apparatus B as will be described later in connection with step S328 of Fig. 30; a progress status notification software cell sent by the slave apparatus C as will be explained later in connection with step S431 of Fig. 34; or a progress status notification software cell sent by the slave apparatus D as will be depicted later in connection with step S467 of Fig. 35.

In step S268, the progress status notification section 186 substitutes the sender/receiver ID of the apparatus hosting this section 186 for the entries in the sender ID area and responder ID area and the sender/receiver ID of the AV data reproducing apparatus for the entry in the destination ID area in the progress status notification software cell received in step S267. The progress status notification software cell with its content thus changed is sent onto the network 13. That is, the progress status notification section 186 passes the progress status notification software cell addressed to this section 186 on to the AV data reproducing apparatus.

In step S269, the progress status notification section 186 notifies how much the sequencing process has progressed on the basis of the received progress status notification software cell. More specifically, as in step S205 of Fig. 22 discussed above with regard to the AV data reproducing apparatus, the progress status notification section 186 causes the display device 301 to display images indicating the progress status of the sequencing process as shown in Fig. 23.

If in step S267 the progress status of the process is not found notified, then steps S268 and S269 are skipped and step S270 is reached.

In step S270, the sequencing process management section 181 checks to determine whether a new sequencing process request software cell is received from the AV data reproducing apparatus. If no such new sequencing process request software cell is found received from the AV data reproducing apparatus, then step S271 is reached.

In step S271, the sequencing process management section 181 checks to determine whether the processes for all sequencing process request software cells have been completed. More specifically, the sequencing process management section 181 checks to see if, among the sequencing process request software cells received earlier from the AV data reproducing apparatus in step S231 or S269, there exits any cell yet to be matched with an end notification software cell sent to the AV data reproducing apparatus in order to notify the end of the requested sequencing process. If any such sequencing process request software cell is detected, then not all processes for the sequencing process request software cells are found complete. In that case, step S254 is reached again and the subsequent steps are repeated.

If in step S271 the processes for all sequencing process request software cell are found complete, i.e., if end notification software cells are found to have been sent to the AV data reproducing apparatus notifying the apparatus of the end of the processes for all sequencing process request software cells received therefrom, then the sequencing process executing process is terminated.

If in step S270 a new sequencing process request software cell sent by the AV data reproducing apparatus in step S203 of Fig. 22 is found to be received therefrom, then step S232 is reached again and the subsequent steps are repeated.

Described below in reference to the flowcharts of Figs. 28 and 29 is a function execution command executing process performed by the information processing stand-in-only apparatus 12-1 serving as the slave apparatus A in conjunction with the sequencing process executing process carried out by the master apparatus as shown in Figs. 24 through 27.

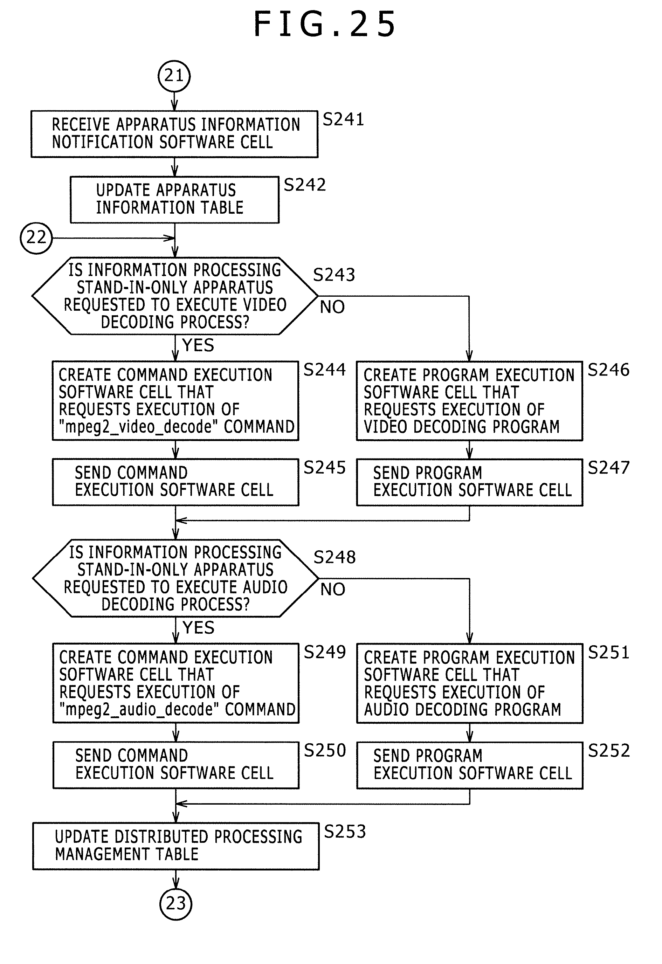

In step S281, the sub-processor control section 271 checks to determine whether a command execution software cell is received. Step S282 is reached if the sub-processor control section 271 determines that a command execution software cell sent by the master apparatus in step S245 or S250 of Fig. 25 is received over the network 13 and through the network input/output driver 231.

In step S282, the sub-processor control section 271 stores the received command execution software cell into the main memory 52.

If in step S281 no command execution software cell is found to be received, then step S282 is skipped and step S283 is reached.

In step S283, the sub-processor control section 271 checks to determine whether there is any video data yet to be processed. More specifically, the sub-processor control section 271 determines that there exists unprocessed video data if there is any command execution software cell for which the video decoding process has yet to be carried out among the command execution soft ware cells stored in the main memory 52. If any such unprocessed video data is detected in step S283, then step S284 is reached.

In step S284, the sub-processor control section 271 selects one of the command execution software cells for which the video decoding process has yet to be performed (e.g., the command execution software cell received from the master apparatus at the earliest time).

In step S285, the sub-processor control section 271 checks to determine whether the sub-processor 62 designated by the command execution software cell (i.e., video decoding sub-processor) is carrying out the video decoding process. If the video decoding sub-processor is not found executing the video decoding process, step S286 is reached.

In step S286, as in step S152 of Fig. 16, the function program of which the execution is ordered by the "mpeg2 video decode" command is loaded into the local storage 72 of the video decoding sub-processor.

In step S287, the sub-processor control section 271 gets the video decoding process started. More specifically, the sub-processor control section 271 supplies the video decoding sub-processor with the video data contained in the command execution software cell and with various parameters needed to perform the video decoding process. Under control of the sub-processor control section 271, the video decoding sub-processor starts decoding video data by executing the function program loaded in step S286.

If in step S285 the video decoding sub-processor is found to be currently executing the video decoding process, then steps S286 and S287 are skipped and step S288 is reached.

If in step S283 unprocessed video data is found to be absent, then steps S284 through S287 are skipped and step S288 is reached.

In step S288, the sub-processor control section 271 checks to determine whether there exists any audio data yet to be processed. More specifically, the sub-processor control section 271 determines that there is unprocessed audio data if, among the command execution software cells held in the main memory 52, there exists any cell for which the audio decoding process has yet to be carried out. If any such unprocessed audio data is detected in step S288, then step S289 is reached.

In step S289, the sub-processor control section 271 selects one of the command execution software cells for which the audio decoding process has yet to be performed (e.g., the command execution software cell received from the master apparatus at the earliest time).

In step S290, the sub-processor control section 271 checks to determine whether the sub-processor 62 designated by the command execution software cell (i.e., audio decoding sub-processor) is carrying out the audio decoding process. If the audio decoding sub-processor is not found executing the audio decoding process, then step S291 is reached.

In step S291, as in step S152 of Fig. 16, the function program of which the execution is ordered by the "mpeg2 audio_decode" command is loaded into the local storage 72 of the audio decoding sub-processor.

In step S292, the sub-processor control section 271 gets the audio decoding process started. More specifically, the sub-processor control section 271 supplies the audio decoding sub-processor with the audio data contained in the command execution software cell and with various parameters needed to perform the audio decoding process. Under control of the sub-processor control section 271, the audio decoding sub-processor starts decoding audio data by executing the function program loaded in step S291.

If in step S290 the audio decoding sub-processor is found to be currently executing the audio decoding process, then steps S291 and S292 are skipped and step S293 is reached.

If in step S288 unprocessed audio data is found to be absent, then steps S289 through S292 are skipped and step S293 is reached.

In step S293, the progress status notification section 272 notifies the master apparatus of the progress status of the ongoing process as needed. More specifically, the video and audio decoding sub-processors may supply the sub-processor control section 271 with data indicative of the progress status of the ongoing video or audio decoding process illustratively at predetermined intervals. In turn, the sub-processor control section 271 feeds the progress status thus acquired to the progress status notification section 272.

The progress status notification section 272 creates a progress status notification software cell. In the cell, the DMA command area is set with a status return command giving notification of the progress status of the process; the sender ID area and responder ID area are both set with the sender/receiver ID of the apparatus hosting this section 272; and the destination ID area is set with the sender/receiver ID of the master apparatus. Also in the cell, the data area is set illustratively with data in percentage points ranging from zero at which each of the video and audio decoding processes is started, to 100 at which each process is completed. The progress status notification section 272 sends the progress status notification software cell thus created onto the network 13 through the network input/output driver 231.

In step S294, the video decoding sub-processor checks to determine whether the video data decoding process is completed. If the video data decoding process is found to have ended, then step S295 is reached.

In step S295, the sub-processor control section 271 sends the decoded video data. More specifically, the video decoding sub-processor supplies the sub-processor control section 271 with the video data having undergone the video decoding process. In turn, the sub-processor control section 271 creates an end notification software cell. In the cell, the DMA command area is set with a status return command notifying that execution of the function execution command has ended; the sender ID area and responder ID area are both set with the sender/receiver ID of the apparatus hosting this section 271; the destination ID area is set with the sender/receiver ID of the master apparatus; and the data area is set with the decoded video data. The sub-processor control section 271 sends the end notification software cell thus created onto the network 13 through the network input/output driver 231.

If in step S294 decoding of the video data is not found to be completed, then step S295 is skipped and step S296 is reached.

In step S296, the audio decoding sub-processor checks to determine whether decoding of the audio data is completed. If the audio data decoding process is found to have ended, then step S297 is reached.

In step S297, the sub-processor control section 271 sends the decoded audio data. More specifically, the audio decoding sub-processor supplies the sub-processor control section 271 with the audio data having undergone the audio decoding process. In turn, the sub-processor control section 271 creates an end notification software cell. In the cell, the DMA command area is set with a status return command notifying that execution of the function execution command has ended; the sender ID area and responder ID area are both set with the sender/receiver ID of the apparatus hosting this section 271; the destination ID area is set with the sender/receiver ID of the master apparatus; and the data area is set with the decoded audio data. The sub-processor control section 271 sends the end notification software cell thus created onto the network 13 through the network input/output driver 231.

If in step S296 decoding of the audio data is not found to be completed, then step S297 is skipped and step S298 is reached.

In step S298, the apparatus information management section 252 checks to determine whether any change has occurred in apparatus status. The apparatus information management section 252 may detect a change in the status of the slave apparatus A illustratively as a result of the loading of function programs or the start or end of the video or audio decoding process. If such a change in apparatus status is detected in step S298, then step S299 is reached.

In step S299, the apparatus information management section 252 updates its own apparatus information in the main memory 52 in response to the change in the status of the slave apparatus A. The apparatus information management section 252 proceeds to notify the information exchange section 251 that the apparatus information about the apparatus hosting this section 252 has been updated.

In step S300, as in step S24 of Fig. 10, the master apparatus is notified of the apparatus information through the use of an apparatus information notification software cell sent to that apparatus. In the cell, the destination ID area is set with the sender/receiver ID of the master apparatus. Thereafter step S281 is reached again and the subsequent steps are repeated.

If no change is detected in information status in step S298, then step S281 is reached again and the subsequent steps are repeated.

Described below in reference to the flowcharts of Figs. 30 and 31 is a function execution command executing process performed by the information processing stand-in-only apparatus 12-2 serving as the slave apparatus B in conjunction with the sequencing process executing process carried out by the master apparatus as shown in Figs. 24 through 27.

In step S321, the sub-processor control section 271 checks to determine whether a command execution software cell is received. If the sub-processor control section 271 determines that the command execution software cell sent by the master apparatus in step S259 of Fig. 26 is received over the network 13 and through the network input/output driver 231, then step S322 is reached.

In step S322, the sub-processor control section 271 stores the received command execution software cell into the main memory 52.

If in step S321 no command execution software cell is found to be received, then step S322 is skipped and step S323 is reached.

In step S323, the sub-processor control section 271 checks to determine whether there is any video data yet to be processed. More specifically, the sub-processor control section 271 determines that there exists unprocessed video data upon detecting a command execution software cell for which the image quality enhancing process has yet to be performed among the command execution software cells stored in the main memory 52. If any such unprocessed video data is detected in step S323, then step S324 is reached.

In step S324, the sub-processor control section 271 selects one of the command execution software cells for which the image quality enhancing process has yet to be performed (e.g., the command execution software cell received from the master apparatus at the earliest time).

In step S325, the sub-processor control section 271 checks to determine whether the sub-processor 62 designated by the command execution software cell (i.e., image quality enhancing sub-processor) is carrying out the image quality enhancing process. If the image quality enhancing sub-processor is not found executing the image quality enhancing process, then step S326 is reached.

In step S326, as in step S152 of Fig. 16, the function program of which the execution is ordered by the "video_noise_reduction" command is loaded into the local storage 72 of the image quality enhancing sub-processor.

In step S327, the sub-processor control section 271 gets the image quality enhancing process started. More specifically, the sub-processor control section 271 supplies the image quality enhancing sub-processor with the video data contained in the command execution software cell and with various parameters needed to perform the image quality enhancing process. Under control of the sub-processor control section 271, the image quality enhancing sub-processor starts executing the function program loaded in step S326. The program getting started initiates the image quality enhancing process such as noise reduction in the video data.

If in step S325 the image quality enhancing sub-processor is found to be currently executing the image quality enhancing process, then steps S326 and S327 are skipped and step S328 is reached.

If in step S323 unprocessed video data is found to be absent, then steps S324 through S327 are skipped and step S328 is reached.

In step S328, the progress status notification section 272 notifies the master apparatus of the progress status of the ongoing process as needed. More specifically, the image quality enhancing sub-processor may supply the sub-processor control section 271 with data indicative of the status of the image quality enhancing process in progress illustratively at predetermined intervals. In turn, the sub-processor control section 271 feeds the progress status thus acquired to the progress status notification section 272.

The progress status notification section 272 creates a progress status notification software cell. In the cell, the DMA command area is set with a status return command giving notification of the progress status of the process; the sender ID area and responder ID area are both set with the sender/receiver ID of the apparatus hosting this section 272; and the destination ID area is set with the sender/receiver ID of the master apparatus. Also in the cell, the data area is set illustratively with data in percentage points ranging from zero at which the image quality enhancing process is started, to 100 at which the process is completed. The progress status notification section 272 sends the progress status notification software cell thus created onto the network 13 through the network input/output driver 231.

In step S329, the image quality enhancing sub-processor checks to determine whether the image quality enhancing process on the video data is completed. If the process is found to have ended, then step S330 is reached.

In step S330, the sub-processor control section 271 sends the video data having undergone the image quality enhancing process. More specifically, the image quality enhancing sub-processor supplies the sub-processor control section 271 with the video data with its image quality enhanced. In turn, the sub-processor control section 271 creates an end notification software cell. In the cell, the DMA command area is set with a status return command notifying that execution of the function execution command has ended; the sender ID area and responder ID area are both set with the sender/receiver ID of the apparatus hosting this section 271; the destination ID area is set with the sender/receiver ID of the master apparatus; and the data area is set with the video data enhanced in image quality. The sub-processor control section 271 sends the end notification software cell thus created onto the network 13 through the network input/output driver 231.

If in step S329 the image quality enhancement of the video data is not found to be completed, then step S330 is skipped and step S331 is reached.

In step S331, the apparatus information management section 252 checks to determine whether any change has occurred in apparatus status. The apparatus information management section 252 may detect a change in the status of the slave apparatus B illustratively as a result of the loading of function programs or the start or end of the image quality enhancing process. If such a change in apparatus status is detected in step S331, then step S332 is reached.

In step S332, the apparatus information management section 252 updates its own apparatus information kept in the main memory 52 in response to the change in the status of the slave apparatus B. The apparatus information management section 252 proceeds to notify the information exchange section 251 that the apparatus information about the apparatus hosting this section 252 has been updated.

In step S333, as in step S24 of Fig. 10, the master apparatus is notified of the apparatus information through the use of an apparatus information notification software cell sent to that apparatus. In the cell, the destination ID area is set with the sender/receiver ID of the master apparatus. Thereafter step S321 is reached again and the subsequent steps are repeated.

If no change is detected in the information status in step S331, then step S321 is reached again and the subsequent steps are repeated.

Described below in reference to the flowchart of Fig. 32 is a function program loading process performed by the information processing apparatus 11-3 serving as the slave apparatus C in conjunction with the sequencing process executing process carried out by the master apparatus as shown in Figs. 24 through 27.

In step S401, the sub-processor control section 171 receives over the network 13 and through the network input/output driver 131 the program load software cell sent by the master apparatus in step S239 of Fig. 24.

In step S402, as in step S172 of Fig. 17, the function program is loaded. That is, the video decoding program or audio decoding program is loaded into the video decoding process requested sub-processor or audio decoding process requested sub-processor respectively.

In step S403, the apparatus information management section 153 updates its own apparatus information in the apparatus information table held in the main memory 22 in response to the change that occurred in the status of the slave apparatus C as a result of loading the function program. The apparatus information management section 153 proceeds to notify the information exchange section 151 that the apparatus information about the apparatus hosting this section 153 has been updated.

In step S404, as in step S43 of Fig. 11, the master apparatus is notified of the apparatus information through the use of an apparatus information notification software cell. This brings the function program loading process to an end. In the apparatus information notification software cell sent to the master apparatus, the destination ID area is set with the sender/receiver ID of the master apparatus.

The function program loading process to be performed by the slave apparatus D is the same as the function program loading process carried out by the slave apparatus C as discussed above in reference to Fig. 32 and thus will not be described further.

Described below in reference to the flowcharts of Figs. 33 and 34 is a function program executing process performed by the information processing apparatus 11-3 serving as the slave apparatus C in conjunction with the sequencing process executing process carried out by the master apparatus as shown in Figs. 24 through 27.

In step S421, the sub-processor control section 171 checks to determine whether a program execution software cell is received. If the sub-processor control section 171 determines that the program execution software cell sent by the master apparatus in step S247 or S252 of Fig. 25 is received over the network 13 and through the network input/output driver 131, then step S422 is reached.

In step S422, the sub-processor control section 171 stores the received program execution software cell into the main memory 22.

If in step S421 no program execution software cell is found to be received, then step S422 is skipped and step S423 is reached.

In step S423, the sub-processor control section 171 checks to determine whether there is any video data yet to be processed. More specifically, the sub-processor control section 171 determines that there exists unprocessed video data upon detecting a program execution software cell for which the video decoding process has yet to be performed among the program execution software cells stored in the main memory 22. If any such unprocessed video data is detected in step S423, then step S424 is reached.

In step S424, the sub-processor control section 171 selects one of the program execution software cells for which the video decoding process has yet to be performed (e.g., the program execution software cell received from the master apparatus at the earliest time).

In step S425, the sub-processor control section 171 checks to determine whether the sub-processor 32 designated by the program execution software cell (i.e., video decoding process requested sub-processor) is carrying out the video decoding process. If the video decoding process requested sub-processor is not found executing the video decoding process, then step S426 is reached.

In step S426, the sub-processor control section 171 gets the video decoding process started. More specifically, the sub-processor control section 171 supplies the video decoding process requested sub-processor with the video data contained in the program execution software cell and with various parameters needed to perform the video decoding process. Under control of the sub-processor control section 271, the video decoding process requested sub-processor starts decoding video data by executing the video decoding program loaded in step S402 of Fig. 32.

If in step S425 the video decoding process requested sub-processor is found to be currently executing the video decoding process, then step S426 is skipped and step S427 is reached.

If in step S423 unprocessed video data is found to be absent, then steps S424 through S426 are skipped and step S427 is reached.

In step S427, the sub-processor control section 171 checks to determine whether there is any audio data yet to be processed. More specifically, the sub-processor control section 171 determines that there exists unprocessed audio data upon detecting a program execution software cell for which the audio decoding process has yet to be performed among the program execution software cells stored in the main memory 22. If any such unprocessed audio data is detected in step S427, then step S428 is reached.

In step S428, the sub-processor control section 171 selects one of the program execution software cells for which the audio decoding process has yet to be performed (e.g., the program execution software cell received from the master apparatus at the earliest time).

In step S429, the sub-processor control section 171 checks to determine whether the sub-processor 32 designated by the program execution software cell (i.e., audio decoding process requested sub-processor) is carrying out the audio decoding process. If the audio decoding process requested sub-processor is not found executing the audio decoding process, then step S430 is reached.

In step S430, the sub-processor control section 171 gets the audio decoding process started. More specifically, the sub-processor control section 171 supplies the audio decoding process requested sub-processor with the audio data contained in the program execution software cell and with various parameters needed to perform the audio decoding process. Under control of the sub-processor control section 271, the audio decoding process requested sub-processor starts decoding audio data by executing the audio decoding program loaded in step S402 of Fig. 32.

If in step S429 the audio decoding process requested sub-processor is found to be currently executing the audio decoding process, then step S430 is skipped and step S431 is reached.

If in step S427 unprocessed audio data is found to be absent, then steps S428 through S430 are skipped and step S431 is reached.

In step S462, the progress status notification section 172 notifies the master apparatus of the progress status of the ongoing process as needed. More specifically, the video decoding process requested sub-processor and audio decoding process requested sub-processor may supply the sub-processor control section 171 with data indicative of the status of the video or audio decoding process in progress illustratively at predetermined intervals. In turn, the sub-processor control section 171 feeds the progress status thus acquired to the progress status notification section 172.

The progress status notification section 172 creates a progress status notification software cell. In the cell, the DMA command area is set with a status return command giving notification of the progress status of the process; the sender ID area and responder ID area are both set with the sender/receiver ID of the apparatus hosting this section 172; and the destination ID area is set with the sender/receiver ID of the master apparatus. Also in the cell, the data area is set illustratively with data in percentage points ranging from zero at which each of the video and audio decoding processes is started, to 100 at which each process is completed. The progress status notification section 172 sends the progress status notification software cell thus created onto the network 13 through the network input/output driver 131.

In step S432, the video decoding process requested sub-processor checks to determine whether the decoding process on the video data is completed. If the process is found to have ended, then step S433 is reached.

In step S433, the sub-processor control section 171 sends the decoded video data. More specifically, the video decoding process requested sub-processor supplies the sub-processor control section 171 with the video data having undergone the decoding process. In turn, the sub-processor control section 171 creates an end notification software cell. In the cell, the DMA command area is set with a status return command notifying that execution of the function program has ended; the sender ID area and responder ID area are both set with the sender/receiver ID of the apparatus hosting this section 171; the destination ID area is set with the sender/receiver ID of the master apparatus; and the data area is set with the decoded video data. The sub-processor control section 171 sends the end notification software cell thus created onto the network 13 through the network input/output driver 131.

If in step S432 the decoding of the video data is not found to be completed, then step S433 is skipped and step S434 is reached.

In step S434, the audio decoding process requested sub-processor checks to determine whether the decoding process on the audio data is completed. If the process is found to have ended, then step S435 is reached.

1 In step S435, the sub-processor control section 171 sends the decoded audio data. More specifically, the audio decoding process requested sub-processor supplies the sub-processor control section 171 with the audio data having undergone the decoding process. In turn, the sub-processor control section 171 creates an end notification software cell. In the cell, the DMA command area is set with a status return command notifying that execution of the function program has ended; the sender ID area and responder ID area are both set with the sender/receiver ID of the apparatus hosting this section 171; the destination ID area is set with the sender/receiver ID of the master apparatus; and the data area is set with the decoded audio data. The sub-processor control section 171 sends the end notification software cell thus created onto the network 13 through the network input/output driver 131.

If in step S434 the decoding of the audio data is not found to be completed, then step S435 is skipped and step S436 is reached.

In step S436, the apparatus information management section 153 checks to determine whether any change has occurred in apparatus status. The apparatus information management section 153 may detect a change in the status of the slave apparatus C illustratively as a result of the video or audio decoding process getting started or having ended. If such a change in apparatus status is detected in step S436, then step S437 is reached.

In step S437, the apparatus information management section 153 updates its own apparatus information kept in the main memory 22 in response to the change in the status of the slave apparatus C. The apparatus information management section 153 proceeds to notify the information exchange section 151 that the apparatus information about the apparatus hosting this section 153 has been updated.

In step S438, as in step S43 of Fig. 11, the master apparatus is notified of the apparatus information through the use of an apparatus information notification software cell sent to that apparatus. In the cell, the destination ID area is set with the sender/receiver ID of the master apparatus. Thereafter step S421 is reached again and the subsequent steps are repeated.

If no change is detected in the information status in step S438, then step S421 is reached again and the subsequent steps are repeated.

Described below in reference to the flowcharts of Figs. 35 and 36 is a function program executing process performed by the information processing apparatus 11 serving as the slave apparatus D in conjunction with the sequencing process executing process carried out by the master apparatus as shown in Figs. 24 through 27.

In step S461, the sub-processor control section 171 checks to determine whether a program execution software cell is received. If the sub-processor control section 171 determines that the program execution software cell sent by the master apparatus in step S261 of Fig. 26 is received over the network 13 and through the network input/output driver 131, then step S462 is reached.

In step S462, the sub-processor control section 171 stores the received program execution software cell into the main memory 22-4.

If in step S461 no program execution software cell is found to be received, then step S462 is skipped and step S463 is reached.

In step S463, the sub-processor control section 171 checks to determine whether there is any video data yet to be processed. More specifically, the sub-processor control section 171 determines that there exists unprocessed video data upon detecting a program execution software cell for which the image quality enhancing process has yet to be performed among the program execution software cells stored in the main memory 22. If any such unprocessed video data is detected in step S463, then step S464 is reached.

In step S464, the sub-processor control section 171 selects one of the program execution software cells for which the image quality enhancing process has yet to be performed (e.g., the program execution software cell received from the master apparatus at the earliest time).

In step S465, the sub-processor control section 171 checks to determine whether the sub-processor 32 designated by the program execution software cell (i.e., image quality enhancing process requested sub-processor) is carrying out the image quality enhancing process. If the image quality enhancing process requested sub-processor is not found executing the image quality enhancing process, then step S466 is reached.

In step S466, the sub-processor control section 171 gets the image quality enhancing process started. More specifically, the sub-processor control section 171 supplies the image quality enhancing process requested sub-processor with the video data contained in the program execution software cell and with various parameters needed to perform the image quality enhancing process. Under control of the sub-processor control section 271, the image quality enhancing process requested sub-processor starts executing the image quality enhancing program loaded in step S402 of Fig. 32. The program getting started initiates the image quality enhancing process on the video data.

If in step S465 the image quality enhancing process requested sub-processor is found to be currently executing the image quality enhancing process, then step S466 is skipped and step S467 is reached.

If in step S463 unprocessed video data is found to be absent, then steps S464 through S466 are skipped and step S467 is reached.

In step S467, the progress status notification section 172 notifies the master apparatus of the progress status of the ongoing process as needed. More specifically, the image quality enhancing process requested sub-processor may supply the sub-processor control section 171 with data indicative of the status of the image quality enhancing process in progress illustratively at predetermined intervals. In turn, the sub-processor control section 171 feeds the progress status thus acquired to the progress status notification section 172.

The progress status notification section 172 creates a progress status notification software cell. In the cell, the DMA command area is set with a status return command giving notification of the progress status of the process; the sender ID area and responder ID area are both set with the sender/receiver ID of the apparatus hosting this section 172; and the destination ID area is set with the sender/receiver ID of the master apparatus. Also in the cell, the data area is set illustratively with data in percentage points ranging from zero at which the image quality enhancing process is started, to 100 at which the process is completed. The progress status notification section 172 sends the progress status notification software cell thus created onto the network 13 through the network input/output driver 131.

In step S468, the image quality enhancing process requested sub-processor checks to determine whether the image quality enhancing process on the video data is completed. If the process is found to have ended, then step S469 is reached.

In step S469, the sub-processor control section 171 sends the video data having undergone the image quality enhancing process. More specifically, the image quality enhancing process requested sub-processor supplies the sub-processor control section 171 with the video data with its image quality enhanced. In turn, the sub-processor control section 171 creates an end notification software cell. In the cell, the DMA command area is set with a status return command notifying that execution of the function program has ended; the sender ID area and responder ID area are both set with the sender/receiver ID of the apparatus hosting this section 171; the destination ID area is set with the sender/receiver ID of the master apparatus; and the data area is set with the video data enhanced in image quality. The sub-processor control section 171 sends the end notification software cell thus created onto the network 13 through the network input/output driver 131.

If in step S468 the image quality enhancement of the video data is not found to be completed, then step S469 is skipped and step S470 is reached.

In step S470, the apparatus information management section 153 checks to determine whether any change has occurred in apparatus status. The apparatus information management section 153 may detect a change in the status of the slave apparatus D illustratively as a result of the image quality enhancing process getting started or having ended. If such a change in apparatus status is detected in step S470, then step S471 is reached.

In step S471, the apparatus information management section 153 updates its own apparatus information kept in the main memory 22 in response to the change in the status of the slave apparatus D. The apparatus information management section 153 proceeds to notify the information exchange section 151 that the apparatus information about the apparatus hosting this section 153 has been updated.

In step S472, as in step S43 of Fig. 11, the master apparatus is notified of the apparatus information through the use of an apparatus information notification software cell sent to that apparatus. In the cell, the destination ID area is set with the sender/receiver ID of the master apparatus. Thereafter step S421 is reached again and the steps subsequent to step S461 are repeated.

If no change is detected in the information status in step S470, then step S461 is reached again and the subsequent steps are repeated.

In the foregoing description, the master apparatus was shown to request the slave apparatuses A through D to perform all processes. Alternatively, after completing the video decoding process, a slave apparatus such as the slave apparatus C may send the decoded video data directly to the slave apparatus B or D and request the latter to carry out the image quality enhancing process on the decoded video data.

According to the present invention, as described above, there is provided an information processing system constituted by either at least one first information processing apparatus or at least one second information processing apparatus and by a third information processing apparatus, the first information processing apparatus having at least one first processor for executing a predetermined first process, the second information processing apparatus having at least one second processor for executing general-purpose processing, either the first or the second information processing apparatus being interconnected with the third information processing apparatus over a network in such a manner as to effect distributed processing. In operation, the first information processing apparatus notifies the third information processing apparatus of first apparatus information including information indicative of the first process executed by the first processor and information representative of the performance of the first information processing apparatus. The first information processing apparatus also has the first processor execute the first process based on first process request information which is sent by the third information processing apparatus and which requests execution of the first process. The second information processing apparatus notifies the third information processing apparatus of second apparatus information including information indicating that the second information processing apparatus executes general-purpose processing and information indicative of the performance of the second information processing apparatus. The second information processing apparatus also has the second processor execute a second process based on second process request information which is sent by the third information processing apparatus and which requests execution of the second process different from the first process. The third information processing apparatus creates apparatus management information including either the first apparatus information or the second apparatus information that has been notified. The third information processing apparatus also determines the first information processing apparatus as a party requested to execute the first process and determines the second information processing apparatus as a party requested to execute the second process. The third information processing apparatus further requests the first information processing apparatus to execute the first process by sending thereto the first process request information and requests the second information processing apparatus to execute the second process by sending thereto the second process request information. Where the information processing system of the present invention is in use, a plurality of information processing apparatuses connected to the network are arranged to execute distributed processing. In a distributed processing setup, processes are carried out in a manner adapted to the performance of individual information processing apparatuses, whereby the throughput of the configured apparatuses is enhanced.

Also according to the present invention, as described above, there is provided an information processing apparatus connected over a network to either at least one first information processing terminal or at least one second information processing terminal, the first information processing terminal having at least one first processor for executing a predetermined first process, the second information processing terminal having at least one second processor for executing general-purpose processing. In operation, apparatus management information including first apparatus information and second apparatus information is created, the first apparatus information including information which is sent by the first information processing terminal and which indicates the first process executed by the first processor and information representative of the performance of the first information processing terminal, the second apparatus information including information which is sent by the second information processing terminal and which indicates that the second information processing terminal performs general-purpose processing and information representative of the performance of the second information processing terminal. The first information processing terminal is determined as a party requested to execute the first process while the second information processing terminal is determined as a party requested to execute a second process different from the first process in accordance with the apparatus management information. The first information processing terminal is requested to execute the first process by sending thereto first process request information while the second information processing terminal is requested to execute the second process by sending thereto second process request information. Where this information processing apparatus of the invention is in use, a plurality of information processing apparatuses connected to the network are also arranged to execute distributed processing. In a distributed processing setup, processes are carried out in a manner adapted to the performance of individual information processing apparatuses, whereby the throughput of the configured apparatuses is enhanced.

Also according to the present invention, as described above, there is provided an information processing apparatus which has at least one first processor for executing a predetermined first process and which is interconnected over a network with a first and a second information processing terminal, the first information processing terminal having at least one second processor for executing general-purpose processing, the second information processing terminal requesting the first information processing terminal to execute a second process different from the first process. In operation, the second information processing terminal is notified of apparatus information including information indicative of the first process executed by the first processor and information representative of the performance of the information processing apparatus. The first processor is caused to execute the first process based on process request information which is sent by the second information processing terminal and which requests execution of the first process. Where this information processing apparatus of the invention is in use, a plurality of information processing apparatuses connected to the network are also arranged to execute distributed processing. In a distributed processing setup, processes are carried out in a manner adapted to the performance of individual information processing apparatuses, whereby the throughput of the configured apparatuses is enhanced.

Also according to the present invention, as described above, there is provided an information processing apparatus has at least one first processor for executing general-purpose processing and is interconnected over a network with a first and a second information processing terminal, the first information processing terminal having at least one second processor for executing a predetermined first process, the second information processing terminal requesting the first information processing terminal to execute the first process. In operation, the second information processing terminal is notified of apparatus information including information indicating that the information processing apparatus executes general-purpose processing and information representative of the performance of the information processing apparatus. The first processor is caused to execute a second process different from the first process in accordance with process request information which is sent by the second information processing terminal and which requests execution of the second process. Where this information processing apparatus of the invention is in use, a plurality of information processing apparatuses connected to the network are also arranged to execute distributed processing. In a distributed processing setup, processes are carried out in a manner adapted to the performance of individual information processing apparatuses, whereby the throughput of the configured apparatuses is enhanced.

The series of steps and processes described above may be executed either by hardware or by software.

In this description, the steps which describe the programs stored on the program storage medium represent not only the processes that are to be carried out in the depicted sequence (i.e., on a time series basis) but also processes that may be performed parallelly or individually and not chronologically.

In this description, the term "system" refers to an entire configuration made up of a plurality of apparatuses, devices, and/or means.

## Claims

1. An information processing system comprising either at least one first information processing apparatus or at least one second information processing apparatus and a third information processing apparatus, said first information processing apparatus having at least one first processor for executing a predetermined first process, said second information processing apparatus having at least one second processor for executing general-purpose processing, either said first or said second information processing apparatus being interconnected with said third information processing apparatus over a network in such a manner as to effect distributed processing;
wherein said first information processing apparatus includes:
first apparatus information notification means for notifying said third information processing apparatus of first apparatus information including information indicative of said first process executed by said first processor and information representative of the performance of said first information processing apparatus; and
first processor control means for having said first processor execute said first process based on first process request information which is sent by said third information processing apparatus and which requests execution of said first process;
wherein said second information processing apparatus includes:
second apparatus information notification means for notifying said third information processing apparatus of second apparatus information including information indicating that said second information processing apparatus executes general-purpose processing and information indicative of the performance of said second information processing apparatus; and
second processor control means for having said second processor execute a second process based on second process request information which is sent by said third information processing apparatus and which requests execution of said second process different from said first process; and
wherein said third information processing apparatus includes:
apparatus management information creation means for creating apparatus management information including either said first apparatus information or said second apparatus information that has been notified;
requested party determination means for determining said first information processing apparatus as a party requested to execute said first process while determining said second information processing apparatus as a party requested to execute said second process in accordance with said apparatus management information; and
process request means for requesting said first information processing apparatus to execute said first process by sending thereto said first process request information while requesting said second information processing apparatus to execute said second process by sending thereto said second process request information.

2. The information processing system according to claim 1, wherein said first information processing apparatus further includes storage means for storing function programs of which the execution is ordered by a predetermined execution command and which execute said first process;
wherein said first apparatus information notification means notifies said third information processing apparatus of said first apparatus information including said execution command;
wherein said process request means requests said first information processing apparatus to execute said first process by sending thereto said first process request information including said execution command; and
wherein said first processor control means causes said first processor to execute said first process by carrying out said function programs of which the execution is ordered by said execution command included in said first process request information.

3. The information processing system according to claim 1, wherein said process request means sends function programs for executing said second process to said second information processing apparatus, and requests said second information processing apparatus to execute said second process by sending thereto said second process request information requesting execution of said function programs; and
wherein said second processor control means causes said second processor to load the received function programs and to execute said second process by performing said function programs based on said second process request information.

4. The information processing system according to claim 1, wherein said first information processing apparatus further includes first progress status notification means for sending to said third information processing apparatus first progress status information notifying progress status of said first process being executed by said first processor;
wherein said second information processing apparatus further includes second progress status notification means for sending to said third information processing apparatus second progress status information notifying progress status of said second process being executed by said second processor; and
wherein said third information processing apparatus further includes progress status notification means for notifying a user of the progress status of either said first process or said second process based on either said first or said second progress status information that has been received.

5. An information processing method for use with an information processing system constituted by either at least one first information processing apparatus or at least one second information processing apparatus and by a third information processing apparatus, said first information processing apparatus having at least one first processor for executing a predetermined first process, said second information processing apparatus having at least one second processor for executing general-purpose processing, either said first or said second information processing apparatus being interconnected with said third information processing apparatus over a network in such a manner as to effect distributed processing, said information processing method comprising the steps of:
causing said first information processing apparatus to notify said third information processing apparatus of first apparatus information including information indicative of said first process executed by said first processor and information representative of the performance of said first information processing apparatus;
causing said first information processing apparatus to have said first processor execute said first process based on first process request information which is sent by said third information processing apparatus and which requests execution of said first process;
causing said second information processing apparatus to notify said third information processing apparatus of second apparatus information including information indicating that said second information processing apparatus executes general-purpose processing and information indicative of the performance of said second information processing apparatus;
causing said second information processing apparatus to have said second processor execute a second process based on second process request information which is sent by said third information processing apparatus and which requests execution of said second process different from said first process;
causing said third information processing apparatus to create apparatus management information including either said first apparatus information or said second apparatus information that has been notified;
causing said third information processing apparatus to determine said first information processing apparatus as a party requested to execute said first process and to determine said second information processing apparatus as a party requested to execute said second process; and
causing said third information processing apparatus to request said first information processing apparatus to execute said first process by sending thereto said first process request information and to request said second information processing apparatus to execute said second process by sending thereto said second process request information.

6. An information processing apparatus connected over a network to either at least one first information processing terminal or at least one second information processing terminal, said first information processing terminal having at least one first processor for executing a predetermined first process, said second information processing terminal having at least one second processor for executing general-purpose processing, said information processing apparatus comprising:
apparatus management information creation means for creating apparatus management information including first apparatus information and second apparatus information, said first apparatus information including information which is sent by said first information processing terminal and which indicates said first process executed by said first processor and information representative of the performance of said first information processing terminal, said second apparatus information including information which is sent by said second information processing terminal and which indicates that said second information processing terminal performs general-purpose processing and information representative of the performance of said second information processing terminal;
requested party determination means for determining said first information processing terminal as a party requested to execute said first process while determining said second information processing terminal as a party requested to execute a second process different from said first process in accordance with said apparatus management information; and
process request means for requesting said first information processing terminal to execute said first process by sending thereto first process request information while requesting said second information processing terminal to execute said second process by sending thereto second process request information.

7. The information processing apparatus according to claim 6, wherein said first apparatus information includes an execution command to order execution of function programs for performing said first process; and
wherein said process request means requests said first information processing terminal to execute said first process by sending thereto said first process request information including said execution command.

8. The information processing apparatus according to claim 6, wherein said process request means sends function programs for performing said second process to said second information processing terminal, and requests said second information processing terminal to execute said second process by sending thereto said second process request information requesting execution of said function programs.

9. The information processing apparatus according to claim 6, further comprising progress status notification means for notifying a user of progress status of either said first or said second process either in accordance with first progress status information which is sent by said first information processing terminal and which notifies the progress status of said first process being executed by said first processor or in keeping with second progress status information which is sent by said second information processing terminal and which notifies the progress status of said second process being executed by said second processor.

10. An information processing method for use with an information processing apparatus connected over a network to either at least one first information processing terminal or at least one second information processing terminal, said first information processing terminal having at least one first processor for executing a predetermined first process, said second information processing terminal having at least one second processor for executing general-purpose processing, said information processing method comprising the steps of:
creating apparatus management information including first apparatus information and second apparatus information, said first apparatus information including information which is sent by said first information processing terminal and which indicates said first process executed by said first processor and information representative of the performance of said first information processing terminal, said second apparatus information including information which is sent by said second information processing terminal and which indicates that said second information processing terminal performs general-purpose processing and information representative of the performance of said second information processing terminal;
determining said first information processing terminal as a party requested to execute said first process while determining said second information processing terminal as a party requested to execute a second process different from said first process in accordance with said apparatus management information; and
requesting said first information processing terminal to execute said first process by sending thereto first process request information while requesting said second information processing terminal to execute said second process by sending thereto second process request information.

11. A recording medium having a program recorded thereon in a manner readable by a computer for information processing of an information processing apparatus connected over a network to either at least one first information processing terminal or at least one second information processing terminal, said first information processing terminal having at least one first processor for executing a predetermined first process, said second information processing terminal having at least one second processor for executing general-purpose processing, said program comprising the steps of:
creating apparatus management information including first apparatus information and second apparatus information, said first apparatus information including information which is sent by said first information processing terminal and which indicates said first process executed by said first processor and information representative of the performance of said first information processing terminal, said second apparatus information including information which is sent by said second information processing terminal and which indicates that said second information processing terminal performs general-purpose processing and information representative of the performance of said second information processing terminal;
determining said first information processing terminal as a party requested to execute said first process while determining said second information processing terminal as a party requested to execute a second process different from said first process in accordance with said apparatus management information; and
requesting said first information processing terminal to execute said first process by sending thereto first process request information while requesting said second information processing terminal to execute said second process by sending thereto second process request information.

12. A program for causing a computer of an information processing apparatus to carry out information processing, said information processing apparatus being connected over a network to either at least one first information processing terminal or at least one second information processing terminal, said first information processing terminal having at least one first processor for executing a predetermined first process, said second information processing terminal having at least one second processor for executing general-purpose processing, said program comprising the steps of:
creating apparatus management information including first apparatus information and second apparatus information, said first apparatus information including information which is sent by said first information processing terminal and which indicates said first process executed by said first processor and information representative of the performance of said first information processing terminal, said second apparatus information including information which is sent by said second information processing terminal and which indicates that said second information processing terminal performs general-purpose processing and information representative of the performance of said second information processing terminal;
determining said first information processing terminal as a party requested to execute said first process while determining said second information processing terminal as a party requested to execute a second process different from said first process in accordance with said apparatus management information; and
requesting said first information processing terminal to execute said first process by sending thereto first process request information while requesting said second information processing terminal to execute said second process by sending thereto second process request information.

13. An information processing apparatus which has at least one first processor for executing a predetermined first process and which is interconnected over a network with a first and a second information processing terminal, said first information processing terminal having at least one second processor for executing general-purpose processing, said second information processing terminal requesting said first information processing terminal to execute a second process different from said first process, said information processing apparatus comprising:
apparatus information notification means for notifying said second information processing terminal of apparatus information including information indicative of said first process executed by said first processor and information representative of the performance of said information processing apparatus; and
processor control means for causing said first processor to execute said first process based on process request information which is sent by said second information processing terminal and which requests execution of said first process.

14. The information processing apparatus according to claim 13, further comprising storage means for storing function programs of which the execution is ordered by a predetermined execution command and which execute said first process;
wherein said apparatus information notification means notifies said second information processing terminal of said apparatus information including said execution command; and
wherein said processor control means causes said first processor to execute said first process by carrying out said function programs of which the execution is ordered by said execution command included in said process request information.

15. The information processing apparatus according to claim 13, further comprising progress status notification means for sending to said second information processing terminal progress status information notifying progress status of said first process being executed by said first processor.

16. An information processing method for use with an information processing apparatus which has at least one first processor for executing a predetermined first process and which is interconnected over a network with a first and a second information processing terminal, said first information processing terminal having at least one second processor for executing general-purpose processing, said second information processing terminal requesting said first information processing terminal to execute a second process different from said first process, said information processing method comprising the steps of:
notifying said second information processing terminal of apparatus information including information indicative of said first process executed by said first processor and information representative of the performance of said information processing apparatus; and
causing said first processor to execute said first process based on process request information which is sent by said second information processing terminal and which requests execution of said first process.

17. A recording medium having a program recorded thereon in a manner readable by a computer for information processing of an information processing apparatus which has at least one first processor for executing a predetermined first process and which is interconnected over a network with a first and a second information processing terminal, said first information processing terminal having at least one second processor for executing general-purpose processing, said second information processing terminal requesting said first information processing terminal to execute a second process different from said first process, said program comprising the steps of:
notifying said second information processing terminal of apparatus information including information indicative of said first process executed by said first processor and information representative of the performance of said information processing apparatus; and
causing said first processor to execute said first process based on process request information which is sent by said second information processing terminal and which requests execution of said first process.

18. A program for causing a computer of an information processing apparatus to carry out information processing, said information processing apparatus having at least one first processor for executing a predetermined first process and interconnected over a network with a first and a second information processing terminal, said first information processing terminal having at least one second processor for executing general-purpose processing, said second information processing terminal requesting said first information processing terminal to execute a second process different from said first process, said program comprising the steps of:
notifying said second information processing terminal of apparatus information including information indicative of said first process executed by said first processor and information representative of the performance of said information processing apparatus; and
causing said first processor to execute said first process based on process request information which is sent by said second information processing terminal and which requests execution of said first process.

19. An information processing apparatus which has at least one first processor for executing general-purpose processing and which is interconnected over a network with a first and a second information processing terminal, said first information processing terminal having at least one second processor for executing a predetermined first process, said second information processing terminal requesting said first information processing terminal to execute said first process, said information processing apparatus comprising:
apparatus information notification means for notifying said second information processing terminal of apparatus information including information indicating that said information processing apparatus executes general-purpose processing and information representative of the performance of said information processing apparatus; and
processor control means for causing said first processor to execute a second process different from said first process in accordance with process request information which is sent by said second information processing terminal and which requests execution of said second process.

20. The information processing apparatus according to claim 19, wherein said processor control means causes said first processor to load function programs which are sent by said second information processing terminal and which execute said second process, and to execute said second process by carrying out said function programs based on said process request information requesting execution of said function programs.

21. The information processing apparatus according to claim 19, further comprising progress status notification means for sending to said information processing terminal progress status information notifying progress status of said first process being executed by said first processor.

22. An information processing method for use with an information processing apparatus which has at least one first processor for executing general-purpose processing and which is interconnected over a network with a first and a second information processing terminal, said first information processing terminal having at least one second processor for executing a predetermined first process, said second information processing terminal requesting said first information processing terminal to execute said first process, said information processing method comprising the steps of:
notifying said second information processing terminal of apparatus information including information indicating that said information processing apparatus executes general-purpose processing and information representative of the performance of said information processing apparatus; and
causing said first processor to execute a second process different from said first process in accordance with process request information which is sent by said second information processing terminal and which requests execution of said second process.

23. A recording medium having a program recorded thereon in a manner readable by a computer for information processing of an information processing apparatus which has at least one first processor for executing general-purpose processing and which is interconnected over a network with a first and a second information processing terminal, said first information processing terminal having at least one second processor for executing a predetermined first process, said second information processing terminal requesting said first information processing terminal to execute said first process, said program comprising the steps of:
notifying said second information processing terminal of apparatus information including information indicating that said information processing apparatus executes general-purpose processing and information representative of the performance of said information processing apparatus; and
causing said first processor to execute a second process different from said first process in accordance with process request information which is sent by said second information processing terminal and which requests execution of said second process.

24. A program for causing a computer of an information processing apparatus to carry out information processing, said information processing apparatus having at least one first processor for executing general-purpose processing and interconnected over a network with a first and a second information processing terminal, said first information processing terminal having at least one second processor for executing a predetermined first process, said second information processing terminal requesting said first information processing terminal to execute said first process, said program comprising the steps of:
notifying said second information processing terminal of apparatus information including information indicating that said information processing apparatus executes general-purpose processing and information representative of the performance of said information processing apparatus; and
causing said first processor to execute a second process different from said first process in accordance with process request information which is sent by said second information processing terminal and which requests execution of said second process different from said first process.
